(19) Europäisches Patentamt
European Patent Office
Office européen des brevets

(11) EP 3 584 338 A1

(12) **EUROPEAN PATENT APPLICATION**
published in accordance with Art. 153(4) EPC

(43) Date of publication:
25.12.2019 Bulletin 2019/52

(51) Int Cl.:
C22C 38/00 (2006.01)   B21D 22/20 (2006.01)
C22C 38/60 (2006.01)   C21D 1/18 (2006.01)
C21D 9/00 (2006.01)    C21D 9/46 (2006.01)

(21) Application number: 18753936.6

(22) Date of filing: 20.02.2018

(86) International application number:
PCT/JP2018/006087

(87) International publication number:
WO 2018/151333 (23.08.2018 Gazette 2018/34)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 20.02.2017 JP 2017029317

(71) Applicant: Nippon Steel Corporation
Tokyo 100-8071 (JP)

(72) Inventors:
• TODA, Yuri
Tokyo 100-8071 (JP)
• ABUKAWA, Genki
Tokyo 100-8071 (JP)
• MAEDA, Daisuke
Tokyo
1008071 (JP)
• HIKIDA, Kazuo
Tokyo 100-8071 (JP)

(74) Representative: Vossius & Partner
Patentanwälte Rechtsanwälte mbB
Siebertstrasse 3
81675 München (DE)

(54) **HOT STAMP MOULDED BODY**

(57) The present invention provides a hot stamped body excellent in bendability, ductility, impact resistance, and hydrogen embrittlement resistance and small in scattering in hardness. The hot stamped body according to the present invention is provided with a middle part in sheet thickness and a softened layer arranged at both sides or one side of the middle part in sheet thickness. The middle part in sheet thickness has a hardness of 500Hv to 800Hv and has metal structures from a depth of 20 $\mu$m below the surface of the softened layer to a depth of 1/2 of the thickness of the softened layer with an area rate of a total of crystal grains with a maximum crystal orientation difference inside the crystal grains of 1° or less and crystal grains with a maximum crystal orientation difference inside the crystal grains of 8° or more and 15° or less of 20% or more and less than 50%, when a region surrounded by grain boundaries having an orientation difference of 15° or more in a cross-section parallel to the sheet thickness direction is defined as a "crystal grain".

EP 3 584 338 A1

**Description**

FIELD

The present invention relates to a hot stamped body used for structural members or reinforcing members of automobiles or structures where strength is required, in particular a hot stamped body excellent in strength, ductility, impact resistance, and hydrogen embrittlement resistance after hot stamping.

BACKGROUND

In recent years, from the viewpoints of environmental protection and resource saving, lighter weight of automobile bodies is being sought. For this reason, application of high strength steel sheet to automobile members has been accelerating. However, along with the increase in strength of steel sheets, the formability deteriorates, and therefore in high strength steel sheets, formability into members with complicated shapes is a problem.

To solve this problem, hot stamping, where the steel sheet is heated to a high temperature of the austenite region, then is press-formed, is increasingly being applied. Since hot stamping performs press-forming and simultaneously quenching in the die, it is possible to obtain a strength corresponding to the C amount of the steel sheet. This is being taken note of as a technique achieving both formation of a material into an automobile member and securing strength.

However, since in conventional hot pressed parts which were produced by press hardening, the entire sheet thickness is formed by hard structures (mainly martensite), if bending deformation occurs at the time of collision of the automobile, the largest strain will be applied to the bent portion of the part, cracks will advance starting from the vicinity of the surface layer of the steel sheet, and finally fracture will easily be caused.

Further, in a hot stamped body, the way of contact with the die is not necessarily uniform. For example, at the vertical wall parts of a hat-shaped member etc., the cooling rate easily falls. For this reason, when the hardenability of the steel sheet is low etc., steel sheet is sometimes locally formed with regions with low hardnesses. Deformation concentrates in a local soft part at the time of collision and becomes a cause of cracking, so a small scattering in hardness of the body, that is, securing stable strength, is important in securing impact resistance. Furthermore, if bending deformation occurs at the time of collision of an automobile, a hat-shaped member will buckle and thereby deformation will become localized and the load resistance of the member will fall. That is, the maximum load of a member is affected not only by the strength of the member, but also the ease of buckling. In the state of a member, if the ductility of the steel sheet is high, it becomes harder for localization of the deformation region to occur. That is, the sheet becomes resistant to buckling.

Therefore, in a hot stamped part as well, ductility is important, but in general the ductility of martensite is low. Further, the density of lattice defects of the surface layer of the steel sheet is high, so there is the problem that penetration by hydrogen is promoted and the member becomes poor in hydrogen embrittlement resistance. Due to such reasons, hot stamped parts produced by press hardening have been limited in locations of use in auto parts.

To deal with this problem, art has been proposed for raising the deformability of hot pressed parts to suppress cracking. PTL 1 discloses making the hardness of the middle in sheet thickness of a hot pressed part 400Hv or more and forming a softened layer with a thickness of 20 $\mu$m to 200 $\mu$m and a hardness of 300Hv or less on a surface layer so as to secure a strength of a tensile strength of 1300 MPa or more while suppressing cracking at the time of automobile collision. PTL 2 discloses controlling the concentration of carbon at a surface layer in sheet thickness to 1/5 or less of the concentration of carbon of the middle part in sheet thickness so as to reduce the density of lattice defects of the surface layer and improve the hydrogen embrittlement resistance. PTL 3 discloses to make the middle part in sheet thickness a dual phase structure of ferrite and martensite and raise the structural fraction of ferrite of a surface layer portion so as to ease the stress even if the surface layer part receives severe bending deformation.

However, in the members described in PTL 1 and PTL 2, by making a surface layer portion in sheet thickness by soft structures and making a middle part in sheet thickness by hard structures, a sharp gradient in hardness ends up being formed in the sheet thickness direction. For this reason, when subjected to bending deformation, there is the issue that cracking easily occurs near the boundary between the soft structures and hard structures where this sharp gradient of hardness occurs. Further, in PTL 3, a surface layer portion in sheet thickness is made by soft structures and the middle part in sheet thickness is made by a dual phase structure of hard structures and soft structures so as to reduce the sharp gradient in hardness in the sheet thickness direction. However, since making the middle part in sheet thickness a dual phase structure, the upper limit of tensile strength ends up becoming 1300 MPa or so. It is difficult to secure the tensile strength of 1500 MPa or more sought for hot pressed parts.

[CITATION LIST]

[PATENT LITERATURE]

[PTL 1] Japanese Unexamined Patent Publication No. 2015-30890
[PTL 2] Japanese Unexamined Patent Publication No. 2006-104546
[PTL 3] WO 2015/097882

SUMMARY

[TECHNICAL PROBLEM]

The present invention, in consideration of the technical issues in the prior art, has as its technical problem to obtain a strength of a tensile strength of 1500 MPa or more and achieve both a high bendability for realizing impact resistance and hydrogen embrittlement resistance and keep down the scattering in hardness and has as its object the provision of a hot stamped body solving this technical problem. Further, the present invention has as its object the provision of a hot stamped body achieving both high ductility and high hydrogen embrittlement resistance.

[SOLUTION TO PROBLEM]

The inventors engaged in an in-depth study of a method for solving the above technical issues. As a result, to improve the hydrogen embrittlement resistance, it is effective to reduce the density of lattice defects at the surface layer in sheet thickness. For this reason, it is necessary to form soft structures at the surface layer. On the other hand, to secure a 1500 MPa or more tensile strength, it is necessary to form the middle part in sheet thickness by only hard structures. In this way, the inventors thought that if forming the surface layer in sheet thickness by soft structures and forming the middle part in sheet thickness by hard structures, if it were possible to reduce the sharp gradient of hardness in the sheet thickness direction occurring near the boundary of the hard structures and soft structures, a strength of a tensile strength of 1500 MPa or more and excellent hydrogen embrittlement resistance could be secured while excellent bendability could be obtained.

Therefore, the inventors investigated and engaged in intensive studies on metal structures of steel sheets where good bendability was obtained by controlling the structures of a surface layer of soft structures. As a result, it was discovered that the metal structures forming the softened layer should be comprised of crystal grains with a maximum crystal orientation difference inside the crystal grains of 1° or less and crystal grains with a maximum crystal orientation difference inside the crystal grains of 8° to 15° when a region surrounded by grain boundaries having an orientation difference of 15° or more in the sheet thickness cross-section is defined as a "crystal grain". Further, it was discovered that these measurements should be performed in the region from a position of a depth of 20 μm below the surface of the surface layer to a position of a depth of 1/2 of the thickness of the surface layer (center of surface layer). It was discovered that the effects of the surface properties of the hot stamped body and the effects of the transitional part from the middle part in sheet thickness to the surface layer can be eliminated by this.

Further, by controlling the amounts of addition of Mn and Si at the middle part in sheet thickness, the inventors raised the ductility and raised the hardenability to stably secure high strength. As a result, it is possible to keep down the occurrence of cracking at the time of bending deformation. The inventors succeeded in securing a 1500 MPa or more tensile strength and good hydrogen embrittlement resistance while realizing excellent bendability and ductility and keeping down the scattering in hardness and were able to obtain a hot stamped body excellent in impact resistance and hydrogen embrittlement resistance.

The present invention was completed based on the above discovery and has as its gist the following:

(1) A hot stamped body comprising a middle part in sheet thickness and a softened layer arranged at both sides or one side of the middle part in sheet thickness, wherein
the middle part in sheet thickness comprises, by mass%,
C: 0.20% or more and less than 0.70%,
Si: less than 3.00%,
Mn: 0.20% or more and less than 3.00%,
P: 0.10% or less,
S: 0.10% or less,
sol. Al: 0.0002% or more and 3.0000% or less,

N: 0.01% or less, and

a balance of Fe and unavoidable impurities, and has a hardness of 500Hv or more and 800Hv or less,

in the metal structures from a depth of 20 μm below the surface of the softened layer to a depth of 1/2 of the thickness of the softened layer, when defining a region surrounded by grain boundaries having a 15° or higher orientation difference in a cross-section parallel to the sheet thickness direction as a "crystal grain", the area rate of the total of crystal grains with a maximum crystal orientation difference inside the crystal grains of 1° or less and crystal grains with a maximum crystal orientation difference inside the crystal grains of 8° or more and 15° or less is 20% or more and less than 50%.

(2) The hot stamped body according to (1), wherein the Si content is 0.50% or less and the Mn content is 0.20% or more and less than 1.50%.

(3) The hot stamped body according to (1), wherein the Si content is 0.50% or less and the Mn content is 1.50% or more and less than 3.00%.

(4) The hot stamped body according to (1), wherein the Si content is more than 0.50% to less than 3.00%, the Mn content is 0.20% or more and less than 1.50%, and the middle part in sheet thickness comprises, by area percent, 1.0% or more and less than 5.0% of residual austenite.

(5) The hot stamped body according to (1), wherein the Si content is more than 0.50% and less than 3.00%, the Mn content is 1.50% or more and less than 3.0%, and the middle part in sheet thickness comprises, by area percent, 1.0% or more and less than 5.0% of residual austenite.

(6) The hot stamped body according to any one of (1) to (5), where the middle part in sheet thickness further comprises, by mass%, Ni: 0.01% or more and 3.00% or less.

(7) The hot stamped body according to any one of (1) to (6), where the middle part in sheet thickness further comprises, by mass%, one or more of Nb: 0.010% or more and 0.150% or less, Ti: 0.010% or more and 0.150% or less, Mo: 0.005% or more and 1.000% or less, and B: 0.0005% or more and 0.0100% or less.

(8) The hot stamped body according to any one of (1) to (7), where a plated layer is formed on the softened layer.

[ADVANTAGEOUS EFFECTS OF INVENTION]

According to the present invention, it is possible to provide a hot stamped body excellent in bendability, ductility, impact resistance, and hydrogen embrittlement resistance and with small scattering in hardness.

BRIEF DESCRIPTION OF DRAWINGS

FIG. 1 is a schematic view for explaining the diffusion of C atoms when producing a hot stamped body of the present invention.

FIG. 2 is a graph showing the change in dislocation density after a rolling pass relating to rough rolling used in the method for producing the hot stamped body of the present invention.

DESCRIPTION OF EMBODIMENTS

(Structure of Hot Stamped Body According to Present Invention)

The hot stamped body according to the present invention is a structure with a softened layer arranged on the surface at both sides or one side. The softened layer has a region having a hardness 10Hv or more lower than the hardness of the middle part in sheet thickness.

(Middle Part in Sheet Thickness)

The middle part in sheet thickness of the hot stamped body according to the present invention must have a hardness of 500Hv to 800Hv. The reasons for limiting the composition of constituents at the middle part in sheet thickness to make the hardness of the middle part in sheet thickness the above-mentioned range are explained below. Below, the % relating to the component of constituents means mass%.

(C: 0.20% or more and less than 0.70%)

C is an important element for obtaining a 500Hv to 800Hv hardness at the middle part in sheet thickness. With less than 0.20%, it is difficult to secure 500Hv or more at the middle part in sheet thickness, and therefore C is 0.20% or more. Preferably it is 0.30% or more. On the other hand, with more than 0.70%, the hardness of the middle part in sheet thickness exceeds 800Hv and the bendability falls, and therefore C is 0.70% or less. Preferably, it is 0.50% or less.

(Si: less than 3.00%)

Si is an element contributing to improvement of strength by solution strengthening, so may be added up to 0.50% as an upper limit from the viewpoint of improvement of strength. On the other hand, even if added in more than 0.50%, the effect of improvement of strength becomes saturated, and therefore 0.50% is the upper limit. Preferably it is 0.30% or less.

Si further is an element having the effect of raising the ductility without impairing the hydrogen embrittlement resistance and bendability manifested by control of the structures of the surface layer. In particular, if bending deformation occurs at the time of collision of an automobile, buckling of a hat-shaped member causes the deformation to become localized and the load resistance of the member to drop. That is, the maximum load of the member is affected by not only the strength of the member, but also the ease of buckling. In the state of the member, if the ductility of the steel sheet is high, it becomes harder for localization of the deformation region to occur. That is, the sheet becomes resistant to buckling.

In a hot stamped member as well, while the ductility is important, in general the ductility of martensite is low. By adding Si in more than 0.50%, it is possible to secure residual austenite in an area percent of 1.0% or more and thereby improve the ductility. From such a viewpoint, Si is preferably added in more than 0.50%. More preferably, the content is 1.00% or more. On the other hand, if adding 3.00% or more, the residual austenite becomes present in an area percent of 5.0% or more and deterioration of the bendability is invited, and therefore the upper limit is less than 3.00%. Preferably, the content is less than 2.00%.

(Mn: 0.20% or more and less than 3.00%)

Mn is an element contributing to improvement of strength by solution strengthening. The effect of improving the strength of the steel sheet by solid solution of Mn in the metal structures cannot be obtained with an amount of addition of less than 0.20%, so 0.20% or more is added. Preferably the content is 0.70% or more. On the other hand, even if adding 1.50% or more, the effect becomes saturated.

Mn, further, has the effect of raising the hardenability. By adding 1.50% or more, it is possible to raise the hardenability and stably obtain high strength. The preferable amount of addition for obtaining the effect of raising the hardenability is 1.70% or more. Even if adding 3.00% or more, the effect becomes saturated, and therefore the upper limit of the amount of addition of Mn is 3.00%. Preferably, the content is less than 2.00%.

(P: 0.10% or less)

P is an element segregating at the grain boundaries and impairing the strength of the grain boundaries. If more than 0.10%, the strength of the grain boundaries remarkably falls and the hydrogen embrittlement resistance and bendability fall, and therefore P is 0.10% or less. Preferably, it is 0.05% or less. The lower limit is not particularly prescribed, but if reducing this to less than 0.0001%, the dephosphorizing cost greatly rises and the result becomes economically disadvantageous, so in practical steel sheet, 0.0001% is the substantive lower limit.

(S: 0.10% or less)

S is an element forming inclusions. If more than 0.10%, inclusions are formed and the hydrogen embrittlement resistance and bendability fall, and therefore S is 0.10% or less. Preferably, it is 0.0025% or less. The lower limit is not particularly prescribed, but if reducing this to less than 0.0015%, the desulfurizing cost greatly rises and the result becomes economically disadvantageous, so in practical steel sheet, 0.0001% is the substantive lower limit.

(sol. Al: 0.0002% or more and 3.0000% or less)

Al is an element acting to deoxidize the molten steel and make the steel sounder. In the present invention, to obtain the deoxidizing action, the range of content of not all of the Al contained in the steel, but the content of so-called "acid soluble aluminum" (sol. Al) is prescribed. With a sol. Al content of less than 0.0002%, the deoxidizing is insufficient, and therefore sol. Al is 0.0002% or more. Preferably the content is 0.0010% or more. On the other hand, even if adding more than 3.0000%, the effect becomes saturated, and therefore the content is 3.0000% or less.

(N: 0.01% or less)

N is an impurity element and is an element which forms nitrides and impairs bendability. If more than 0.01%, coarse nitrides are formed and the bendability remarkably falls, and therefore N is 0.01% or less. Preferably the content is 0.0075% or less. The lower limit is not particularly prescribed, but if reducing this to less than 0.0001%, the denitriding cost greatly rises and the result becomes economically disadvantageous, so in practical steel sheet, 0.0001% is the substantive lower limit.

(Ni: 0.01% or more and 3.00% or less)

Ni is an element contributing to improvement of strength by solution strengthening, so may be added as needed. With less than 0.01%, the effect is not obtained, so 0.01% or more is added. Preferably, the content is 0.50% or more. On the other hand, even if added in more than 3.00%, the effect becomes saturated, and therefore the content is 3.00% or less. Preferably, the content is 2.50% or less.

(Nb: 0.010% or more and 0.150% or less)

Nb is an element contributing to improvement of strength by solution strengthening, so may be added as needed. With less than 0.010%, the effect is not obtained, so 0.010% or more is added. Preferably, the content is 0.035% or more. On the other hand, even if added in more than 0.150%, the effect becomes saturated, and therefore the content is 0.150% or less. Preferably, the content is 0.120% or less.

(Ti: 0.010% or more and 0.150% or less)

Ti is an element contributing to improvement of strength by solution strengthening, so may be added as needed. With less than 0.010%, the effect is not obtained, and therefore the content is 0.010% or more. Preferably, the content is 0.020%. On the other hand, even if added in more than 0.150%, the effect becomes saturated, and therefore the content is 0.150% or less. Preferably, the content is 0.120% or less.

(Mo: 0.005% or more and 1.000% or less)

Mo is an element contributing to improvement of strength by solution strengthening, so may be added as needed. With less than 0.005%, the effect is not obtained, and therefore the content is 0.005% or more. Preferably, the content is 0.0100% or more. On the other hand, even if added in more than 1.000%, the effect becomes saturated, and therefore the content is 1.000% or less. Preferably, the content is 0.800% or less.

(B: 0.0005% or more and 0.0100% or less)

B is an element segregating at the grain boundaries and improving the strength of the grain boundaries, so may be added as needed. With less than 0.0005%, the effect of addition is not sufficiently obtained, so 0.0005% or more is added. Preferably, the content is 0.0010% or more. On the other hand, even if added in more than 0.0100%, the effect becomes saturated, and therefore the content is 0.01% or less. Preferably, the content is 0.0075% or less.

The balance of the composition of constituents of the middle part in sheet thickness consists of Fe and unavoidable impurities. The unavoidable impurities are elements which unavoidably enter from the steel raw materials and/or in the steelmaking process and are allowed in ranges not impairing the characteristics of the hot stamped body of the present invention.

(Hardness of Middle Part in Sheet Thickness is 500Hv or more and 800Hv or less)

If the hardness of the middle part in sheet thickness is 500Hv or more, as the tensile strength of the hot stamped body of the present invention, 1500 MPa or more can be secured. Preferably, it is 600Hv or more. On the other hand, if the hardness of the middle part in sheet thickness is more than 800Hv, since the difference in hardness with the softened layer becomes too large and deterioration of the bendability is invited, 800Hv is the upper limit. Preferably the hardness is 720Hv or less.

The method of measurement of the hardness of the middle part in sheet thickness is as follows: A cross-section vertical to the sheet surface of the hot stamped body is taken to prepare a sample of the measurement surface. This is supplied to a hardness test. The method of preparing the measurement surface may be based on JIS Z 2244. For example, #600 to #1500 silicon carbide paper may be used to polish the measurement surface, then a solution of particle

size 1 $\mu$m to 6 $\mu$m diamond powder dispersed in alcohol or another diluent or pure water may be used to finish the sample to a mirror surface. The hardness test may be performed by the method described in JIS Z 2244. A micro-Vickers hardness tester is used to measure 10 points at the 1/2 position of thickness of the hot stamped body by a load of 1 kgf and intervals of 3 times or more of the dents. The average value was defined as the hardness of the middle part in sheet thickness.

(Metal Structures at Middle Part in Sheet Thickness)

The middle part in sheet thickness can be improved in ductility by including residual austenite in an area percent of 1% or more. The area percent of residual austenite at the middle part in sheet thickness is preferably 2% or more. However, if making the area percent 5% or more, since deterioration of the bendability is invited, the upper limit is less than 5.0%. Preferably, the fraction is less than 4.5%.

The area percent of the residual austenite at the middle part in sheet thickness can be measured by the following method. A sample is taken from a hot stamped member and ground down at its surface to a depth of 1/2 of the sheet thickness from the normal direction of the rolling surface. The ground down surface is used for X-ray diffraction measurement. From the image obtained by the X-ray diffraction method using K$\alpha$ rays of Mo, the area rate Vy of residual austenite can be determined using the following formula:

$$V\gamma=(2/3)\{100/(0.7\times\alpha(211)/\gamma(220)+1)\}+(1/3)\{100/(0.78\times\alpha(211)/\gamma(311)+1)\}$$

Here, $\alpha(211)$ is the X-ray diffraction intensity at the (211) face of ferrite, $\gamma(220)$ is the X-ray diffraction intensity at the (220) face of austenite, and $\gamma(311)$ is the X-ray diffraction intensity at the (311) face of austenite.

(Softened Layer)

As explained above, in the present invention, the "softened layer" is the region in the sheet thickness direction of the cross-section of sheet thickness of the hot stamped body from the position where the hardness falls by 10Hv or more from hardness of the middle part in sheet thickness (hardness at position of 1/2 of sheet thickness) to the surface of the stamped body. Below, the metal structures and composition etc., of the softened layer will be explained.

(Metal Structures of Softened Layer)

The inventors engaged in intensive studies and as a result discovered, as a result of investigation of the metal structures of steel sheets where good bendability was obtained, that the metal structures forming the softened layer should be comprised of crystal grains with a maximum crystal orientation difference inside the crystal grains of 1° or less and crystal grains with a maximum crystal orientation difference inside the crystal grains of 8° to 15° when defining a region surrounded by grain boundaries having a 15° or higher orientation difference in a cross-section of sheet thickness as a "crystal grain". It was discovered that these measurements should be performed in the region from a position of a depth of 20 $\mu$m below the surface of the softened layer to a position of a depth of 1/2 of the thickness of the softened layer (center of softened layer). The inventors engaged in intensive studies and as a result learned that from the viewpoint of the bendability and other effects, the fractions of structures from a position of 20 $\mu$m from the surface of the softened layer to a position of a depth of 1/2 of the thickness of the softened layer are important. It was discovered that the effects of the surface properties of the hot stamped body and the effects of the transitional part from the middle part in sheet thickness to the softened layer can be eliminated by this.

In the above-mentioned metal structures of the softened layer, if the area rate of the total of crystal grains with a maximum crystal orientation difference inside the crystal grains of 1° or less and crystal grains with a maximum crystal orientation difference inside the crystal grains of 8° to 15° is less than 20%, this effect is not sufficiently obtained, and therefore the lower limit is 20%. Preferably, the area rate is 20% or more, more preferably it may be 25% or more. On the other hand, with an area rate of the total of the metal structures of the softened layer of 50% or more, the difference in hardness of the softened layer and the middle part in sheet thickness becomes greater and the effect of reduction of the sharp gradient of hardness in the sheet thickness direction occurring at the time of bending deformation cannot be sufficiently obtained, and therefore the area rate is less than 50%. More preferably, it may be 45% or less.

Between the position of a depth of 1/2 of the thickness of the softened layer (center of softened layer) to the middle part in sheet thickness, if the hardness at the sheet thickness middle part side of the softened layer (boundary with middle part in sheet thickness) is HvA and the hardness of the center of the softened layer is HvB, they are in the relationship of HvA-HvB≥10Hv.

The method of determining the region from 20 $\mu$m below the surface of the softened layer to a position of 1/2 of the thickness of the softened layer will be explained below. A cross-section vertical to the surface of the hot stamped body being measured (cross-section of sheet thickness) is taken to prepare a sample of the measurement surface. This is used for a hardness test. The method of preparing the measurement surface may be based on JIS Z 2244. For example, #600 to #1500 silicon carbide paper may be used to polish the measurement surface, then a solution of particle size 1 $\mu$m to 6 $\mu$m diamond powder dispersed in alcohol or another diluent or pure water may be used to finish the sample to a mirror surface. The sample with the prepared measurement surface is measured two times based on the method described in JIS Z 2244 using a micro Vickers hardness tester. The first time measures the hardness from the region within 20 $\mu$m from the surface of the hot stamped body in the sheet thickness direction to the middle part in sheet thickness (position of 1/2 of sheet thickness) in the direction perpendicular to the surface (sheet thickness direction) by a load of 0.3 kgf at intervals of 3 times or more the dents. However, if there is a plated layer, this is measured from the region within 20 $\mu$m right under the plating or coating or the alloy layer of the plating or coating and material of the softened layer. The position where the hardness starts to drop by 10Hv or more from the hardness of the middle part in sheet thickness (hardness at position of 1/2 of sheet thickness) is determined and the layer from that sheet thickness position to the surface of the hot stamped body is defined as the "softened layer". If the softened layer is present at both surfaces, the second measurement is performed at the surface at the opposite side to the first one (back surface) by a similar method to determine the position where the hardness starts to drop by 10Hv or more from the hardness of the middle part in sheet thickness.

Next, the method of calculating the area rates of metal structures of the softened layer will be explained. A sample is cut out from a hot stamped body to enable examination of a cross-section vertical to its surface (sheet thickness direction). The length of the sample depends on the measuring device, but may be about 50 $\mu$m. The region in the sheet thickness direction of the sample from the surface of the softened layer to the position of 1/2 of the thickness of the softened layer (center of softened layer) is analyzed at 0.2 $\mu$m measurement intervals by EBSD to obtain information on the crystal orientation. Here, this EBSD analysis is performed using an apparatus comprised of a thermal field emission type scan electron microscope (JSM-7001F made by JEOL) and EBSD detector (DVC5 type detector made by TSL) at an analysis speed of 200 to 300 points/second.

Next, based on the obtained crystal orientation information, a region surrounded by grain boundaries having an orientation difference of 15° or more is defined as one crystal grain and a crystal orientation map in the sheet surface direction is prepared. The obtained crystal orientation map is used to find the crossing points of the long axis of one crystal grain and the crystal grain boundaries. Among the two crossing points, one is designated as the starting point and the other is designated as the end point and the difference in orientation among all measurement points contained on the long axis of the crystal grain is calculated. The maximum value of the orientation difference obtained was defined as the maximum crystal orientation difference at that crystal grain. The above analysis was performed for all crystal grains included in the measurement region, then the average of these values was defined as the maximum crystal orientation difference inside a region surrounded by grain boundaries of 15° or more.

The above-defined maximum crystal orientation difference can be simply calculated, for example, if using the "Inverse Pole Figure Map" and "Profile Vector" functions included in the software (OIM Analysis®) attached to the EBSD analysis system. With the "Inverse Pole Figure Map" function, it is possible to draw grain boundaries having slants of 15° or more as large angle grain boundaries and further possible to prepare a crystal orientation map in the sheet surface direction. With the "Profile Vector" function, it is possible to calculate the misorientation angle (difference in crystal orientations) between all measurement points included on any line. All crystal grains contained in the measurement region (crystal grains at end parts of measurement region not included) are analyzed as explained above and the area rate of the total of the crystal grains with a maximum crystal orientation difference inside the regions surrounded by grain boundaries of 15° or more of 1° or less and the crystal grains with a crystal orientation difference of 8° to 15° is calculated. If the softened layer is formed on both surfaces, the above procedure is performed at the back surface side of the hot stamped body as well and the average value of the area rates obtained from the front surface side and the back surface side is employed.

(Composition of Softened Layer)

The composition of the softened layer is not particularly limited other than regarding the unavoidable impurity elements of P, S, and N impairing the strength and/or bendability, but the layer is preferably the following composition so as to secure the strength of the hot stamped body and steel exhibiting excellent bendability.

In the composition of the softened layer, one or more of the C content, Si content, and Mn content are preferably 0.6 time or less the corresponding contents of elements of the middle part in sheet thickness. The preferable ranges of the constituents in this case are as follows:

(C: 0.05% or more and less than 0.42%)

C may be added in 0.05% or more so as to raise the strength. From the viewpoint of raising the load resistance as a member and improving the impact characteristics, preferably the content is 0.10% or more. To make the hardness of the softened layer lower than the hardness of the middle part in sheet thickness, it is preferable to make the content smaller than the middle part in sheet thickness. For this reason, the preferable C content of the softened layer is less than 0.42%. Preferably the content is 0.35% or less.

(Si: less than 2.00%)

Si is an element contributing to improvement of strength by solution strengthening, so is added for raising the strength. However, to make the hardness of the softened layer lower than the hardness of the middle part in sheet thickness, it is preferable to make this smaller in content than the middle part in sheet thickness.
If the Si content of the middle part in sheet thickness is 0.50% or less, the preferable Si content of the softened layer is 0.30% or less, preferably 0.20% or less. Further, if the Si content of the middle part in sheet thickness is more than 0.50% and less than 3.00%, the preferable Si content of the softened layer is less than 2.00%, more preferably 1.50% or less.

(Mn: 0.01% or more and 1.80% or less)

Mn is an element contributing to improvement of strength by solution strengthening, so is added for raising the strength. To make the hardness of the surface layer lower than the hardness of the middle part in sheet thickness, it is preferably smaller in content than the middle part in sheet thickness. For this reason, the preferable Mn content of the surface layer is less than 1.80%, preferably 1.40% or less, more preferably less than 0.90%, still more preferably 0.70% or less.
If the Mn content at the middle part in sheet thickness is 0.20% to less than 1.50%, the preferable Mn content of the softened layer is less than 0.90%, more preferably is 0.70% or less. Further, the preferable Mn content of the softened layer is 0.12% to less than 0.90%, preferably 0.70% or less. Further, if the Mn content of the middle part in sheet thickness is 1.50% to less than 3.00%, the preferable Mn content of the softened layer is 1.80% or less.

(P: 0.10% or less)

P is an element segregating at the grain boundaries and impairing the strength of the grain boundaries. If more than 0.10%, the strength of the grain boundaries remarkably falls and the hydrogen embrittlement resistance and bendability fall, and therefore P is 0.1% or less. Preferably, it is 0.05% or less. The lower limit is not particularly prescribed, but if reducing this to less than 0.0001%, the dephosphorizing cost greatly rises and the result becomes economically disadvantageous, so in practical steel sheet, 0.0001% is the substantive lower limit.

(S: 0.10% or less)

S is an element forming inclusions. If more than 0.10%, inclusions are formed and the hydrogen embrittlement resistance and bendability fall, and therefore S is 0.10% or less. Preferably, it is 0.0025% or less. The lower limit is not particularly prescribed, but if reducing this to less than 0.0015%, the desulfurizing cost greatly rises and the result becomes economically disadvantageous, so in practical steel sheet, 0.0001% is the substantive lower limit.

(sol. Al: 0.0002% or more and 3.0000% or less)

Al is an element acting to deoxidize the molten steel and make the steel sounder. In the present invention, to obtain this deoxidizing action, the range of content of not all of the Al contained in the steel, but the so-called "acid soluble aluminum" (sol. Al) is prescribed. With a sol. Al content of less than 0.0002%, the deoxidizing is insufficient, and therefore the sol. Al is preferably 0.0002% or more. More preferably the content is 0.0010% or more. On the other hand, even if adding more than 3.0%, the effect becomes saturated, and therefore the content is 3.0% or less.

(N: 0.01% or less)

N is an impurity element and is an element which forms nitrides and impairs bendability. If more than 0.01%, coarse nitrides are formed and the bendability remarkably falls, and therefore N is 0.01% or less. Preferably the content is 0.0075% or less. The lower limit is not particularly prescribed, but if reducing this to less than 0.0001%, the denitriding cost greatly rises and the result becomes economically disadvantageous, so in practical steel sheet, 0.0001% is the substantive lower limit.

Regarding the constituents of the softened layer, one or more of the C content, Si content, and Mn content are preferably respectively 0.6 time or less the C content, Si content, and Mn content of the middle part in sheet thickness. Other than the upper limits of the unavoidable impurity elements of P, S, and N impairing the strength and/or bendability being prescribed, the other constituents are not particularly limited. In general, the softened layer may optionally and selectively include one or more of the following constituents besides C, Si, and Mn.

(Ni: 0.01% or more and 3.00% or less)

Ni is an element contributing to improvement of strength by solution strengthening, so may be added as needed. With less than 0.01%, the effect is not obtained, and therefore the content is 0.01% or more. Preferably, the content is 0.5% or more. On the other hand, even if added in more than 3.00%, the effect becomes saturated, and therefore the content is 3.00% or less. Preferably, the content is 2.50% or less.

(Nb: 0.010% or more and 0.150% or less)

Nb is an element contributing to improvement of strength by solution strengthening, so may be added as needed. With less than 0.010%, the effect is not obtained, so the content is made 0.010% or more. Preferably, the content is 0.035% or more. On the other hand, even if added in more than 0.150%, the effect becomes saturated, and therefore the content is 0.150% or less. Preferably, the content is 0.120% or less.

(Ti: 0.010% or more and 0.150% or less)

Ti is an element contributing to improvement of strength by solution strengthening, so may be added as needed. With less than 0.010%, the effect is not obtained, and therefore the content is 0.010% or more. Preferably, the content is 0.020%. On the other hand, even if added in more than 0.150%, the effect becomes saturated, and therefore the content is 0.150% or less. Preferably, the content is 0.120% or less.

(Mo: 0.005% or more and 1.000% or less)

Mo is an element contributing to improvement of strength by solution strengthening, so may be added as needed. With less than 0.005%, the effect is not obtained, and therefore the content is 0.005% or more. Preferably, the content is 0.010% or more. On the other hand, even if added in more than 1.000%, the effect becomes saturated, and therefore the content is 1.000% or less. Preferably, the content is 0.800% or less.

(B: 0.0005% or more and 0.01% or less)

B is an element segregating at the grain boundaries and improving the strength of the grain boundaries, so may be added as needed. With less than 0.0005%, the effect of addition is not sufficiently obtained, and therefore 0.0005% or more is added. Preferably, the content is 0.0010% or more. On the other hand, even if added in more than 0.0100%, since the effect becomes saturated, the content is 0.0100% or less. Preferably, the content is 0.0075% or less.

(Cross-Sectional Distribution of Hardness of Hot Stamped Body)

At the cross-section vertical to the surface of the hot stamped body, the distribution of hardness is preferably uniform. In a hat-shaped structure, at the vertical wall parts, contact with the die is difficult and the cooling rate becomes low, so sometimes the hardness falls. If there is a region where the hardness falls by 100Hv or more from the average hardness of the cross-section vertical to the longitudinal direction of the hat-shaped member, at the time of impact, the deformation will concentrate at the softened part and the part will fracture early, so a high impact resistance cannot be obtained. For this reason, there must not be a point with a hardness more than 100HV below the average value of the distribution of hardness in the cross-section vertical to the surface of the hot stamped body (below, referred to as the "average hardness of cross-section"). The distribution of hardness at the cross-section and the average hardness of the cross-section are obtained by obtaining a cross-section vertical to the longitudinal direction of a long hot stamped body at any position in the longitudinal direction and measuring the Vickers hardness between the end parts of the cross-section at equal intervals of 1 mm pitch or less using a Vickers hardness tester (load of 1 kgf).

(Formation of Plated Layer)

The surface of the softened layer may be formed with a plated layer for the purpose of improving the corrosion resistance. The plated layer may be either an electroplated layer or a hot dip coated layer. An electroplated layer includes, for example, an electrogalvanized layer, electro Zn-Ni alloy plated layer, etc. As a hot dip coated layer, a hot dip galvanized layer, a hot dip galvannealed layer, a hot dip aluminum coated layer, a hot dip Zn-Al alloy coated layer, a hot dip Zn-Al-Mg alloy coated layer, a hot dip Zn-Al-Mg-Si alloy coated layer, etc., may be mentioned. The amount of deposition of the layer is not particularly limited and may be a general amount of deposition.

(Method of Production of Hot Stamped Body According to Present Invention)

Next, the method of production for obtaining the hot stamped body according to the present invention will be explained, but the present invention is not limited to the form of the double layer steel sheet explained below.

As one embodiment of the method of production of the present invention, first, a steel sheet satisfying the requirements of the composition of constituents of the middle part in sheet thickness explained above is ground down at its front surface and/or back surface to remove surface oxides, then a steel sheet for softened layer is superposed on each ground down surface side. The method of joining the steel sheet for softened layer and the steel sheet for sheet thickness middle part is not particularly limited, but they may be joined by arc welding. A steel sheet for softened layer wherein one or more of the C content, Si content, and Mn content are 0.6 time or less the content of the corresponding element of the steel sheet for sheet thickness middle part is preferably superposed.

Further, by controlling the casting rate to 6 ton/min or more in the continuous casting process of the steel sheet for softened layer, it is possible to keep down microsegregation of Mn in the steel sheet for softened layer and possible to make the distribution of concentration of Mn at the steel sheet for softened layer uniform. Mn raises the yield strength of austenite to thereby affect the behavior in formation of grain boundaries in the transformed structures, so when defining a region surrounded with grain boundaries having orientation differences of 15° or more as a "crystal grain", it has the effect of promoting the formation of crystal grains with a maximum crystal orientation difference inside the crystal grains of 8° to 15°. For this reason, it is also possible to control the casting rate to 6 ton/h or more in the continuous casting process of steel sheet for softened layer for the purpose of promoting the formation of the above microstructures.

Further, a double layer steel sheet fabricated by the above method and further held at 1100°C or more and 1350°C or less in temperature for 60 minutes or more is preferably used as the steel sheet for hot stamped body according to the present invention. The inventors studied this and as a result learned that by performing heat treatment holding the steel sheet at 1100°C or more and 1350°C or less for 60 minutes or more, in the metal structures in the region from a position of a depth of 20 $\mu$m below the surface of the softened layer to the center of the softened layer, the area rate of the total of crystal grains with a maximum crystal orientation difference inside the crystal grains of 1° or less and crystal grains with a maximum crystal orientation difference inside the crystal grains of 8° to 15° becomes 20% to less than 50% when a region surrounded by grain boundaries having an orientation difference of 15° or more is defined as a "crystal grain" and that excellent bendability and hydrogen embrittlement resistance can be obtained. The upper limit is not particularly limited, but if holding the sheet for more than 300 minutes, the heating cost greatly rises and the result becomes economically disadvantageous, so in actual operation, 300 minutes is the substantive upper limit.

The multilayer member produced by the above method of production (double layer steel sheet) can be treated by hot rolling, cold rolling, hot stamping, continuous hot dip coating, etc., to obtain the hot stamped body according to the present invention.

The hot rolling may be hot rolling performed under usual conditions. For example, the finishing temperature may also be in the temperature range of 810°C or more. The subsequent following cooling conditions also do not have to be particularly prescribed. The steel sheet is coiled in the temperature region of 750°C or less. Further, it may be reheated for the purpose of softening the double layer steel sheet after hot rolling.

Further, to promote more the formation of the middle part in sheet thickness, the hot rolling after the above heat treatment of the double layer steel sheet preferably includes rough rolling and finish rolling with the rough rolling being performed twice under conditions of a temperature of 1100°C or more, a sheet thickness reduction rate per pass of 5% or more and less than 50%, and a time between passes of 3 seconds or more.

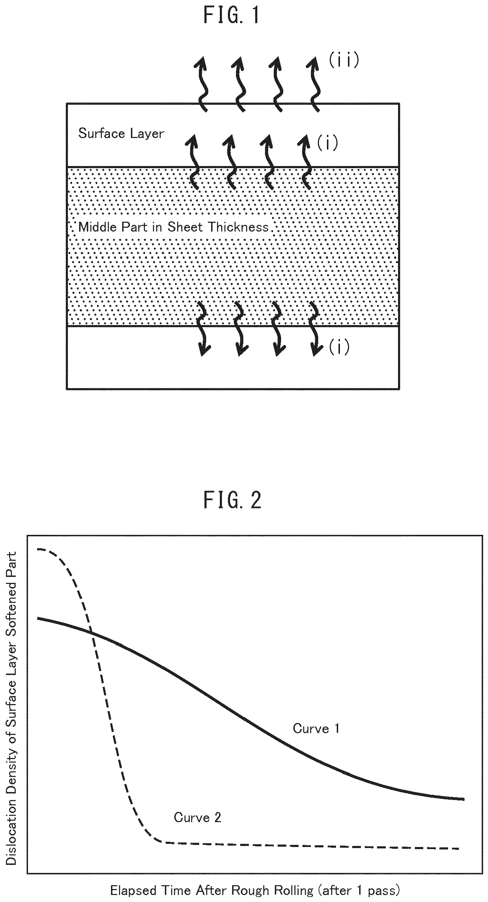

Specifically, to promote more the formation of the middle part in sheet thickness in the present invention, the concentrations of alloy elements, in particular C atoms, have to be controlled to become more moderately distributed. The distribution of concentration of C is obtained by diffusion of C atoms. The diffusion frequency of C atoms increases the higher the temperature. Therefore, to control the C concentration, control in the rough rolling from the hot rolling heating becomes important. In hot rolling heating, to promote the diffusion of C atoms, the heating temperature has to be high. Preferably, it is 1100°C or more and 1350°C or less, more preferably more than 1150°C and 1350°C or less. With hot rolled heating, the changes of (i) and (ii) shown in FIG. 1 occur. (i) shows the diffusion of C atoms from the middle part in sheet thickness to the surface layer, while (ii) shows the decarburization reaction of C being desorbed from the surface layer to the outside. A distribution occurs in the concentration of C due to the balance between this diffusion of C atoms and the desorption reaction of (i) and (ii). With less than 1100°C, the reaction of (i) is insufficient, so the preferable distribution of the concentration of C cannot be obtained. On the other hand, with more than 1350°C, the reaction of (ii) excessively occurs, so similarly a preferable distribution of concentration cannot be obtained.

After adjusting the hot rolling heating temperature to obtain the preferable distribution of concentration of C, to obtain a further optimum distribution of concentration of C, pass control in rough rolling becomes extremely important. Rough rolling is performed two times or more under conditions of a rough rolling temperature of 1100°C or more, a sheet thickness reduction rate per pass of 5% or more and less than 50%, and a time between passes of 3 seconds or more. This is so as to promote the diffusion of C atoms of (i) in FIG. 1 by the strain introduced in the rough rolling. Even if using an ordinary method to rough roll and finish roll a slab controlled in concentration of C to a preferable state by hot rolling heating, the sheet thickness will be reduced without the C atoms sufficiently diffusing in the surface layer. Therefore, if manufacturing hot rolled steel sheet of a thickness of several mm from a slab having a thickness more than 200 mm through a general hot rolling process, the result will be a steel sheet changing rapidly in concentration of C at the surface layer. A moderate hardness change will no longer be able to be obtained. The method discovered to solve this is the above pass control of the rough rolling. The diffusion of C atoms is greatly affected by not only the temperature, but also the strain (dislocation density). In particular, compared with lattice diffusion, with dislocation diffusion, the diffusion frequency becomes 10 times or more higher, so steps have to be taken to leave the dislocation density while rolling to reduce the sheet thickness. Curve 1 of FIG. 2 shows the change in the dislocation density after a rolling pass in the case where the sheet thickness reduction rate per pass in the rough rolling is small. It will be understood that strain remains over a long time period. By causing strain to remain at the surface layer over a long time period in this way, C atoms sufficiently diffuse in the surface layer and the optimum distribution of concentration of C can be obtained. On the other hand, curve 2 shows the change in dislocation density in the case where the sheet thickness reduction rate per pass of rough rolling is large. If the amount of strain introduced by the rolling rises, recovery is easily promoted and the dislocation density rapidly falls. For this reason, to obtain the optimal distribution of concentration of C, it is necessary to prevent the occurrence of a change in dislocation density like the curve 2. From such a viewpoint, the upper limit of the sheet thickness reduction rate per pass becomes less than 50%. To promote the diffusion of C atoms at the surface layer, certain amounts of dislocation density and holding time have to be secured, so the lower limit of the sheet thickness reduction rate becomes 5%. As the time between passes, 3 seconds or more has to be secured.

The cold rolling may be cold rolling performed by a usual rolling reduction, for example, 30 to 90%. The hot rolled steel sheet and the cold rolled steel sheet include steel sheets as hot rolled and cold rolled and also steel sheets obtained by recrystallization annealing hot rolled steel sheet or cold rolled steel sheet under usual conditions and steel sheets obtained by skin pass rolling under usual conditions.

The heating, shaping, and cooling steps at the time of hot stamping may also be performed under usual conditions. For example, hot rolled steel sheet obtained by uncoiling hot rolled steel sheet coiled in the hot rolling step, cold rolled steel sheet obtained by uncoiling and cold rolling coiled hot rolled steel sheet, or steel sheet obtained by plating or coating cold rolled steel sheet, heating this by a 0.1°C/s to 200°C/s heating rate up to 810°C or more and 1000°C or less in temperature, and holding it at this temperature is formed into the required shape by the usual hot stamping.

The holding time may be set according to the mode of forming, so is not particularly limited. For example, if 30 seconds or more and 600 seconds or less, a good hot stamped body is cooled to room temperature.

The cooling rate may also be set to a usual condition. For example, the average cooling rate in the temperature region from the heating temperature to more than 400°C may be 50°C/s or more. In the case of steel sheet with an Si content at the middle part in sheet thickness of more than 0.50% and less than 3.00% and an Mn content at the middle part in sheet thickness of 0.20% or more and less than 1.50% and steel sheet with an Si content at the middle part in sheet thickness of more than 0.50% and less than 3.00% and an Mn content at the middle part in sheet thickness of 1.50% or more and less than 3.00%, for the purpose of increasing the amount of formation of residual austenite to improve the ductility, it is preferable to control the average cooling rate at the cooling after heating and holding at the 200°C to 400°C temperature region to less than 50°C/s.

For the purpose of adjusting the strength etc., it is possible to temper the body cooled down to room temperature in the range of 150°C to 600°C.

In the method of production of the hot stamped body of the above-mentioned embodiment, the middle part in sheet thickness and the softened layer were configured by separate steel sheets. However, the hot stamped body of the present invention is not limited to double layer steel sheet comprised of two of the above-mentioned steel sheets superposed. The middle part in sheet thickness and the softened layer may be formed inside a single material steel sheet. For example, it is possible to treat a single layer steel sheet to decarburize it and soften the surface layer part to thereby produce high strength steel sheet comprised of a softened layer and a middle part in sheet thickness.

EXAMPLES

Next, examples of the present invention will be explained, but the conditions in the examples are just illustrations of conditions employed for confirming the workability and advantageous effects of the present invention. The present invention is not limited to the illustration of conditions. The present invention can employ various conditions so long as not departing from the gist of the present invention and achieving the object of the present invention.

[Manufacturing Example A]

The Nos. 1 to 19 steel sheets for sheet thickness middle part having the chemical compositions shown in Table A-1-1 to Table A-1-2 (in the tables, "Steel Nos. 1 to 19") were ground down at their surfaces to remove the surface oxides. After that, the respective steel sheets for sheet thickness middle part were welded with steel sheets for softened layer forming use having the chemical compositions shown in Table A-1-1 to Table A-1-2 (below, referred to as the "steel sheets for surface layer") at both surface or single surfaces by arc welding to fabricate the Nos. 1 to 44 multilayer steel sheets for hot stamped body. In the tables, fields in which the constituents are indicated as 0 show that the corresponding constituents are not intentionally added.

The total of the sheet thicknesses of the steel sheet for surface layer and the steel sheet for sheet thickness middle part after arc welding is 200 mm to 300 mm and the thickness of the steel sheet for surface layer is 1/3 or so of the thickness of the steel sheet for sheet thickness middle part (1/4 or so in case of single side). The No. 38 multilayer steel sheet is steel with the steel sheet for surface layer welded to only one surface. In the Nos. 1 to 44 multilayer steel sheets of Table A-1-1 to Table A-1-2, ones with a steel sheet for sheet thickness middle part not satisfying the requirement for composition of the middle part in sheet thickness of the hot stamped body according to the present invention are indicated as "comparative steel" in the remarks column.

The Nos. 1 to 44 multilayer steel sheets were respectively treated under the conditions of the Nos. 1 to 44 manufacturing conditions shown in Table A-2-1 to Table A-2-2 by heat treatment before hot rolling, rough rolling, hot rolling, and cold rolling to obtain steel sheets. Next, the steel sheets were heat treated as shown in Table A-2-1 and Table A-2-2 (in the tables, "heat treatment of hot stamped body") for hot stamping to manufacture the Nos. 1A to 44A hot stamped bodies ("shaped bodies" of Table A-3) . Further, the Nos. 36A and 37A hot stamped bodies were coated on a hot dip coating line at the surfaces of the matrix steel sheets with 120 to 160 $g/m^2$ amounts of aluminum.

In the tables, the item "sheet thickness reduction rate" of the "rough rolling" means the sheet thickness reduction rate per pass of the rough rolling. The item "number of rolling operations" means the number of rolling operations under the conditions of a time between passes of 3 seconds or more. Further, the item in the tables of "heating rate (°C/s)" means the rate of temperature rise until reaching the heating temperature of the "heat treatment at the time of hot stamping" after the cold rolling process. Further, in the tables, the item "heating temperature (°C)" of the "heat treatment at the time of hot stamping" is the temperature at the time of hot stamping, the "average cooling rate (°C/s) (more than 400°C)" means the average cooling rate (°C/s) in the temperature region from the heating temperature to more than 400°C, and the "average cooling rate (°C/s) (400°C or less)" means the average cooling rate (°C/s) in the temperature region from 200°C to 400°C. Further, in the tables, the fields with the notations "-" indicate no corresponding treatment performed.

Table A-3 shows the metal structures and characteristics of the Nos. 1A to 44A hot stamped bodies. The constituents obtained by analyzing the positions of 1/2 of the sheet thicknesses of the samples taken from the hot stamped bodies and positions of 20 $\mu$m from the surfaces of the softened layers were equivalent to the constituents of the steel sheets for sheet thickness middle part and steel sheets for surface layer of the Nos. 1 to 44 multilayer steel sheets of Table A-1-1 to Table A-1-2.

The metal structures of the hot stamped steel sheets were measured by the above-mentioned method. The hardness of the steel sheet for sheet thickness middle part forming the middle part in sheet thickness and the area rate of the total of the crystal grains with a maximum crystal orientation difference inside the regions surrounded by grain boundaries of 15° or more of 1° or less and the crystal grains with a crystal orientation difference of 8° to 15° in the metal structures from the surface of the steel sheet for surface layer forming the softened layer to 1/2 of the thickness were calculated. The calculated values of the area rate are shown in the item "area rate (%) of total of crystal grains with maximum crystal orientation difference inside large angle grain boundaries of 1° or less and crystal grains with maximum crystal orientation difference of 8° to 15°" of Table A-3.

Further, a tensile test of the hot stamped body was performed. The results are shown in Table A-3. The tensile test was performed by preparing a No. 5 test piece described in JIS Z 2201 and following the test method described in JIS Z 2241.

The hydrogen embrittlement resistance of the hot stamped body was evaluated using a test piece cut out from the stamped body. In general, a hot stamped body is joined with other parts using spot welding or another joining method. Depending upon the precision of the shape of the part, the hot stamped body will be subjected to twisting and stress will be applied. The stress differs depending on the position of the part. Accurately calculating this is difficult, but if there is no delayed fracture at the yield stress, it is believed there is no problem in practical use. Therefore, a sheet thickness 1.2 mm×width 6 mm×length 68 mm test piece was cut out from the stamped body, a strain corresponding to the yield stress was imparted in a four-point bending test, then the body was immersed in pH3 hydrochloric acid for 100 hours. The presence of any cracking was used to evaluate the hydrogen embrittlement resistance. A case of no cracking was indicated as passing ("good") and a case with cracking was indicated as failing ("poor").

For the purpose of evaluating the impact resistance of the hot stamped body, the body was evaluated based on the VDA standard (VDA238-100) prescribed by the German Association of the Automotive Industry under the following measurement conditions. In the present invention, the displacement at the time of maximum load obtained in the bending test was converted to angle by the VDA standard to find maximum bending angle and thereby evaluate the impact resistance of the hot stamped body.

Test piece dimensions: 60 mm (rolling direction)×60 mm (direction vertical to rolling) or 30 mm (rolling direction)×60 mm (direction vertical to rolling)

Bending ridgeline: direction perpendicular to rolling

Test method: roll support, punch pressing

Roll diameter: φ30 mm

Punch shape: tip R=0.4 mm

Distance between rolls: 2.0×sheet thickness (mm)+0.5mm

Indentation rate: 20 mm/min

Tester: SHIMAZU AUTOGRAPH 20kN

If the tensile strength is 1500 MPa or more, the maximum bending angle (°) was 90(°) or more, and the hydrogen embrittlement resistance was a passing level, it was judged that the impact resistance and hydrogen embrittlement resistance were excellent and the case was indicated as an "invention example". If even one of the three aspects of performance is not satisfied, the case was indicated as a "comparative example".

In each hot stamped body of the invention examples, the area rate of the total of the crystal grains with a maximum crystal orientation difference inside the regions surrounded by grain boundaries of 15° or more of 1° or less and the crystal grains with a crystal orientation difference of 8° to 15° in the metal structures from the surface of the steel sheet for surface layer to 1/2 of the thickness was 20% to less than 50%. Further, each hot stamped body of the invention examples was excellent in tensile strength, bendability, and hydrogen embrittlement resistance.

As opposed to this, the No. 5A hot stamped body was low in carbon content of the steel sheet for sheet thickness middle part, so the hardness of the middle part in sheet thickness became insufficient and the tensile strength became insufficient. The No. 9A hot stamped body was excessive in carbon content of the steel sheet for sheet thickness middle part, so the hardness of the middle part in sheet thickness became excessive and the targeted bendability could not be obtained. Further, the No. 11A hot stamped body was low in Mn content at the steel sheet for sheet thickness middle part, so the hardness of the middle part in sheet thickness became insufficient and the tensile strength became insufficient.

The Nos. 30A to 32A hot stamped bodies are comparative examples produced using the multilayer steel sheets for hot stamped body to which the desirable heat treatment had not been applied before the hot stamping process. The No. 30A hot stamped body was too low in heat treatment temperature before the hot stamping process, so the soft structures and metal structures with intermediate hardnesses insufficiently grew, the effect of surface properties of the hot stamped body and effect of the transitional part from the middle part in sheet thickness to the softened layer could not be eliminated, and excellent bendability could not be obtained. Further, the No. 31A hot stamped body was excessively high in heat treatment temperature before the hot stamping process, so the soft structures and metal structures with intermediate hardnesses excessively grew, the difference in hardness between the softened layer and the middle part in sheet thickness became too large, and the effect of reduction of the sharp gradient in hardness in the sheet thickness direction occurring at the time of bending deformation could not be obtained. For this reason, the No. 31A hot stamped body could not be given excellent bendability. The No. 32A hot stamped body was too short in heat treatment time before the hot stamping process, so in the metal structures from the surface of the softened layer to 1/2 of the thickness, the soft structures and metal structures with intermediate hardnesses insufficiently grew and the target bendability could not be obtained.

The No. 41A hot stamped body was low in rolling temperature of the rough rolling. Further, the No. 42A hot stamped body was low in sheet thickness reduction rate of the rough rolling. Further, the No. 43A hot stamped body was low in number of rolling operations under conditions of a time between passes of 3 seconds or more. These hot stamped bodies were not manufactured under the suitable rough rolling conditions, so the soft structures and metal structures with intermediate hardnesses insufficiently grew, it was not possible to ease the strain occurring due to bending deformation, and the targeted bendability could not be obtained.

The No. 44A hot stamped body is a steel sheet controlled in casting rate to 6 ton/min or more in the continuous casting process of steel sheet for surface layer. It can raise the area rate of the total of the crystal grains with a maximum crystal orientation difference inside the regions surrounded by grain boundaries of 15° or more of 1° or less and the crystal grains with a crystal orientation difference of 8° to 15° in the metal structures from the surface of the steel sheet for surface layer to 1/2 of the thickness and is excellent in bendability.

[Table A-1-1]

| Multilayer steel sheet no. | Chemical constituents of steel sheet for sheet thickness middle part (mass%) | | | | | | | | | | | | | Remarks |
|---|---|---|---|---|---|---|---|---|---|---|---|---|---|---|
| | Steel no. | C | Si | Mn | P | S | sol.Al | N | Ni | Nb | Ti | Mo | B | |
| 1 | 1 | 0.21 | 0.13 | 1.31 | 0.016 | 0.0026 | 0.0370 | 0.003 | 0 | 0 | 0 | 0 | 0 | |
| 2 | 2 | 0.35 | 0.08 | 1.35 | 0.013 | 0.0011 | 0.0370 | 0.003 | 0 | 0 | 0 | 0 | 0 | |
| 3 | 3 | 0.29 | 0.1 | 1.25 | 0.016 | 0.0008 | 0.0390 | 0.0042 | 0 | 0 | 0 | 0 | 0 | |
| 4 | 4 | 0.53 | 0.18 | 1.37 | 0.009 | 0.0007 | 0.0440 | 0.0023 | 0 | 0 | 0 | 0 | 0 | |
| 5 | 5 | 0.17 | 0.13 | 1.26 | 0.01 | 0.0005 | 0.0470 | 0.0027 | 0 | 0 | 0 | 0 | 0 | Comp. steel |
| 6 | 6 | 0.21 | 0.11 | 1.35 | 0.003 | 0.001 | 0.0400 | 0.0022 | 0 | 0 | 0 | 0 | 0 | |
| 7 | 7 | 0.23 | 0.14 | 1.37 | 0.009 | 0.0004 | 0.0510 | 0.0037 | 0 | 0 | 0 | 0 | 0 | |
| 8 | 8 | 0.26 | 0.15 | 1.22 | 0.005 | 0.0012 | 0.0520 | 0.0031 | 0 | 0 | 0 | 0 | 0 | |
| 9 | 9 | 0.86 | 0.11 | 1.34 | 0.002 | 0.0011 | 0.0380 | 0.0024 | 0 | 0 | 0 | 0 | 0 | Comp. steel |
| 10 | 10 | 0.23 | 0.33 | 1.26 | 0.006 | 0.0002 | 0.0410 | 0.0026 | 0 | 0 | 0 | 0 | 0 | |
| 11 | 11 | 0.36 | 0.23 | 0.08 | 0.005 | 0.0005 | 0.0460 | 0.0022 | 0 | 0 | 0 | 0 | 0 | Comp. steel |
| 12 | 12 | 0.33 | 0.22 | 0.74 | 0.002 | 0.001 | 0.0500 | 0.0027 | 0 | 0 | 0 | 0 | 0 | |
| 13 | 13 | 0.25 | 0.15 | 1.23 | 0.012 | 0.0004 | 0.0480 | 0.0038 | 0.07 | 0 | 0 | 0 | 0 | |
| 14 | 14 | 0.26 | 0.08 | 1.31 | 0.005 | 0.0004 | 0.0430 | 0.0024 | 0 | 0.032 | 0 | 0 | 0 | |
| 15 | 15 | 0.28 | 0.12 | 1.36 | 0.011 | 0.0006 | 0.0340 | 0.0032 | 0 | 0 | 0.026 | 0 | 0 | |
| 16 | 16 | 0.22 | 0.18 | 1.31 | 0.014 | 0.0008 | 0.0430 | 0.0028 | 0 | 0 | 0 | 0.04 | 0 | |
| 17 | 17 | 0.27 | 0.12 | 1.37 | 0.012 | 0.001 | 0.0500 | 0.0028 | 0 | 0 | 0 | 0 | 0.0015 | |
| 18 | 1 | 0.24 | 0.13 | 1.31 | 0.016 | 0.0026 | 0.0370 | 0.003 | 0 | 0 | 0 | 0 | 0 | |
| 19 | 1 | 0.23 | 0.13 | 1.31 | 0.016 | 0.0026 | 0.0370 | 0.003 | 0 | 0 | 0 | 0 | 0 | |
| 20 | 1 | 0.25 | 0.13 | 1.31 | 0.016 | 0.0026 | 0.0370 | 0.003 | 0 | 0 | 0 | 0 | 0 | |
| 21 | 2 | 0.35 | 0.08 | 1.35 | 0.013 | 0.0011 | 0.0370 | 0.003 | 0 | 0 | 0 | 0 | 0 | |
| 22 | 2 | 0.35 | 0.08 | 1.35 | 0.013 | 0.0011 | 0.0370 | 0.003 | 0 | 0 | 0 | 0 | 0 | |
| 23 | 2 | 0.35 | 0.08 | 1.35 | 0.013 | 0.0011 | 0.0370 | 0.003 | 0 | 0 | 0 | 0 | 0 | |
| 24 | 3 | 0.29 | 0.1 | 1.25 | 0.016 | 0.0008 | 0.0390 | 0.0042 | 0 | 0 | 0 | 0 | 0 | |

16

| Multilayer steel sheet no. | Chemical constituents of steel sheet for sheet thickness middle part (mass%) | | | | | | | | | | | | | Remarks |
|---|---|---|---|---|---|---|---|---|---|---|---|---|---|---|
| | Steel no. | C | Si | Mn | P | S | sol.Al | N | Ni | Nb | Ti | Mo | B | |
| 25 | 3 | 0.29 | 0.1 | 1.25 | 0.016 | 0.0008 | 0.0390 | 0.0042 | 0 | 0 | 0 | 0 | 0 | |
| 26 | 3 | 0.29 | 0.1 | 1.25 | 0.016 | 0.0008 | 0.0390 | 0.0042 | 0 | 0 | 0 | 0 | 0 | |
| 27 | 4 | 0.53 | 0.18 | 1.37 | 0.009 | 0.0007 | 0.0440 | 0.0023 | 0 | 0 | 0 | 0 | 0 | |
| 28 | 4 | 0.53 | 0.18 | 1.37 | 0.009 | 0.0007 | 0.0440 | 0.0023 | 0 | 0 | 0 | 0 | 0 | |
| 29 | 4 | 0.53 | 0.18 | 1.37 | 0.009 | 0.0007 | 0.0440 | 0.0023 | 0 | 0 | 0 | 0 | 0 | |
| 30 | 2 | 0.35 | 0.08 | 1.35 | 0.013 | 0.0011 | 0.0370 | 0.003 | 0 | 0 | 0 | 0 | 0 | |
| 31 | 2 | 0.35 | 0.08 | 1.35 | 0.013 | 0.0011 | 0.0370 | 0.003 | 0 | 0 | 0 | 0 | 0 | |
| 32 | 2 | 0.35 | 0.08 | 1.35 | 0.013 | 0.0011 | 0.0370 | 0.003 | 0 | 0 | 0 | 0 | 0 | |
| 33 | 2 | 0.35 | 0.08 | 1.35 | 0.013 | 0.0011 | 0.0370 | 0.003 | 0 | 0 | 0 | 0 | 0 | |
| 34 | 2 | 0.35 | 0.08 | 1.35 | 0.013 | 0.0011 | 0.0370 | 0.003 | 0 | 0 | 0 | 0 | 0 | |
| 35 | 18 | 0.61 | 0.14 | 1.32 | 0.003 | 0.0004 | 0.0520 | 0.0037 | 0 | 0 | 0 | 0 | 0 | |
| 36 | 18 | 0.61 | 0.14 | 1.32 | 0.003 | 0.0004 | 0.0520 | 0.0037 | 0 | 0 | 0 | 0 | 0 | |
| 37 | 2 | 0.35 | 0.08 | 1.35 | 0.013 | 0.0011 | 0.0370 | 0.003 | 0 | 0 | 0 | 0 | 0 | |
| 38 | 2 | 0.35 | 0.08 | 1.35 | 0.013 | 0.0011 | 0.0370 | 0.003 | 0 | 0 | 0 | 0 | 0 | |
| 39 | 19 | 0.45 | 0.17 | 1.35 | 0.009 | 0.0001 | 0.0400 | 0.0028 | 0 | 0 | 0 | 0 | 0 | |
| 40 | 19 | 0.45 | 0.17 | 1.35 | 0.009 | 0.0001 | 0.0400 | 0.0028 | 0 | 0 | 0 | 0 | 0 | |
| 41 | 2 | 0.35 | 0.08 | 1.35 | 0.013 | 0.0011 | 0.0370 | 0.003 | 0 | 0 | 0 | 0 | 0 | |
| 42 | 2 | 0.35 | 0.08 | 1.35 | 0.013 | 0.0011 | 0.0370 | 0.003 | 0 | 0 | 0 | 0 | 0 | |
| 43 | 2 | 0.35 | 0.08 | 1.35 | 0.013 | 0.0011 | 0.0370 | 0.003 | 0 | 0 | 0 | 0 | 0 | |
| 44 | 2 | 0.35 | 0.08 | 1.35 | 0.013 | 0.0011 | 0.0370 | 0.003 | 0 | 0 | 0 | 0 | 0 | |

[Table A-1-2]

| Multilayer steel sheet no. | Composition of constituents of steel sheet for surface layer (mass%) | | | | | | | | | | | | Remarks |
|---|---|---|---|---|---|---|---|---|---|---|---|---|---|
| | C | Si | Mn | P | S | sol.Al | N | Ni | Nb | Ti | Mo | B | |
| 1 | 0.080 | 0.072 | 0.642 | 0.015 | 0.0028 | 0.0390 | 0.0029 | 0 | 0 | 0 | 0 | 0 | |
| 2 | 0.196 | 0.038 | 0.608 | 0.012 | 0.0011 | 0.0380 | 0.0029 | 0 | 0 | 0 | 0 | 0 | |
| 3 | 0.107 | 0.044 | 0.638 | 0.016 | 0.0010 | 0.0400 | 0.0043 | 0 | 0 | 0 | 0 | 0 | |
| 4 | 0.260 | 0.083 | 0.630 | 0.011 | 0.0008 | 0.0460 | 0.0023 | 0 | 0 | 0 | 0 | 0 | |
| 5 | 0.092 | 0.068 | 0.554 | 0.009 | 0.0006 | 0.0450 | 0.0027 | 0 | 0 | 0 | 0 | 0 | Comp. steel |
| 6 | 0.116 | 0.053 | 0.621 | 0.004 | 0.0012 | 0.0380 | 0.0022 | 0 | 0 | 0 | 0 | 0 | |
| 7 | 0.138 | 0.069 | 0.575 | 0.007 | 0.0006 | 0.0520 | 0.0037 | 0 | 0 | 0 | 0 | 0 | |
| 8 | 0.114 | 0.069 | 0.464 | 0.005 | 0.0013 | 0.0510 | 0.0032 | 0 | 0 | 0 | 0 | 0 | |
| 9 | 0.404 | 0.046 | 0.643 | 0.003 | 0.0009 | 0.0360 | 0.0024 | 0 | 0 | 0 | 0 | 0 | Comp. steel |
| 10 | 0.104 | 0.185 | 0.693 | 0.006 | 0.0002 | 0.0400 | 0.0026 | 0 | 0 | 0 | 0 | 0 | |
| 11 | 0.212 | 0.113 | 0.035 | 0.006 | 0.0003 | 0.0450 | 0.0023 | 0 | 0 | 0 | 0 | 0 | Comp. steel |
| 12 | 0.165 | 0.103 | 0.281 | 0.003 | 0.0011 | 0.0480 | 0.0026 | 0 | 0 | 0 | 0 | 0 | |
| 13 | 0.123 | 0.072 | 0.677 | 0.013 | 0.0003 | 0.0500 | 0.0039 | 0.02 | 0 | 0 | 0 | 0 | |
| 14 | 0.125 | 0.033 | 0.537 | 0.003 | 0.0002 | 0.0450 | 0.0023 | 0 | 0.031 | 0 | 0 | 0 | |
| 15 | 0.123 | 0.053 | 0.653 | 0.010 | 0.0008 | 0.0330 | 0.0032 | 0 | 0 | 0.023 | 0 | 0 | |
| 16 | 0.130 | 0.083 | 0.59 | 0.014 | 0.0007 | 0.0410 | 0.0027 | 0 | 0 | 0 | 0.04 | 0 | |
| 17 | 0.113 | 0.055 | 0.699 | 0.014 | 0.0012 | 0.0520 | 0.0028 | 0 | 0 | 0 | 0 | 0.0017 | |
| 18 | 0.103 | 0.116 | 1.245 | 0.017 | 0.0027 | 0.0380 | 0.0029 | 0 | 0 | 0 | 0 | 0 | |
| 19 | 0.101 | 0.118 | 0.655 | 0.018 | 0.0026 | 0.0390 | 0.0030 | 0 | 0 | 0 | 0 | 0 | |
| 20 | 0.145 | 0.057 | 1.061 | 0.015 | 0.0024 | 0.0360 | 0.0031 | 0 | 0 | 0 | 0 | 0 | |
| 21 | 0.312 | 0.038 | 0.662 | 0.014 | 0.0012 | 0.0390 | 0.0030 | 0 | 0 | 0 | 0 | 0 | |
| 22 | 0.308 | 0.044 | 1.134 | 0.014 | 0.0009 | 0.0360 | 0.0030 | 0 | 0 | 0 | 0 | 0 | |
| 23 | 0.301 | 0.070 | 0.594 | 0.012 | 0.0012 | 0.0350 | 0.0029 | 0 | 0 | 0 | 0 | 0 | |
| 24 | 0.220 | 0.043 | 0.563 | 0.017 | 0.0008 | 0.0370 | 0.0043 | 0 | 0 | 0 | 0 | 0 | |

(continued)

| Multilayer steel sheet no. | Composition of constituents of steel sheet for surface layer (mass%) | | | | | | | | | | | | Remarks |
|---|---|---|---|---|---|---|---|---|---|---|---|---|---|
| | C | Si | Mn | P | S | sol.Al | N | Ni | Nb | Ti | Mo | B | |
| 25 | 0.133 | 0.091 | 0.638 | 0.014 | 0.0008 | 0.0400 | 0.0041 | 0 | 0 | 0 | 0 | 0 | |
| 26 | 0.128 | 0.045 | 0.975 | 0.016 | 0.0007 | 0.0370 | 0.0041 | 0 | 0 | 0 | 0 | 0 | |
| 27 | 0.429 | 0.092 | 0.685 | 0.008 | 0.0009 | 0.0430 | 0.0023 | 0 | 0 | 0 | 0 | 0 | |
| 28 | 0.217 | 0.160 | 0.617 | 0.007 | 0.0008 | 0.0450 | 0.0022 | 0 | 0 | 0 | 0 | 0 | |
| 29 | 0.233 | 0.074 | 1.206 | 0.007 | 0.0005 | 0.0440 | 0.0023 | 0 | 0 | 0 | 0 | 0 | |
| 30 | 0.151 | 0.04 | 0.554 | 0.011 | 0.0013 | 0.0360 | 0.0031 | 0 | 0 | 0 | 0 | 0 | |
| 31 | 0.165 | 0.044 | 0.486 | 0.011 | 0.0009 | 0.0380 | 0.0031 | 0 | 0 | 0 | 0 | 0 | |
| 32 | 0.147 | 0.047 | 0.486 | 0.012 | 0.0010 | 0.0370 | 0.0031 | 0 | 0 | 0 | 0 | 0 | |
| 33 | 0.179 | 0.037 | 0.581 | 0.011 | 0.0012 | 0.0390 | 0.0031 | 0 | 0 | 0 | 0 | 0 | |
| 34 | 0.182 | 0.046 | 0.621 | 0.011 | 0.0010 | 0.0360 | 0.0029 | 0 | 0 | 0 | 0 | 0 | |
| 35 | 0.348 | 0.081 | 0.488 | 0.002 | 0.0002 | 0.0500 | 0.0037 | 0 | 0 | 0 | 0 | 0 | |
| 36 | 0.299 | 0.066 | 0.581 | 0.005 | 0.0005 | 0.0520 | 0.0036 | 0 | 0 | 0 | 0 | 0 | |
| 37 | 0.154 | 0.042 | 0.648 | 0.013 | 0.0010 | 0.0370 | 0.0029 | 0 | 0 | 0 | 0 | 0 | |
| 38 | 0.196 | 0.038 | 0.608 | 0.012 | 0.0011 | 0.0360 | 0.0030 | 0 | 0 | 0 | 0 | 0 | |
| 39 | 0.221 | 0.092 | 0.689 | 0.011 | 0.0004 | 0.0380 | 0.0027 | 0 | 0 | 0 | 0 | 0 | |
| 40 | 0.410 | 0.148 | 1.094 | 0.007 | 0.0007 | 0.0410 | 0.0028 | 0 | 0 | 0 | 0 | 0 | |
| 41 | 0.196 | 0.038 | 0.608 | 0.012 | 0.0011 | 0.0380 | 0.0029 | 0 | 0 | 0 | 0 | 0 | |
| 42 | 0.196 | 0.038 | 0.608 | 0.012 | 0.0011 | 0.0380 | 0.0029 | 0 | 0 | 0 | 0 | 0 | |
| 43 | 0.196 | 0.038 | 0.608 | 0.012 | 0.0011 | 0.0380 | 0.0029 | 0 | 0 | 0 | 0 | 0 | |
| 44 | 0.196 | 0.038 | 0.608 | 0.012 | 0.0011 | 0.0380 | 0.0029 | 0 | 0 | 0 | 0 | 0 | |

[Table A-2-1]

| Multilayer steel sheet no. | Manufacturing condition no. | Heat treatment before hot rolling | | Rough rolling | | | Hot rolling | | Cold rolling | Heat treatment at hot stamping | | | | | Plating | Sheet thickness (mm) |
|---|---|---|---|---|---|---|---|---|---|---|---|---|---|---|---|---|
| | | Heating temp. (°C) | Holding time (min) | Rolling temp. (°C) | Rate of reduction of sheet thickness (%) | No. of rolling operations (times) | Finish rolling temp. (°C) | Coiling temp. (°C) | Rolling rate (%) | Heating rate (°C/s) | Heating temp. (°C) | Average cooling rate (°C/s) (more than 400°C) | Average cooling rate (°C/s) (400°C or less) | Tempering temp. (°C) | | |
| 1 | 1 | 1317 | 115 | 1159 | 39 | 3 | 892 | 721 | 58 | 37 | 847 | 65 | 58 | - | None | 1.2 |
| 2 | 2 | 1256 | 96 | 1161 | 31 | 3 | 848 | 699 | 61 | 39 | 848 | 102 | 96 | - | None | 1.1 |
| 3 | 3 | 1301 | 86 | 1135 | 24 | 3 | 892 | 674 | 45 | 51 | 882 | 78 | 71 | - | None | 1.5 |
| 4 | 4 | 1279 | 112 | 1151 | 39 | 3 | 910 | 651 | 53 | 57 | 916 | 95 | 88 | - | None | 1.3 |
| 5 | 5 | 1276 | 118 | 1140 | 35 | 3 | 882 | 569 | 55 | 56 | 849 | 94 | 89 | - | None | 1.3 |
| 6 | 6 | 1307 | 128 | 1158 | 35 | 3 | 879 | 675 | 61 | 71 | 891 | 68 | 59 | - | None | 1.1 |
| 7 | 7 | 1329 | 102 | 1194 | 43 | 3 | 889 | 688 | 48 | 63 | 822 | 84 | 78 | - | None | 1.5 |
| 8 | 8 | 1315 | 122 | 1129 | 44 | 3 | 904 | 698 | 40 | 50 | 838 | 84 | 79 | - | None | 1.7 |
| 9 | 9 | 1294 | 96 | 1165 | 25 | 3 | 901 | 705 | 63 | 26 | 872 | 72 | 63 | - | None | 1.0 |
| 10 | 10 | 1319 | 109 | 1135 | 35 | 3 | 838 | 574 | 48 | 44 | 836 | 75 | 68 | - | None | 1.5 |
| 11 | 11 | 1327 | 109 | 1125 | 30 | 3 | 885 | 693 | 54 | 58 | 903 | 100 | 93 | - | None | 1.3 |
| 12 | 12 | 1251 | 106 | 1181 | 38 | 3 | 849 | 527 | 48 | 62 | 873 | 79 | 73 | - | None | 1.5 |
| 13 | 13 | 1284 | 86 | 1186 | 28 | 3 | 870 | 659 | 44 | 25 | 898 | 99 | 90 | - | None | 1.6 |
| 14 | 14 | 1262 | 83 | 1134 | 42 | 3 | 918 | 632 | 57 | 39 | 826 | 71 | 63 | - | None | 1.2 |
| 15 | 15 | 1295 | 96 | 1163 | 39 | 3 | 848 | 694 | 41 | 26 | 873 | 85 | 75 | - | None | 1.7 |
| 16 | 16 | 1252 | 125 | 1145 | 37 | 3 | 835 | 693 | 52 | 32 | 883 | 102 | 93 | - | None | 1.3 |
| 17 | 17 | 1337 | 122 | 1135 | 45 | 3 | 835 | 730 | 39 | 68 | 869 | 115 | 110 | - | None | 1.7 |
| 18 | 18 | 1318 | 118 | 1146 | 37 | 3 | 843 | 672 | 38 | 48 | 925 | 91 | 85 | - | None | 1.7 |
| 19 | 19 | 1344 | 115 | 1163 | 44 | 3 | 862 | 557 | 56 | 22 | 904 | 70 | 61 | - | None | 1.2 |

(continued)

| Multilayer steel sheet no. | Manufacturing condition no. | Heat treatment before hot rolling | | Rough rolling | | | Hot rolling | | Cold rolling | Heat treatment at hot stamping | | | | | Plating | Sheet thickness (mm) |
|---|---|---|---|---|---|---|---|---|---|---|---|---|---|---|---|---|
| | | Heating temp. (°C) | Holding time (min) | Rolling temp. (°C) | Rate of reduction of sheet thickness (%) | No. of rolling operations (times) | Finish rolling temp. (°C) | Coiling temp. (°C) | Rolling rate (%) | Heating rate (°C/s) | Heating temp. (°C) | Average cooling rate (°C/s) (more than 400°C) | Average cooling rate (°C/s) (400°C or less) | Tempering temp. (°C) | | |
| 20 | 20 | 1336 | 96 | 1129 | 44 | 3 | 919 | 648 | 45 | 21 | 850 | 101 | 91 | - | None | 1.5 |
| 21 | 21 | 1279 | 70 | 1153 | 46 | 3 | 840 | 702 | 58 | 19 | 826 | 100 | 92 | - | None | 1.2 |
| 22 | 22 | 1275 | 118 | 1164 | 36 | 3 | 849 | 630 | 55 | 25 | 900 | 97 | 87 | - | None | 1.3 |
| 23 | 23 | 1286 | 83 | 1136 | 42 | 3 | 904 | 594 | 47 | 66 | 917 | 93 | 85 | - | None | 1.5 |
| 24 | 24 | 1262 | 102 | 1166 | 33 | 3 | 909 | 626 | 49 | 68 | 889 | 76 | 70 | - | None | 1.4 |
| 25 | 25 | 1274 | 102 | 1142 | 39 | 3 | 896 | 645 | 52 | 60 | 934 | 95 | 87 | - | None | 1.3 |

[Table A-2-2]

| Multilayer steel sheet no. | Manufacturing condition no. | Heat treatment before hot rolling | | Rough rolling | | | Hot rolling | | Cold rolling | Heat treatment at hot stamping | | | | | Plating | Sheet thickness (mm) |
| | | Heating temp. (°C) | Holding time (min) | Rolling temp. (°C) | Rate of reduction of sheet thickness (%) | No. of roll-ing opera-tions (times) | Finish rolling temp. (°C) | Coiling temp. (°C) | Rolling rate (%) | Heating rate (°C/s) | Heating temp. (°C) | Average cooling rate (°C/s) (more than 400°C) | Average cooling rate (°C/s) (400°C or less) | Tempering temp. (°C) | | |
|---|---|---|---|---|---|---|---|---|---|---|---|---|---|---|---|---|
| 26 | 26 | 1308 | 128 | 1135 | 21 | 3 | 907 | 713 | 41 | 20 | 881 | 89 | 82 | - | None | 1.7 |
| 27 | 27 | 1315 | 106 | 1181 | 26 | 3 | 843 | 696 | 42 | 66 | 886 | 93 | 88 | - | None | 1.6 |
| 28 | 28 | 1255 | 77 | 1189 | 23 | 3 | 842 | 647 | 51 | 27 | 896 | 109 | 101 | - | None | 1.4 |
| 29 | 29 | 1291 | 90 | 1141 | 38 | 3 | 888 | 686 | 53 | 40 | 855 | 84 | 74 | - | None | 1.3 |
| 30 | 30 | 992 | 118 | 980 | 34 | 3 | 896 | 682 | 47 | 48 | 892 | 84 | 78 | - | None | 1.5 |
| 31 | 31 | 1378 | 90 | 1146 | 46 | 3 | 854 | 661 | 55 | 69 | 907 | 67 | 60 | - | None | 1.3 |
| 32 | 32 | 1132 | 16 | 1122 | 34 | 3 | 876 | 615 | 41 | 70 | 903 | 81 | 72 | - | None | 1.7 |
| 33 | 33 | 1123 | 73 | 1113 | 22 | 3 | 834 | 550 | 46 | 68 | 912 | 79 | 71 | - | None | 1.5 |
| 34 | 34 | 1329 | 96 | 1128 | 27 | 3 | 879 | 675 | 0 | 46 | 914 | 74 | 68 | - | None | 2.8 |
| 35 | 35 | 1317 | 122 | 1141 | 46 | 3 | 844 | 545 | 58 | 53 | 919 | 93 | 87 | 267 | None | 1.2 |
| 36 | 36 | 1288 | 74 | 1172 | 34 | 3 | 875 | 533 | 47 | 49 | 926 | 98 | 93 | 274 | Yes | 1.5 |
| 37 | 37 | 1292 | 80 | 1129 | 39 | 3 | 849 | 559 | 45 | 28 | 847 | 80 | 71 | - | Yes | 1.5 |
| 38 | 38 | 1249 | 92 | 1120 | 40 | 3 | 840 | 678 | 61 | 32 | 852 | 101 | 91 | - | None | 1.1 |
| 39 | 39 | 1245 | 91 | 1169 | 36 | 3 | 883 | 671 | 47 | 64 | 848 | 86 | 76 | - | None | 1.5 |
| 40 | 40 | 1249 | 62 | 1145 | 20 | 3 | 881 | 703 | 59 | 30 | 868 | 115 | 110 | - | None | 1.1 |
| 41 | 41 | 1337 | 81 | 1007 | 41 | 3 | 840 | 557 | 58 | 73 | 917 | 109 | 101 | - | None | 1.4 |
| 42 | 42 | 1336 | 77 | 1151 | 3 | 2 | 843 | 594 | 52 | 31 | 934 | 77 | 72 | - | None | 1.7 |
| 43 | 43 | 1275 | 79 | 1147 | 35 | 1 | 896 | 696 | 51 | 68 | 903 | 86 | 78 | - | None | 1.6 |
| 44 | 44 | 1308 | 62 | 1121 | 37 | 3 | 843 | 702 | 49 | 65 | 892 | 100 | 94 | - | None | 1.6 |

[Table A-3]

| Stamped body no. | Multilayer steel sheet no. | Manufacturing condition no. | Metal structures | | Mechanical properties | | | Remarks |
|---|---|---|---|---|---|---|---|---|
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Tensile strength (MPa) | Max. bending angle (°) | Hydrogen embrittlement resistance | |
| 1A | 1 | 1 | 518 | 48 | 1533 | 105.4 | Good | Inv. ex. |
| 2A | 2 | 2 | 639 | 35 | 1927 | 109 | Good | Inv. ex. |
| 3A | 3 | 3 | 717 | 26 | 2138 | 110.1 | Good | Inv. ex. |
| 4A | 4 | 4 | 795 | 27 | 2330 | 95.9 | Good | Inv. ex. |
| 5A | 5 | 5 | 391 | 32 | 1163 | 109.9 | Good | Comp. ex. |
| 6A | 6 | 6 | 583 | 43 | 1718 | 105.4 | Good | Inv. ex. |
| 7A | 7 | 7 | 603 | 42 | 1839 | 110 | Good | Inv. ex. |
| 8A | 8 | 8 | 684 | 31 | 2026 | 106.4 | Good | Inv. ex. |
| 9A | 9 | 9 | 893 | 21 | 2676 | 55.5 | Good | Comp. ex. |
| 10A | 10 | 10 | 636 | 36 | 1918 | 101.5 | Good | Inv. ex. |
| 11A | 11 | 11 | 441 | 35 | 1455 | 108.8 | Good | Comp. ex. |
| 12A | 12 | 12 | 647 | 31 | 1925 | 108.3 | Good | Inv. ex. |
| 13A | 13 | 13 | 649 | 33 | 1905 | 101.5 | Good | Inv. ex. |
| 14A | 14 | 14 | 635 | 38 | 1912 | 111.3 | Good | Inv. ex. |
| 15A | 15 | 15 | 645 | 34 | 1925 | 98.7 | Good | Inv. ex. |
| 16A | 16 | 16 | 653 | 36 | 1924 | 96.4 | Good | Inv. ex. |
| 17A | 17 | 17 | 654 | 31 | 1935 | 100.7 | Good | Inv. ex. |
| 18A | 18 | 18 | 507 | 47 | 1537 | 104.1 | Good | Inv. ex. |
| 19A | 19 | 19 | 525 | 48 | 1522 | 103.9 | Good | Inv. ex. |

EP 3 584 338 A1

(continued)

| Stamped body no. | Multilayer steel sheet no. | Manufacturing condition no. | Hardness of middle part in sheet thickness (Hv) | Metal structures | Mechanical properties | | | Remarks |
|---|---|---|---|---|---|---|---|---|
| | | | | Area rate (%) of total of crystal grains with maximum difference of crystal orientation inside large angle grain boundaries of 1° or less and crystal grains with maximum difference of 8° to 15° of crystal orientation | Tensile strength (MPa) | Max. bending angle (°) | Hydrogen embrittlement resistance | |
| 20A | 20 | 20 | 504 | 46 | 1551 | 105.3 | Good | Inv. ex. |
| 21A | 21 | 21 | 639 | 32 | 1928 | 110.4 | Good | Inv. ex. |
| 22A | 22 | 22 | 642 | 34 | 1934 | 109.4 | Good | Inv. ex. |
| 23A | 23 | 23 | 654 | 35 | 1916 | 111.2 | Good | Inv. ex. |
| 24A | 24 | 24 | 721 | 25 | 2121 | 109.8 | Good | Inv. ex. |
| 25A | 25 | 25 | 723 | 27 | 2147 | 110.2 | Good | Inv. ex. |
| 26A | 26 | 26 | 718 | 24 | 2139 | 108.7 | Good | Inv. ex. |
| 27A | 27 | 27 | 782 | 29 | 2586 | 94.8 | Good | Inv. ex. |
| 28A | 28 | 28 | 788 | 31 | 2580 | 95.2 | Good | Inv. ex. |
| 29A | 29 | 29 | 770 | 27 | 2577 | 96.1 | Good | Inv. ex. |
| 30A | 30 | 30 | 649 | 13 | 1930 | 61.5 | Poor | Comp. ex. |
| 31A | 31 | 31 | 655 | 85 | 1909 | 66.6 | Good | Comp. ex. |
| 32A | 32 | 32 | 651 | 12 | 1929 | 68.2 | Poor | Comp. ex. |
| 33A | 33 | 33 | 636 | 35 | 1932 | 95.1 | Good | Inv. ex. |
| 34A | 34 | 34 | 639 | 32 | 1908 | 95.2 | Good | Inv. ex. |
| 35A | 35 | 35 | 726 | 29 | 2167 | 106 | Good | Inv. ex. |
| 36A | 36 | 36 | 729 | 25 | 2142 | 103 | Good | Inv. ex. |
| 37A | 37 | 37 | 640 | 34 | 1863 | 122.7 | Good | Inv. ex. |
| 38A | 38 | 38 | 649 | 34 | 2142 | 98.1 | Good | Inv. ex. |

(continued)

| Stamped body no. | Multilayer steel sheet no. | Manufacturing condition no. | Metal structures | | Mechanical properties | | | Remarks |
|---|---|---|---|---|---|---|---|---|
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Tensile strength (MPa) | Max. bending angle (°) | Hydrogen embrittlement resistance | |
| 39A | 39 | 39 | 722 | 25 | 2139 | 109.1 | Good | Inv. ex. |
| 40A | 40 | 40 | 782 | 36 | 2181 | 90.1 | Good | Inv. ex. |
| 41A | 41 | 41 | 632 | 11 | 2086 | 63.2 | Poor | Comp. ex. |
| 42A | 42 | 42 | 640 | 12 | 2112 | 59.6 | Poor | Comp. ex. |
| 43A | 43 | 43 | 637 | 13 | 2102 | 57.9 | Poor | Comp. ex. |
| 44A | 44 | 44 | 628 | 45 | 2072 | 108.4 | Good | Inv. ex. |

[Manufacturing Example B]

Steel sheets for sheet thickness middle part having the chemical compositions shown in Table B-1-1 to Table B-1-2 were ground down at their surfaces to remove the surface oxides. After that, the respective steel sheets for sheet thickness middle part were welded with steel sheets for surface layer having the chemical compositions shown in Table B-1-3 to Table B-1-4 at both surfaces or single surfaces by arc welding to fabricate the Nos. 1 to 52 multilayer steel sheets for hot stamped body. In the tables, fields in which the constituents are indicated as 0 show that the corresponding constituents are not intentionally added.

The sheet thickness of the total of the steel sheet for surface layer and the steel sheet for sheet thickness middle part after arc welding was 200 mm to 300 mm and the thickness of the steel sheet for surface layer was 1/3 or so of the thickness of the steel sheet for sheet thickness middle part (in case of single side, 1/4 or so). The No. 32 multilayer steel sheet was steel with steel sheet for surface layer welded to only one side. Among the Nos. 1 to 52 multilayer steel sheets of Table B-1-1 to Table B-1-3, ones where the steel sheet for sheet thickness middle part did not satisfy the requirements of composition of the middle part in sheet thickness of the hot stamped body according to the present invention are indicated as "comparative steels" in the remarks columns.

The Nos. 1 to 52 multilayer steel sheets were respectively treated under the conditions of the Nos. 1 to 52 manufacturing conditions shown in Table B-2-1 to Table B-2-2 by heat treatment before hot rolling, rough rolling, hot rolling, and cold rolling to obtain steel sheets. Next, the steel sheets were heat treated as shown in Table B-2-1 and Table B-2-2 (in the tables, "heat treatment of hot stamped body") for hot stamping to manufacture the Nos. 1B to 52B hot stamped bodies ("stamped bodies" of Table B-3-1 and Table B-3-2). Further, the Nos. 30B and 31B hot stamped bodies were coated on a hot dip coating line at the surfaces of the matrix steel sheets with 120 to 160 g/m$^2$ amounts of aluminum. Further, the items in Table B-2-1 to Table B-2-2 correspond to the items in Table A-2-1 to Table A-2-2. Further, in the tables, the fields with the notations "-" indicate no corresponding treatment performed.

Table B-3-1 and Table B-3-2 show the metal structures and characteristics of the Nos. 1B to 52B hot stamped bodies. The constituents obtained by analyzing the positions of 1/2 of the sheet thicknesses of the samples taken from the hot stamped bodies and positions of 20 μm from the surfaces of the softened layers were equivalent to the constituents of the steel sheets for sheet thickness middle part and steel sheets for surface layer of the Nos. 1 to 52 multilayer steel sheets of Table B-1-1 to Table B-1-4.

The metal structures of the hot stamped steel sheets were measured by the above-mentioned method. The hardness of the steel sheet for sheet thickness middle part forming the middle part in sheet thickness and the area rate of the total of the crystal grains with a maximum crystal orientation difference inside the regions surrounded by grain boundaries of 15° or more of 1° or less and the crystal grains with a crystal orientation difference of 8° to 15° in the metal structures from the surface of the steel sheet for surface layer forming the softened layer to 1/2 of the thickness of that softened layer were calculated. The calculated values of the area rate are shown in the items "area rate (%) of total of crystal grains with maximum crystal orientation difference inside large angle grain boundaries of 1° or less and crystal grains with maximum crystal orientation difference of 8° to 15°" of Tables B-3-1 to Table B-3-2.

The hot stamped bodies were subjected to tensile tests. The results are shown in Table B-3-1 to Table B-3-2. The tensile tests were performed by fabricating No. 5 test pieces described in JIS Z 2201 and testing them by the method described in JIS Z 2241.

The hydrogen embrittlement resistance of the hot stamped body, in the same way as Manufacturing Example A, was evaluated using a test piece cut out from the stamped body. That is, a test piece of a sheet thickness of 1.2 mm×width 6 mm×length 68 mm was cut out from the stamped body, given a strain corresponding to the yield stress in a four-point bending test, then immersed in pH3 hydrochloric acid for 100 hours and evaluated for hydrogen embrittlement resistance by the presence of any cracks. The case of no cracks was indicated as passing ("Good") and the case of cracks was evaluated as failing ("Poor").

For the purpose of evaluating the impact resistance of the hot stamped body, the body was evaluated based on the VDA standard (VDA238-100) prescribed by the German Association of the Automotive Industry under the same measurement conditions as Manufacturing Example A. In the present invention, the displacement at the time of maximum load obtained in the bending test was converted to angle by the VDA standard to find maximum bending angle and thereby evaluate the impact resistance of the hot stamped body.

The scattering in hardness of the stamped bodies was evaluated by the results of measurement of the hardness at the cross-section vertical to the longitudinal direction of the stamped bodies. On a line passing through the middle of sheet thickness of a total cross-sectional region and parallel to the surface of the stamped body, the Vickers hardness was measured using a Vickers hardness tester by a load of 1 kgf and 1 mm pitches. For the Nos. 1B to 52B hot stamped bodies, the average values of the hardnesses measured and the minimum hardnesses are shown in Table B-3-1 and Table B-3-2 in the items "average cross-sectional hardness" and "minimum hardness". The "average cross-sectional hardness-minimum hardness" is the difference between the average cross-sectional hardness and minimum hardness. Further, for the Nos. 1B to 52B hot stamped bodies, cases with no regions with hardnesses falling more than 100HV from the average values were indicated as "passing".

If the tensile strength is 1500 MPa or more, the maximum bending angle (°) was 90(°) or more, and the hydrogen embrittlement resistance was a passing level, it was judged that the impact resistance and hydrogen embrittlement resistance were excellent and the case was indicated as an "invention example". If even one of the three aspects of performance is not satisfied, the case was indicated as a "comparative example".

In each hot stamped body of the invention examples, the area rate of the total of the crystal grains with a maximum crystal orientation difference inside the regions surrounded by grain boundaries of 15° or more of 1° or less and the crystal grains with a crystal orientation difference of 8° to 15° in the metal structures from the surface of the steel sheet for surface layer to 1/2 of the thickness was 20% to less than 50%. Further, each hot stamped body of the invention examples was excellent in tensile strength, bendability, and hydrogen embrittlement resistance.

As opposed to this, the No. 5B hot stamped body was low in carbon content at the steel sheet for sheet thickness middle part, so the hardness of the middle part in sheet thickness became insufficient and the tensile strength became insufficient. The No. 9B hot stamped body was excessive in carbon content of steel sheet for sheet thickness middle part, so the hardness of the middle part in sheet thickness also became excessive and the targeted bendability could not be obtained. Further, the No. 11B hot stamped body was sparse in Mn content at the steel sheet for sheet thickness middle part, so became large in scattering in hardness of the cross-section of the stamped body.

The Nos. 25B to 27B hot stamped bodies are comparative examples produced using the multilayer steel sheets for hot stamped body to which the desirable heat treatment had not been applied before the hot stamping process. The No. 25B hot stamped body was too low in heat treatment temperature before the hot stamping process, so the soft structures and metal structures with intermediate hardnesses insufficiently grew, the effect of surface properties of the hot stamped body and effect of the transitional part from the middle part in sheet thickness to the softened layer could not be eliminated, and excellent bendability could not be obtained.

Further, the No. 26B hot stamped body was excessively high in heat treatment temperature before the hot stamping process, so the soft structures and metal structures with intermediate hardnesses excessively grew, the difference in hardness between the softened layer and the middle part in sheet thickness became too large, and the effect of reducing the sharp gradient of hardness in the sheet thickness direction occurring at the time of bending deformation could not be obtained. For this reason, the No. 26B hot stamped body could not be given excellent bendability.

The No. 27B hot stamped body was too short in heat treatment time before the hot stamping process, so in the metal structures of the softened layer from the surface of the softened layer to 1/2 of the thickness, the soft structures and metal structures with intermediate hardnesses insufficiently grew and the targeted bendability could not be obtained.

The No. 49B hot stamped body was low in rolling temperature of the rough rolling. Further, the No. 50B hot stamped body was low in sheet thickness reduction rate of the rough rolling. Further, the No. 51B hot stamped body was low in number of rolling operations under conditions of a time between passes of 3 seconds or more. These hot stamped bodies were not manufactured under the suitable rough rolling conditions, so the soft structures and metal structures with intermediate hardnesses insufficiently grew, it was not possible to ease the strain occurring due to bending deformation, and the targeted bendability could not be obtained.

The No. 52B hot stamped body is a steel sheet controlled in casting rate to 6 ton/min or more in the continuous casting process of steel sheet for surface layer. It can raise the area rate of the total of the crystal grains with a maximum crystal orientation difference inside the regions surrounded by grain boundaries of 15° or more of 1° or less and the crystal grains with a crystal orientation difference of 8° to 15° in the metal structures from the surface of the steel sheet for surface layer to 1/2 of the thickness and is excellent in bendability.

[Table B-1-1]

| Multilayer steel sheet no. | Chemical constituents of steel sheet for sheet thickness middle part (mass%) | | | | | | | | | | | | Remarks |
|---|---|---|---|---|---|---|---|---|---|---|---|---|---|
| | C | Si | Mn | P | S | sol.A1 | N | Ni | Nb | Ti | Mo | B | |
| 1 | 0.19 | 0.35 | 2.93 | 0.0162 | 0.0032 | 0.0230 | 0.0052 | 0 | 0 | 0 | 0 | 0 | |
| 2 | 0.36 | 0.11 | 2.27 | 0.0096 | 0.0037 | 0.0550 | 0.005 | 0 | 0 | 0 | 0 | 0 | |
| 3 | 0.29 | 0.43 | 2.55 | 0.0141 | 0.0026 | 0.0550 | 0.0068 | 0 | 0 | 0 | 0 | 0 | |
| 4 | 0.5 | 0.07 | 2.64 | 0.0137 | 0.0006 | 0.0460 | 0.0019 | 0 | 0 | 0 | 0 | 0 | |
| 5 | 0.15 | 0.40 | 1.98 | 0.0163 | 0.0032 | 0.0360 | 0.0059 | 0 | 0 | 0 | 0 | 0 | Comp. steel |
| 6 | 0.21 | 0.23 | 2.94 | 0.0124 | 0.0048 | 0.0260 | 0.0052 | 0 | 0 | 0 | 0 | 0 | |
| 7 | 0.22 | 0.14 | 1.56 | 0.0075 | 0.0048 | 0.0540 | 0.0058 | 0 | 0 | 0 | 0 | 0 | |
| 8 | 0.25 | 0.24 | 2.45 | 0.0141 | 0.005 | 0.0210 | 0.0069 | 0 | 0 | 0 | 0 | 0 | |
| 9 | 0.77 | 0.25 | 2.51 | 0.0093 | 0.0054 | 0.0240 | 0.0022 | 0 | 0 | 0 | 0 | 0 | Comp. steel |
| 10 | 0.23 | 0.15 | 2.83 | 0.0115 | 0.002 | 0.0340 | 0.0026 | 0 | 0 | 0 | 0 | 0 | |
| 11 | 0.34 | 0.32 | 1.42 | 0.0138 | 0.0056 | 0.0340 | 0.0023 | 0 | 0 | 0 | 0 | 0 | Comp. steel |
| 12 | 0.36 | 0.36 | 2.37 | 0.0107 | 0.0022 | 0.0460 | 0.0034 | 0 | 0 | 0 | 0 | 0 | |
| 13 | 0.26 | 0.40 | 1.99 | 0.0174 | 0.0054 | 0.0310 | 0.0027 | 0.10 | 0 | 0 | 0 | 0 | |
| 14 | 0.27 | 0.33 | 2.96 | 0.0144 | 0.002 | 0.0270 | 0.0066 | 0 | 0 | 0 | 0 | 0.0020 | |
| 15 | 0.26 | 0.08 | 2.01 | 0.015 | 0.0056 | 0.0520 | 0.0028 | 0 | 0.040 | 0.020 | 0 | 0.0015 | |
| 16 | 0.23 | 0.32 | 1.53 | 0.0176 | 0.0054 | 0.0280 | 0.0057 | 0 | 0 | 0 | 0 | 0 | |
| 17 | 0.23 | 0.32 | 2.07 | 0.0048 | 0.0057 | 0.0480 | 0.0063 | 0 | 0 | 0 | 0 | 0 | |
| 18 | 0.39 | 0.12 | 2.32 | 0.0158 | 0.0055 | 0.0520 | 0.005 | 0 | 0 | 0 | 0 | 0 | |
| 19 | 0.33 | 0.40 | 2.20 | 0.0123 | 0.0046 | 0.0520 | 0.0047 | 0 | 0 | 0 | 0 | 0 | |
| 20 | 0.37 | 0.44 | 2.49 | 0.0148 | 0.0053 | 0.0380 | 0.0051 | 0 | 0 | 0 | 0 | 0 | |
| 21 | 0.30 | 0.45 | 1.70 | 0.0072 | 0.0051 | 0.0290 | 0.0046 | 0 | 0 | 0 | 0 | 0 | |
| 22 | 0.58 | 0.18 | 2.32 | 0.0109 | 0.0059 | 0.0420 | 0.0042 | 0 | 0.020 | 0.020 | 0 | 0.0020 | |
| 23 | 0.56 | 0.2 | 2.80 | 0.0154 | 0.0038 | 0.0440 | 0.0048 | 0 | 0 | 0 | 0 | 0 | |
| 24 | 0.53 | 0.11 | 1.96 | 0.0103 | 0.005 | 0.0230 | 0.0015 | 0 | 0 | 0 | 0 | 0 | |

(continued)

| Multilayer steel sheet no. | Chemical constituents of steel sheet for sheet thickness middle part (mass%) | | | | | | | | | | | | Remarks |
|---|---|---|---|---|---|---|---|---|---|---|---|---|---|
| | C | Si | Mn | P | S | sol.A1 | N | Ni | Nb | Ti | Mo | B | |
| 25 | 0.38 | 0.27 | 1.98 | 0.0045 | 0.0042 | 0.0500 | 0.0031 | 0 | 0 | 0 | 0 | 0 | |
| 26 | 0.34 | 0.34 | 2.62 | 0.0098 | 0.0035 | 0.0340 | 0.003 | 0 | 0 | 0 | 0 | 0 | |
| 27 | 0.35 | 0.34 | 1.76 | 0.0069 | 0.0056 | 0.0240 | 0.006 | 0 | 0.050 | 0.030 | 0 | 0.0015 | |
| 28 | 0.34 | 0.14 | 2.34 | 0.008 | 0.0011 | 0.0350 | 0.0035 | 0 | 0 | 0 | 0 | 0 | |
| 29 | 0.63 | 0.22 | 2.45 | 0.0135 | 0.0058 | 0.0240 | 0.006 | 0 | 0 | 0 | 0 | 0 | |
| 30 | 0.66 | 0.11 | 2.93 | 0.0151 | 0.004 | 0.0240 | 0.0065 | 0 | 0 | 0 | 0 | 0 | |

[Table B-1-2]

Chemical constituents of steel sheet for sheet thickness middle part (mass%)

| Multilayer steel sheet no. | C | Si | Mn | P | S | sol.Al | N | Ni | Nb | Ti | Mo | B | Remarks |
|---|---|---|---|---|---|---|---|---|---|---|---|---|---|
| 31 | 0.37 | 0.37 | 2.12 | 0.0165 | 0.0031 | 0.0590 | 0.0036 | 0 | 0 | 0 | 0 | 0 | |
| 32 | 0.33 | 0.13 | 1.99 | 0.0071 | 0.0028 | 0.0560 | 0.0025 | 0 | 0 | 0 | 0 | 0 | |
| 33 | 0.31 | 0.22 | 2.23 | 0.093 | 0.006 | 2.4180 | 0.0069 | 0 | 0 | 0 | 0 | 0 | |
| 34 | 0.28 | 0.3 | 2.83 | 0.084 | 0.004 | 0.0540 | 0.0024 | 2.40 | 0 | 0 | 0 | 0 | |
| 35 | 0.25 | 0.43 | 2.45 | 0.099 | 0.003 | 0.0540 | 0.0041 | 0.06 | 0 | 0 | 0 | 0 | |
| 36 | 0.34 | 0.39 | 1.73 | 0.071 | 0.002 | 0.0410 | 0.0049 | 0 | 0.120 | 0 | 0 | 0 | |
| 37 | 0.4 | 0.42 | 1.87 | 0.127 | 0.002 | 0.0640 | 0.0045 | 0 | 0 | 0.150 | 0 | 0 | |
| 38 | 0.28 | 0.21 | 2.19 | 0.076 | 0.003 | 0.0490 | 0.0022 | 0 | 0 | 0 | 0.500 | 0 | |
| 39 | 0.36 | 0.37 | 2.74 | 0.068 | 0.005 | 0.0630 | 0.0048 | 0 | 0 | 0 | 0.200 | 0 | |
| 40 | 0.38 | 0.48 | 2.45 | 0.082 | 0.006 | 0.0550 | 0.0071 | 0 | 0 | 0 | 0 | 0.0080 | |
| 41 | 0.31 | 0.20 | 2.00 | 0.107 | 0.002 | 0.0420 | 0.0066 | 0 | 0 | 0 | 0 | 0 | |
| 42 | 0.36 | 0.33 | 2.16 | 0.057 | 0.004 | 0.0350 | 0.0032 | 0 | 0 | 0 | 0 | 0 | |
| 43 | 0.32 | 0.30 | 2.52 | 0.119 | 0.005 | 0.0590 | 0.004 | 0 | 0 | 0 | 0 | 0 | |
| 44 | 0.31 | 0.28 | 2.76 | 0.076 | 0.004 | 0.0520 | 0.0022 | 0 | 0 | 0 | 0 | 0 | |
| 45 | 0.27 | 0.19 | 2.18 | 0.107 | 0.004 | 0.0470 | 0.0026 | 0 | 0 | 0 | 0 | 0 | |
| 46 | 0.37 | 0.48 | 2.88 | 0.082 | 0.006 | 0.0520 | 0.0029 | 0 | 0 | 0 | 0 | 0 | |
| 47 | 0.25 | 0.25 | 2.7 | 0.087 | 0.003 | 0.0580 | 0.0066 | 0 | 0 | 0 | 0 | 0 | |
| 48 | 0.34 | 0.18 | 2.31 | 0.097 | 0.004 | 0.0340 | 0.0065 | 0 | 0 | 0 | 0 | 0 | |
| 49 | 0.36 | 0.11 | 2.27 | 0.0096 | 0.0037 | 0.0550 | 0.005 | 0 | 0 | 0 | 0 | 0 | |
| 50 | 0.36 | 0.11 | 2.27 | 0.0096 | 0.0037 | 0.0550 | 0.005 | 0 | 0 | 0 | 0 | 0 | |
| 51 | 0.36 | 0.11 | 2.27 | 0.0096 | 0.0037 | 0.0550 | 0.005 | 0 | 0 | 0 | 0 | 0 | |
| 52 | 0.36 | 0.11 | 2.27 | 0.0096 | 0.0037 | 0.0550 | 0.005 | 0 | 0 | 0 | 0 | 0 | |

[Table B-1-3]

| Multilayer steel sheet no. | Composition of constituents of steel sheet for surface layer (mass%) | | | | | | | | | | | | Thickness of steel sheet for surface layer (mm) | Remarks |
|---|---|---|---|---|---|---|---|---|---|---|---|---|---|---|
| | C | Si | Mn | P | S | sol.Al | N | Ni | Nb | Ti | Mo | B | | |
| 1 | 0.072 | 0.193 | 1.940 | 0.062 | 0.0040 | 0.0200 | 0.0049 | 0 | 0 | 0 | 0 | 0 | 96 | |
| 2 | 0.202 | 0.052 | 1.710 | 0.12 | 0.0005 | 0.030 | 0.0057 | 0 | 0 | 0 | 0 | 0 | 91 | |
| 3 | 0.108 | 0.189 | 1.060 | 0.2 | 0.0005 | 0.0390 | 0.0022 | 0 | 0 | 0 | 0 | 0 | 95 | |
| 4 | 0.247 | 0.032 | 1.750 | 0.145 | 0.0040 | 0.0330 | 0.0024 | 0 | 0 | 0 | 0 | 0 | 96 | |
| 5 | 0.084 | 0.208 | 1.850 | 0.043 | 0.0026 | 0.0210 | 0.0049 | 0 | 0 | 0 | 0 | 0 | 78 | Comp. steel |
| 6 | 0.114 | 0.11 | 1.820 | 0.112 | 0.0030 | 0.0350 | 0.0051 | 0 | 0 | 0 | 0 | 0 | 82 | |
| 7 | 0.132 | 0.069 | 1.870 | 0.052 | 0.0022 | 0.0340 | 0.0026 | 0 | 0 | 0 | 0 | 0 | 84 | |
| 8 | 0.112 | 0.11 | 1.650 | 0.096 | 0.0017 | 0.0360 | 0.006 | 0 | 0 | 0 | 0 | 0 | 106 | |
| 9 | 0.364 | 0.105 | 2.360 | 0.110 | 0.0037 | 0.0430 | 0.0036 | 0 | 0 | 0 | 0 | 0 | 85 | Comp. steel |
| 10 | 0.101 | 0.084 | 1.370 | 0.119 | 0.0008 | 0.0360 | 0.0063 | 0 | 0 | 0 | 0 | 0 | 85 | |
| 11 | 0.202 | 0.157 | 1.290 | 0.065 | 0.0026 | 0.0300 | 0.0024 | 0 | 0 | 0 | 0 | 0 | 103 | Comp. steel |
| 12 | 0.18 | 0.169 | 2.170 | 0.162 | 0.0025 | 0.0490 | 0.0055 | 0 | 0 | 0 | 0 | 0 | 75 | |
| 13 | 0.127 | 0.192 | 2.060 | 0.177 | 0.0013 | 0.0430 | 0.0058 | 0.02 | 0 | 0 | 0 | 0 | 94 | |
| 14 | 0.115 | 0.152 | 1.030 | 0.176 | 0.0006 | 0.0310 | 0.0034 | 0 | 0 | 0 | 0 | 0.0017 | 89 | |
| 15 | 0.112 | 0.071 | 2.450 | 0.054 | 0.0005 | 0.0460 | 0.0037 | 0 | 0 | 0 | 0 | 0 | 83 | |
| 16 | 0.102 | 0.291 | 1.970 | 0.081 | 0.0034 | 0.0260 | 0.0061 | 0 | 0 | 0 | 0 | 0 | 87 | |
| 17 | 0.135 | 0.141 | 1.810 | 0.174 | 0.0009 | 0.0460 | 0.0065 | 0 | 0 | 0 | 0 | 0 | 86 | |
| 18 | 0.343 | 0.056 | 1.530 | 0.163 | 0.0006 | 0.0240 | 0.0026 | 0 | 0 | 0 | 0 | 0 | 90 | |
| 19 | 0.286 | 0.22 | 1.760 | 0.089 | 0.0030 | 0.0320 | 0.0034 | 0 | 0 | 0 | 0 | 0 | 102 | |
| 20 | 0.322 | 0.383 | 2.300 | 0.166 | 0.0034 | 0.0480 | 0.0023 | 0 | 0 | 0 | 0 | 0 | 101 | |
| 21 | 0.225 | 0.194 | 1.370 | 0.119 | 0.0008 | 0.0430 | 0.0026 | 0 | 0 | 0 | 0 | 0 | 105 | |
| 22 | 0.468 | 0.092 | 1.290 | 0.178 | 0.0009 | 0.0200 | 0.0042 | 0 | 0 | 0 | 0 | 0 | 84 | |

(continued)

| Multilayer steel sheet no. | Composition of constituents of steel sheet for surface layer (mass%) | | | | | | | | | | | | Thickness of steel sheet for surface layer (mm) | Remarks |
|---|---|---|---|---|---|---|---|---|---|---|---|---|---|---|
| | C | Si | Mn | P | S | sol.Al | N | Ni | Nb | Ti | Mo | B | | |
| 23 | 0.228 | 0.178 | 1.500 | 0.122 | 0.0028 | 0.0260 | 0.0039 | 0 | 0 | 0 | 0 | 0 | 102 | |
| 24 | 0.233 | 0.045 | 2.170 | 0.152 | 0.0018 | 0.0390 | 0.0055 | 0 | 0 | 0 | 0 | 0 | 88 | |
| 25 | 0.163 | 0.135 | 2.370 | 0.142 | 0.0035 | 0.0200 | 0.0052 | 0 | 0 | 0 | 0 | 0 | 85 | |

EP 3 584 338 A1

32

[Table B-1-4]

| Multilayer steel sheet no. | Composition of constituents of steel sheet for surface layer (mass%) | | | | | | | | | | | | Thickness of steel sheet for surface layer (mm) | Remarks |
|---|---|---|---|---|---|---|---|---|---|---|---|---|---|---|
| | C | Si | Mn | P | S | sol.Al | N | Ni | Nb | Ti | Mo | B | | |
| 26 | 0.161 | 0.187 | 2.200 | 0.073 | 0.0040 | 0.038 | 0.0064 | 0 | 0 | 0 | 0 | 0 | 89 | |
| 27 | 0.147 | 0.201 | 1.680 | 0.124 | 0.0029 | 0.041 | 0.0050 | 0 | 0 | 0 | 0 | 0 | 91 | |
| 28 | 0.178 | 0.081 | 2.430 | 0.131 | 0.0022 | 0.037 | 0.0032 | 0 | 0 | 0 | 0 | 0 | 101 | |
| 29 | 0.362 | 0.128 | 1.350 | 0.153 | 0.0030 | 0.022 | 0.0039 | 0 | 0 | 0 | 0 | 0 | 86 | |
| 30 | 0.323 | 0.052 | 2.090 | 0.097 | 0.0029 | 0.033 | 0.0061 | 0 | 0 | 0 | 0 | 0 | 81 | |
| 31 | 0.165 | 0.196 | 1.800 | 0.094 | 0.0014 | 0.042 | 0.0022 | 0 | 0 | 0 | 0 | 0 | 84 | |
| 32 | 0.184 | 0.061 | 1.850 | 0.103 | 0.0027 | 0.030 | 0.0048 | 0 | 0 | 0 | 0 | 0 | 162 | |
| 33 | 0.146 | 0.101 | 1.127 | 0.006 | 0.004 | 0.040 | 0.0045 | 0 | 0 | 0 | 0 | 0 | 103 | |
| 34 | 0.118 | 0.162 | 1.120 | 0.007 | 0.005 | 0.039 | 0.0088 | 0 | 0 | 0 | 0 | 0 | 88 | |
| 35 | 0.13 | 0.254 | 1.128 | 0.010 | 0.003 | 0.033 | 0.0077 | 0 | 0 | 0 | 0 | 0 | 107 | |
| 36 | 0.136 | 0.234 | 0.893 | 0.012 | 0.002 | 0.021 | 0.0073 | 0 | 0 | 0 | 0 | 0 | 81 | |
| 37 | 0.2 | 0.189 | 0.680 | 0.012 | 0.006 | 0.043 | 0.0051 | 0 | 0 | 0 | 0 | 0 | 102 | |
| 38 | 0.12 | 0.126 | 0.966 | 0.012 | 0.005 | 0.023 | 0.0056 | 0 | 0 | 0 | 0 | 0 | 96 | |
| 39 | 0.18 | 0.148 | 1.680 | 0.007 | 0.002 | 0.050 | 0.0099 | 0 | 0 | 0 | 0 | 0 | 100 | |
| 40 | 0.163 | 0.264 | 1.250 | 0.007 | 0.003 | 0.036 | 0.0053 | 0 | 0 | 0 | 0 | 0 | 92 | |
| 41 | 0.177 | 0.118 | 0.800 | 0.009 | 0.003 | 0.047 | 0.0097 | 2.10 | 0 | 0 | 0 | 0 | 91 | |
| 42 | 0.209 | 0.182 | 1.081 | 0.009 | 0.006 | 0.042 | 0.0041 | 0.04 | 0 | 0 | 0 | 0 | 86 | |
| 43 | 0.157 | 0.177 | 1.368 | 0.011 | 0.004 | 0.023 | 0.0067 | 0 | 0.150 | 0 | 0 | 0 | 103 | |
| 44 | 0.183 | 0.112 | 1.566 | 0.012 | 0.004 | 0.046 | 0.0064 | 0 | 0 | 0.140 | 0 | 0 | 89 | |
| 45 | 0.13 | 0.103 | 1.260 | 0.010 | 0.002 | 0.048 | 0.0065 | 0 | 0 | 0 | 0.700 | 0 | 92 | |
| 46 | 0.215 | 0.25 | 1.120 | 0.013 | 0.005 | 0.045 | 0.0052 | 0 | 0 | 0 | 0.150 | 0 | 109 | |
| 47 | 0.13 | 0.11 | 1.653 | 0.009 | 0.005 | 0.036 | 0.0059 | 0 | 0 | 0 | 0 | 0.0090 | 82 | |
| 48 | 0.16 | 0.085 | 1.276 | 0.007 | 0.005 | 0.028 | 0.0049 | 0 | 0 | 0 | 0 | 0.0015 | 88 | |
| 49 | 0.202 | 0.052 | 1.710 | 0.120 | 0.0005 | 0.030 | 0.0057 | 0 | 0 | 0 | 0 | 0 | 91 | |

(continued)

| Multilayer steel sheet no. | Composition of constituents of steel sheet for surface layer (mass%) | | | | | | | | | | | | Thickness of steel sheet for surface layer (mm) | Remarks |
|---|---|---|---|---|---|---|---|---|---|---|---|---|---|---|
| | C | Si | Mn | P | S | sol.Al | N | Ni | Nb | Ti | Mo | B | | |
| 50 | 0.202 | 0.052 | 1.710 | 0.120 | 0.0005 | 0.030 | 0.0057 | 0 | 0 | 0 | 0 | 0 | 91 | |
| 51 | 0.202 | 0.052 | 1.710 | 0.120 | 0.0005 | 0.030 | 0.0057 | 0 | 0 | 0 | 0 | 0 | 91 | |
| 52 | 0.202 | 0.052 | 1.710 | 0.120 | 0.0005 | 0.030 | 0.0057 | 0 | 0 | 0 | 0 | 0 | 91 | |

[Table B-2-1]

| Manufacturing condition no. | Heat treatment before hot rolling | | Rough rolling | | | Hot rolling | | Cold rolling | Heat treatment at hot stamping | | | | | Plating |
|---|---|---|---|---|---|---|---|---|---|---|---|---|---|---|
| | Heating temp. (°C) | Holding time (min) | Rolling temp. (°C) | Rate of reduction of sheet thickness (%) | No. of rolling operations (times) | Finish rolling temp. (°C) | Coiling temp. (°C) | Rolling rate (%) | Heating rate (°C/s) | Heating temp. (°C) | Average cooling rate (°C/s) (more than 400°C) | Average cooling rate (°C/s) (400°C or less) | Tempering temp. (°C) | |
| 1 | 1189 | 100 | 1161 | 34 | 3 | 912 | 726 | 75 | 38 | 847 | 63 | 58 | - | None |
| 2 | 1301 | 64 | 1152 | 32 | 3 | 904 | 732 | 70 | 34 | 848 | 104 | 94 | - | None |
| 3 | 1327 | 103 | 1133 | 29 | 3 | 874 | 589 | 59 | 49 | 882 | 76 | 67 | - | None |
| 4 | 1109 | 99 | 1107 | 37 | 3 | 915 | 524 | 61 | 52 | 916 | 96 | 89 | - | None |
| 5 | 1219 | 105 | 1145 | 30 | 3 | 948 | 690 | 50 | 56 | 849 | 99 | 89 | - | None |
| 6 | 1209 | 105 | 1154 | 35 | 3 | 865 | 645 | 62 | 76 | 891 | 72 | 63 | - | None |
| 7 | 1348 | 74 | 1202 | 39 | 3 | 851 | 571 | 69 | 65 | 822 | 88 | 82 | - | None |
| 8 | 1164 | 117 | 1129 | 41 | 3 | 862 | 746 | 70 | 51 | 838 | 79 | 70 | - | None |
| 9 | 1251 | 108 | 1166 | 27 | 3 | 879 | 551 | 47 | 29 | 872 | 68 | 63 | - | None |
| 10 | 1184 | 94 | 1142 | 36 | 3 | 877 | 563 | 78 | 43 | 836 | 72 | 62 | - | None |
| 11 | 1260 | 114 | 1126 | 30 | 3 | 941 | 546 | 72 | 60 | 903 | 105 | 97 | - | None |
| 12 | 1101 | 65 | 1100 | 35 | 3 | 948 | 684 | 41 | 61 | 873 | 78 | 73 | - | None |
| 13 | 1322 | 104 | 1183 | 29 | 3 | 865 | 550 | 54 | 23 | 898 | 96 | 86 | - | None |
| 14 | 1318 | 100 | 1134 | 43 | 3 | 912 | 517 | 44 | 43 | 869 | 68 | 59 | - | None |
| 15 | 1332 | 84 | 1167 | 36 | 3 | 876 | 680 | 50 | 31 | 925 | 87 | 81 | - | None |
| 16 | 1306 | 72 | 1150 | 36 | 3 | 877 | 629 | 49 | 29 | 904 | 98 | 91 | - | None |
| 17 | 1175 | 67 | 1144 | 40 | 3 | 869 | 567 | 60 | 72 | 850 | 120 | 113 | - | None |
| 18 | 1154 | 71 | 1145 | 38 | 3 | 944 | 511 | 40 | 48 | 826 | 96 | 89 | - | None |
| 19 | 1178 | 113 | 1168 | 46 | 3 | 852 | 605 | 51 | 25 | 900 | 72 | 63 | - | None |
| 20 | 1288 | 98 | 1139 | 47 | 3 | 854 | 624 | 50 | 18 | 917 | 98 | 90 | - | None |

(continued)

| Manufacturing condition no. | Heat treatment before hot rolling | | Rough rolling | | | Hot rolling | | Cold rolling | Heat treatment at hot stamping | | | | | Plating |
|---|---|---|---|---|---|---|---|---|---|---|---|---|---|---|
| | Heating temp. (°C) | Holding time (min) | Rolling temp. (°C) | Rate of reduction of sheet thickness (%) | No. of rolling operations (times) | Finish rolling temp. (°C) | Coiling temp. (°C) | Rolling rate (%) | Heating rate (°C/s) | Heating temp. (°C) | Average cooling rate (°C/s) (more than 400°C) | Average cooling rate (°C/s) (400°C or less) | Tempering temp. (°C) | |
| 21 | 1324 | 68 | 1151 | 44 | 3 | 936 | 502 | 40 | 23 | 889 | 98 | 88 | - | None |
| 22 | 1170 | 76 | 1160 | 31 | 3 | 937 | 506 | 65 | 22 | 886 | 95 | 89 | - | None |
| 23 | 1155 | 65 | 1138 | 38 | 3 | 890 | 572 | 77 | 70 | 896 | 92 | 85 | - | None |
| 24 | 1326 | 104 | 1162 | 36 | 3 | 901 | 611 | 58 | 69 | 855 | 72 | 67 | - | None |
| 25 | 1081 | 104 | 1051 | 43 | 3 | 922 | 547 | 67 | 63 | 892 | 100 | 90 | - | None |

[Table B-2-2]

| Manufacturing condition no. | Heat treatment before hot rolling | | Rough rolling | | | Hot rolling | | Cold rolling | Heat treatment at hot stamping | | | | | Plating |
|---|---|---|---|---|---|---|---|---|---|---|---|---|---|---|
| | Heating temp. (°C) | Holding time (min) | Rolling temp. (°C) | Rate of reduction of sheet thickness (%) | No. of rolling operations (times) | Finish rolling temp. (°C) | Coiling temp. (°C) | Rolling rate (%) | Heating rate (°C/s) | Heating temp. (°C) | Average cooling rate (°C/s) (more than 400°C) | Average cooling rate (°C/s) (400°C or less) | Tempering temp. (°C) | |
| 26 | 1366 | 117 | 1140 | 25 | 3 | 890 | 572 | 68 | 17 | 907 | 86 | 78 | - | None |
| 27 | 1132 | 15 | 1122 | 25 | 3 | 949 | 681 | 68 | 63 | 903 | 88 | 83 | - | None |
| 28 | 1114 | 80 | 1107 | 19 | 3 | 913 | 738 | 65 | 24 | 914 | 107 | 97 | - | None |
| 29 | 1239 | 92 | 1134 | 40 | 3 | 909 | 592 | 41 | 44 | 919 | 82 | 75 | 290 | None |
| 30 | 1341 | 72 | 1142 | 36 | 3 | 897 | 649 | 80 | 45 | 926 | 83 | 73 | 244 | Yes |
| 31 | 1292 | 63 | 1143 | 45 | 3 | 894 | 682 | 74 | 65 | 847 | 62 | 55 | - | Yes |
| 32 | 1244 | 76 | 1153 | 29 | 3 | 863 | 652 | 78 | 66 | 852 | 80 | 75 | - | None |
| 33 | 1186 | 87 | 1136 | 27 | 3 | 889 | 619 | 48 | 68 | 854 | 76 | 66 | - | None |
| 34 | 1177 | 110 | 1133 | 22 | 3 | 858 | 593 | 44 | 44 | 935 | 76 | 66 | - | None |
| 35 | 1222 | 70 | 1135 | 47 | 3 | 895 | 645 | 40 | 48 | 886 | 97 | 89 | - | None |
| 36 | 1158 | 104 | 1145 | 32 | 3 | 904 | 580 | 57 | 48 | 897 | 99 | 89 | - | None |
| 37 | 1192 | 111 | 1135 | 44 | 3 | 850 | 610 | 55 | 23 | 858 | 79 | 72 | - | None |
| 38 | 1230 | 72 | 1116 | 39 | 3 | 912 | 600 | 50 | 33 | 872 | 106 | 98 | - | None |
| 39 | 1153 | 85 | 1143 | 40 | 3 | 907 | 550 | 45 | 63 | 859 | 83 | 76 | - | None |
| 40 | 1152 | 109 | 1122 | 19 | 3 | 897 | 618 | 57 | 26 | 899 | 118 | 110 | - | None |
| 41 | 1217 | 89 | 1159 | 33 | 3 | 910 | 637 | 54 | 57 | 877 | 110 | 100 | - | None |
| 42 | 1194 | 108 | 1135 | 35 | 3 | 850 | 571 | 52 | 31 | 883 | 99 | 94 | - | None |
| 43 | 1233 | 76 | 1138 | 35 | 3 | 950 | 638 | 55 | 46 | 949 | 90 | 82 | - | None |
| 44 | 1193 | 99 | 1138 | 39 | 3 | 950 | 553 | 46 | 56 | 923 | 91 | 83 | - | None |
| 45 | 1174 | 119 | 1169 | 32 | 3 | 940 | 639 | 44 | 31 | 874 | 88 | 78 | - | None |

(continued)

| Manufacturing condition no. | Heat treatment before hot rolling | | Rough rolling | | | Hot rolling | | Cold rolling | Heat treatment at hot stamping | | | | | Plating |
|---|---|---|---|---|---|---|---|---|---|---|---|---|---|---|
| | Heating temp. (°C) | Holding time (min) | Rolling temp. (°C) | Rate of reduction of sheet thickness (%) | No. of rolling operations (times) | Finish rolling temp. (°C) | Coiling temp. (°C) | Rolling rate (%) | Heating rate (°C/s) | Heating temp. (°C) | Average cooling rate (°C/s) (more than 400°C) | Average cooling rate (°C/s) (400°C or less) | Tempering temp. (°C) | |
| 46 | 1218 | 102 | 1138 | 35 | 3 | 947 | 605 | 53 | 34 | 936 | 63 | 55 | - | None |
| 47 | 1245 | 101 | 1136 | 33 | 3 | 940 | 648 | 40 | 21 | 893 | 92 | 86 | - | None |
| 48 | 1217 | 106 | 1124 | 36 | 3 | 907 | 590 | 49 | 21 | 895 | 108 | 100 | - | None |
| 49 | 1337 | 99 | 1005 | 41 | 3 | 840 | 557 | 58 | 68 | 917 | 113 | 108 | - | None |
| 50 | 1336 | 78 | 1158 | 4 | 2 | 843 | 594 | 52 | 26 | 934 | 80 | 74 | - | None |
| 51 | 1275 | 88 | 1147 | 39 | 1 | 896 | 696 | 51 | 73 | 903 | 86 | 78 | - | None |
| 52 | 1308 | 63 | 1126 | 42 | 3 | 843 | 702 | 49 | 65 | 892 | 97 | 87 | - | None |

EP 3 584 338 A1

[Table B-3-1]

| Stamped body no. | Multilayer steel sheet no. | Manufacturing condition no. | Metal structures | | Mechanical properties | | | | | | Remarks |
| --- | --- | --- | --- | --- | --- | --- | --- | --- | --- | --- | --- |
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Tensile strength (MPa) | Maximum bending angle (°) | Hydrogen embrittlement resistance | Average cross-sectional hardness (Hv) | Minimum hardness (Hv) | Average cross-sectional hardness-minimum hardness (Hv) | |
| 1B | 1 | 1 | 534 | 46 | 1564 | 105.4 | Good | 496 | 460 | 36 | Inv. ex. |
| 2B | 2 | 2 | 684 | 33 | 2004 | 112.3 | Good | 663 | 657 | 6 | Inv. ex. |
| 3B | 3 | 3 | 703 | 25 | 2245 | 111.2 | Good | 668 | 666 | 2 | Inv. ex. |
| 4B | 4 | 4 | 755 | 28 | 2260 | 94.9 | Good | 702 | 678 | 24 | Inv. ex. |
| 5B | 5 | 5 | 414 | 31 | 1175 | 106.6 | Good | 385 | 339 | 46 | Comp. ex. |
| 6B | 6 | 6 | 589 | 43 | 1718 | 103.3 | Good | 565 | 520 | 45 | Inv. ex. |
| 7B | 7 | 7 | 579 | 43 | 1747 | 104.5 | Good | 562 | 493 | 69 | Inv. ex. |
| 8B | 8 | 8 | 643 | 32 | 1985 | 103.2 | Good | 611 | 602 | 9 | Inv. ex. |
| 9B | 9 | 9 | 839 | 21 | 2596 | 56.6 | Good | 772 | 757 | 15 | Comp. ex. |
| 10B | 10 | 10 | 642 | 36 | 1860 | 97.4 | Good | 617 | 600 | 17 | Inv. ex. |
| 11B | 11 | 11 | 604 | 36 | 2022 | 113.2 | Good | 602 | 489 | 113 | Comp. ex. |

EP 3 584 338 A1

39

(continued)

| Stamped body no. | Multilayer steel sheet no. | Manufacturing condition no. | Metal structures | | Mechanical properties | | | | | | Remarks |
|---|---|---|---|---|---|---|---|---|---|---|---|
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Tensile strength (MPa) | Maximum bending angle (°) | Hydrogen embrittlement resistance | Average cross-sectional hardness (Hv) | Minimum hardness (Hv) | Average cross-sectional hardness-minimum hardness (Hv) | |
| 12B | 12 | 12 | 699 | 30 | 1983 | 105.1 | Good | 671 | 653 | 18 | Inv. ex. |
| 13B | 13 | 13 | 610 | 33 | 1962 | 105.6 | Good | 567 | 553 | 14 | Inv. ex. |
| 14B | 14 | 14 | 680 | 31 | 2012 | 100.7 | Good | 619 | 617 | 2 | Inv. ex. |
| 15B | 15 | 15 | 502 | 45 | 1460 | 103.1 | Good | 457 | 429 | 28 | Inv. ex. |
| 16B | 16 | 16 | 546 | 49 | 1583 | 103.9 | Good | 524 | 515 | 9 | Inv. ex. |
| 17B | 17 | 17 | 509 | 48 | 1535 | 108.5 | Good | 468 | 416 | 52 | Inv. ex. |
| 18B | 18 | 18 | 697 | 33 | 1947 | 104.9 | Good | 634 | 627 | 7 | Inv. ex. |
| 19B | 19 | 19 | 648 | 33 | 1837 | 103.9 | Good | 597 | 534 | 63 | Inv. ex. |
| 30B | 30 | 30 | 621 | 36 | 1935 | 110.1 | Good | 596 | 586 | 10 | Inv. ex. |
| 21B | 21 | 21 | 692 | 26 | 2163 | 106.5 | Good | 637 | 576 | 61 | Inv. ex. |
| 22B | 22 | 22 | 704 | 30 | 2612 | 91 | Good | 676 | 616 | 60 | Inv. ex. |
| 23B | 23 | 23 | 780 | 33 | 2477 | 97.1 | Good | 710 | 647 | 63 | Inv. ex. |
| 24B | 24 | 24 | 847 | 27 | 2551 | 96.1 | Good | 762 | 729 | 33 | Inv. ex. |

| Stamped body no. | Multilayer steel sheet no. | Manufacturing condition no. | Metal structures | | Mechanical properties | | | | | | Remarks |
|---|---|---|---|---|---|---|---|---|---|---|---|
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Tensile strength (MPa) | Maximum bending angle (°) | Hydrogen embrittlement resistance | Average cross-sectional hardness (Hv) | Minimum hardness (Hv) | Average cross-sectional hardness-minimum hardness (Hv) | |
| 25B | 25 | 25 | 714 | 13 | 1988 | 65.1 | Poor | 657 | 646 | 11 | Comp. ex. |

EP 3 584 338 A1

[Table B-3-2]

| Stamped body no. | Multilayer steel sheet no. | Manufacturing condition no. | Metal structures | | Mechanical properties | | | | | | Remarks |
|---|---|---|---|---|---|---|---|---|---|---|---|
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Tensile strength (MPa) | Maximum bending angle (°) | Hydrogen embrittlement resistance | Average cross-sectional hardness (Hv) | Minimum hardness (Hv) | Average cross-sectional hardness- minimum hardness (Hv) | |
| 26B | 26 | 26 | 668 | 92 | 1909 | 68.1 | Good | 628 | 599 | 29 | Comp. ex. |
| 27B | 27 | 27 | 592 | 12 | 1852 | 67.4 | Poor | 581 | 511 | 70 | Comp. ex. |
| 28B | 28 | 28 | 645 | 33 | 1965 | 113.3 | Good | 617 | 572 | 45 | Inv. ex. |
| 29B | 29 | 29 | 799 | 28 | 2189 | 124.9 | Good | 780 | 733 | 47 | Inv. ex. |
| 30B | 30 | 30 | 671 | 26 | 2228 | 117.9 | Good | 642 | 620 | 22 | Inv. ex. |
| 31B | 31 | 31 | 659 | 34 | 1770 | 148.8 | Good | 645 | 642 | 3 | Inv. ex. |
| 32B | 32 | 32 | 668 | 35 | 2227 | 118.1 | Good | 653 | 600 | 53 | Inv. ex. |
| 33B | 33 | 33 | 635 | 37 | 2109 | 94 | Good | 614 | 606 | 8 | Inv. ex. |
| 34B | 34 | 34 | 700 | 54 | 2017 | 110 | Good | 684 | 664 | 20 | Inv. ex. |
| 35B | 35 | 35 | 632 | 66 | 2065 | 93 | Good | 626 | 593 | 33 | Inv. ex. |
| 36B | 36 | 36 | 610 | 49 | 2278 | 102 | Good | 593 | 548 | 45 | Inv. ex. |
| 37B | 37 | 37 | 613 | 57 | 2105 | 106 | Good | 589 | 563 | 26 | Inv. ex. |

42

(continued)

| Stamped body no. | Multilayer steel sheet no. | Manufacturing condition no. | Metal structures | | Mechanical properties | | | | | | Remarks |
|---|---|---|---|---|---|---|---|---|---|---|---|
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Tensile strength (MPa) | Maximum bending angle (°) | Hydrogen embrittlement resistance | Average cross-sectional hardness (Hv) | Minimum hardness (Hv) | Average cross-sectional hardness-minimum hardness (Hv) | |
| 38B | 38 | 38 | 653 | 54 | 2167 | 95 | Good | 630 | 611 | 19 | Inv. ex. |
| 39B | 39 | 39 | 697 | 52 | 2071 | 107 | Good | 668 | 646 | 22 | Inv. ex. |
| 40B | 40 | 40 | 613 | 29 | 2043 | 95 | Good | 587 | 562 | 25 | Inv. ex. |
| 41B | 41 | 41 | 647 | 44 | 2189 | 103 | Good | 633 | 631 | 2 | Inv. ex. |
| 42B | 42 | 42 | 615 | 60 | 2020 | 110 | Good | 609 | 588 | 21 | Inv. ex. |
| 43B | 43 | 43 | 605 | 62 | 2287 | 103 | Good | 585 | 562 | 23 | Inv. ex. |
| 44B | 44 | 44 | 611 | 44 | 2165 | 95 | Good | 604 | 549 | 55 | Inv. ex. |
| 45B | 45 | 45 | 622 | 32 | 2141 | 108 | Good | 609 | 579 | 30 | Inv. ex. |
| 46B | 46 | 46 | 604 | 56 | 2275 | 98 | Good | 581 | 531 | 50 | Inv. ex. |
| 47B | 47 | 47 | 610 | 63 | 2010 | 110 | Good | 582 | 557 | 25 | Inv. ex. |
| 48B | 48 | 48 | 631 | 47 | 2109 | 110 | Good | 613 | 584 | 29 | Inv. ex. |
| 49B | 49 | 49 | 629 | <u>10</u> | 2076 | <u>59.1</u> | <u>Poor</u> | 629 | 622 | 33 | Comp. ex. |

| Stamped body no. | Multilayer steel sheet no. | Manufacturing condition no. | Metal structures | | Mechanical properties | | | | | | Remarks |
|---|---|---|---|---|---|---|---|---|---|---|---|
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Tensile strength (MPa) | Maximum bending angle (°) | Hydrogen embrittlement resistance | Average cross-sectional hardness (Hv) | Minimum hardness (Hv) | Average cross-sectional hardness-minimum hardness (Hv) | |
| 50B | 50 | 50 | 644 | 12 | 2125 | 63.2 | Poor | 644 | 627 | 35 | Comp.ex. |
| 51B | 51 | 51 | 638 | 12 | 2105 | 60.1 | Poor | 638 | 612 | 29 | Comp.ex. |
| 52B | 52 | 52 | 633 | 44 | 2089 | 102.1 | Good | 633 | 603 | 30 | Inv. ex. |

[Manufacturing Example C]

Steel sheets for sheet thickness middle part having the chemical compositions shown in Table C-1-1 to Table C-1-2 were ground down at their surfaces to remove the surface oxides. After that, the respective steel sheets for sheet thickness middle part were welded with steel sheets for surface layer having the chemical compositions shown in Table C-1-3 to Table C-1-4 at both surfaces or single surfaces by arc welding to fabricate the Nos. 1 to 59 multilayer steel sheets for hot stamped body. In the tables, fields in which the constituents are indicated as 0 show that the corresponding constituents are not intentionally added.

The sheet thickness of the total of the steel sheet for surface layer and the steel sheet for sheet thickness middle part after arc welding was 200 mm to 300 mm and the thickness of the steel sheet for surface layer was 1/3 or so of the thickness of the steel sheet for sheet thickness middle part (in case of single side, 1/4 or so). The No. 38 multilayer steel sheet was steel with steel sheet for surface layer welded to only one side. The multilayer steel sheets of other than No. 38 had steel sheets for surface layer welded to both surfaces of the steel sheets for sheet thickness middle part. Among the Nos. 1 to 59 multilayer steel sheets of Table C-1-1 to Table C-1-4, ones where the steel sheet for sheet thickness middle part did not satisfy the requirements of composition of the middle part in sheet thickness of the hot stamped body according to the present invention are indicated as "comparative steels" in the remarks columns.

The Nos. 1 to 59 multilayer steel sheets were respectively treated under the conditions of the Nos. 1 to 59 manufacturing conditions shown in Table C-2-1 to Table C-2-2 by heat treatment before hot rolling, rough rolling, hot rolling, and cold rolling to obtain steel sheets. Next, the steel sheets were heat treated as shown in Table C-2-1 and Table C-2-2 (in the tables, "heat treatment of hot stamped body") for hot stamping to manufacture the Nos. 1C to 59C hot stamped bodies ("stamped bodies" of Table C-3-1 and Table C-3-2). Further, the Nos. 36C and 37C hot stamped bodies were coated on a hot dip coating line at the surfaces of the matrix steel sheets with 120 to 160 g/m$^2$ amounts of aluminum. Further, the items in Table C-2-1 to Table C-2-2 correspond to the items in Table A-2-1 to Table A-2-2. Further, in the tables, the fields with the notations "-" indicate no corresponding treatment performed.

Table C-3-1 and Table C-3-2 show the metal structures and characteristics of the Nos. 1C to 59C hot stamped bodies. The constituents obtained by analyzing the positions of 1/2 of the sheet thicknesses of the samples taken from the hot stamped bodies (middle parts in sheet thickness) and positions of 20 $\mu$m from the surfaces of the softened layers were equivalent to the constituents of the steel sheets for sheet thickness middle part and the steel sheets for surface layer of the Nos. 1 to 59 multilayer steel sheets of Table C-1-1 to Table C-1-4.

The metal structures of the hot stamped steel sheets were measured by the above-mentioned method. The hardness of the steel sheet for sheet thickness middle part forming the middle part in sheet thickness and the area rate of the total of the crystal grains with a maximum crystal orientation difference inside the regions surrounded by grain boundaries of 15° or more of 1° or less and the crystal grains with a crystal orientation difference of 8° to 15° in the metal structures from the surface of the steel sheet for surface layer forming the softened layer to 1/2 of the thickness of that softened layer were calculated. The calculated values of the area rate are shown in the items "area rate (%) of total of crystal grains with maximum crystal orientation difference inside large angle grain boundaries of 1° or less and crystal grains with maximum crystal orientation difference of 8° to 15°" of Tables C-3-1 to C-3-2.

The hot stamped bodies were subjected to tensile tests. The results are shown in Table C-3. The tensile tests were performed by fabricating No. 5 test pieces described in JIS Z 2201 and testing them by the method described in JIS Z 2241.

The hydrogen embrittlement resistance of the hot stamped body, in the same way as Manufacturing Example A, was evaluated using a test piece cut out from the stamped body. That is, a test piece of a sheet thickness of 1.2 mm×width 6 mm×length 68 mm was cut out from the stamped body, given a strain corresponding to the yield stress in a four-point bending test, then immersed in pH3 hydrochloric acid for 100 hours and evaluated for hydrogen embrittlement resistance by the presence of any cracks. The case of no cracks was indicated as passing ("Good") and the case of cracks was evaluated as failing ("Poor").

For the purpose of evaluating the impact resistance of the hot stamped body, the body was evaluated based on the VDA standard (VDA238-100) prescribed by the German Association of the Automotive Industry under the same measurement conditions as Manufacturing Example A. In the present invention, the displacement at the time of maximum load obtained in the bending test was converted to angle by the VDA standard to find maximum bending angle and thereby evaluate the impact resistance of the hot stamped body.

If the tensile strength is 1500 MPa or more, the maximum bending angle (°) was 90(°) or more, and the hydrogen embrittlement resistance was a passing level, it was judged that the impact resistance and hydrogen embrittlement resistance were excellent and the case was indicated as an "invention example". If even one of the three aspects of performance is not satisfied, the case was indicated as a "comparative example".

In each hot stamped body of the invention examples, the area rate of the total of the crystal grains with a maximum crystal orientation difference inside the regions surrounded by grain boundaries of 15° or more of 1° or less and the crystal grains with a crystal orientation difference of 8° to 15° in the metal structures from the surface of the steel sheet for surface layer to 1/2 of the thickness was 20% to less than 50%. Further, each hot stamped body of the invention examples was excellent in tensile strength, bendability, and hydrogen embrittlement resistance.

As opposed to this, the No. 5C hot stamped body was low in carbon content of the steel sheet for sheet thickness middle part, so became insufficient in hardness of the middle part in sheet thickness and became insufficient in tensile strength. The No. 9C hot stamped body was excessive in carbon content of the steel sheet for sheet thickness middle part, so also became excessive in hardness of the middle part in sheet thickness and could not be given the targeted bendability. Further, the No. 11C hot stamped body was sparse in Si content of the steel sheet for sheet thickness middle part, so the area percent of the residual austenite became less than 1% and uniform elongation became insufficient.

The "ratios of constituents of the steel sheet for sheet thickness middle part and the steel sheet for surface layer" in Table C-1-3 and Table C-1-4 are the ratios of the C content, Si content, and Mn content at the steel sheet for surface layer with respect to the contents at the steel sheet for sheet thickness middle part. The Nos. 30C and 37C hot stamped bodies had each of the C content, Si content, and Mn content at more than 0.6 time the content of the corresponding element of the middle part in sheet thickness.

The Nos. 30C to 32C hot stamped bodies are comparative examples manufactured using the multilayer steel sheets for hot stamped body to which the preferable heat treatment is not applied before the hot stamping process. The No. 30C hot stamped body is too low in heat treatment temperature before the hot stamping process, so in the metal structures of the softened layer from the surface of the softened layer to 1/2 of the thickness, the soft structures and metal structures with intermediate hardnesses insufficiently grew and the targeted bendability could not be obtained. Further, the No. 31C hot stamped body was excessively high in heat treatment temperature before the hot stamping process, so the soft structures and metal structures with intermediate hardnesses excessively grew, the difference in hardness between the softened layer and the middle part in sheet thickness became too large, and the effect of reducing the sharp gradient of hardness in the sheet thickness direction occurring at the time of bending deformation could not be obtained. For this reason, the No. 31C hot stamped body could not be given excellent bendability. The No. 32C hot stamped body was too short in heat treatment time before the hot stamping process, so in the metal structures of the softened layer from the surface of the softened layer to 1/2 of the thickness, the soft structures and metal structures with intermediate hardnesses insufficiently grew and the targeted bendability could not be obtained.

The No. 56C hot stamped body was low in rolling temperature of the rough rolling. Further, the No. 57C hot stamped body was low in sheet thickness reduction rate of the rough rolling. Further, the No. 58C hot stamped body was low in number of rolling operations under conditions of a time between passes of 3 seconds or more. These hot stamped bodies were not manufactured under the suitable rough rolling conditions, so the soft structures and metal structures with intermediate hardnesses insufficiently grew, it was not possible to ease the strain occurring due to bending deformation, and the targeted bendability could not be obtained.

The No. 59C hot stamped body is a steel sheet controlled in casting rate to 6 ton/min or more in the continuous casting process of steel sheet for surface layer. It can raise the area rate of the total of the crystal grains with a maximum crystal orientation difference inside the regions surrounded by grain boundaries of 15° or more of 1° or less and the crystal grains with a crystal orientation difference of 8° to 15° in the metal structures from the surface of the steel sheet for surface layer to 1/2 of the thickness and is excellent in bendability.

[Table C-1-1]

Chemical constituents of steel sheet for sheet thickness middle part (mass%)

| Multilayer steel sheet no. | C | Si | Mn | P | S | sol.Al | N | Ni | Nb | Ti | Mo | B | Remarks |
|---|---|---|---|---|---|---|---|---|---|---|---|---|---|
| 1 | 0.24 | 2.94 | 0.89 | 0.0130 | 0.0049 | 0.056 | 0.0059 | 0 | 0 | 0 | 0 | 0 | |
| 2 | 0.34 | 2.56 | 0.89 | 0.0120 | 0.0080 | 0.053 | 0.0064 | 0 | 0 | 0 | 0 | 0 | |
| 3 | 0.29 | 2.06 | 1.49 | 0.0120 | 0.0019 | 0.034 | 0.0061 | 0 | 0 | 0 | 0 | 0 | |
| 4 | 0.48 | 2.18 | 0.97 | 0.0090 | 0.0037 | 0.023 | 0.005 | 0 | 0 | 0 | 0 | 0 | |
| 5 | 0.18 | 2.99 | 0.55 | 0.0080 | 0.0013 | 0.055 | 0.0069 | 0 | 0 | 0 | 0 | 0 | Comp. steel |
| 6 | 0.22 | 2.84 | 1.28 | 0.0110 | 0.0068 | 0.025 | 0.0038 | 0 | 0 | 0 | 0 | 0 | |
| 7 | 0.21 | 1.69 | 1.10 | 0.0130 | 0.0007 | 0.036 | 0.0033 | 0 | 0 | 0 | 0 | 0 | |
| 8 | 0.25 | 1.18 | 1.43 | 0.0060 | 0.0041 | 0.048 | 0.0052 | 0 | 0 | 0 | 0 | 0 | |
| 9 | 0.75 | 2.52 | 1.27 | 0.0080 | 0.0014 | 0.042 | 0.0038 | 0 | 0 | 0 | 0 | 0 | Comp. steel |
| 10 | 0.22 | 1.71 | 1.36 | 0.0100 | 0.0045 | 0.027 | 0.0032 | 0 | 0 | 0 | 0 | 0 | |
| 11 | 0.35 | 0.45 | 0.76 | 0.0100 | 0.008 | 0.026 | 0.0052 | 0 | 0 | 0 | 0 | 0 | Comp. steel |
| 12 | 0.33 | 1.18 | 0.56 | 0.0090 | 0.0035 | 0.031 | 0.0038 | 0 | 0 | 0 | 0 | 0 | |
| 13 | 0.23 | 2.71 | 1.19 | 0.0140 | 0.0026 | 0.041 | 0.0068 | 0.10 | 0 | 0 | 0 | 0 | |
| 17 | 0.29 | 1.57 | 1.42 | 0.0070 | 0.0045 | 0.044 | 0.0061 | 0 | 0 | 0 | 0 | 0.0015 | |
| 18 | 0.25 | 1.82 | 0.98 | 0.0120 | 0.0057 | 0.060 | 0.0035 | 0 | 0.045 | 0.025 | 0 | 0.0020 | |
| 19 | 0.21 | 2.77 | 1.26 | 0.0050 | 0.0014 | 0.045 | 0.0064 | 0 | 0 | 0 | 0 | 0 | |
| 20 | 0.22 | 1.51 | 1.37 | 0.0070 | 0.0075 | 0.034 | 0.0034 | 0 | 0 | 0 | 0 | 0 | |
| 21 | 0.35 | 1.97 | 0.94 | 0.0120 | 0.0043 | 0.030 | 0.0062 | 0 | 0 | 0 | 0 | 0 | |
| 22 | 0.33 | 1.81 | 0.90 | 0.0040 | 0.0063 | 0.051 | 0.0043 | 0 | 0 | 0 | 0 | 0 | |
| 23 | 0.39 | 1.22 | 1.01 | 0.0050 | 0.0064 | 0.053 | 0.0036 | 0 | 0 | 0 | 0 | 0 | |
| 24 | 0.28 | 2.32 | 0.74 | 0.0060 | 0.0079 | 0.048 | 0.006 | 0 | 0 | 0 | 0 | 0 | |
| 27 | 0.56 | 2.30 | 0.82 | 0.0050 | 0.0035 | 0.058 | 0.0062 | 0 | 0.020 | 0.025 | 0 | 0.0015 | |
| 28 | 0.55 | 1.19 | 0.85 | 0.0110 | 0.0011 | 0.026 | 0.0035 | 0 | 0 | 0 | 0 | 0 | |
| 29 | 0.49 | 1.59 | 0.79 | 0.0120 | 0.0058 | 0.051 | 0.0076 | 0 | 0 | 0 | 0 | 0 | |

| Multilayer steel sheet no. | Chemical constituents of steel sheet for sheet thickness middle part (mass%) | | | | | | | | | | | | |
|---|---|---|---|---|---|---|---|---|---|---|---|---|---|
| | C | Si | Mn | P | S | sol.Al | N | Ni | Nb | Ti | Mo | B | Remarks |
| 30 | 0.38 | 2.47 | 0.58 | 0.0110 | 0.0064 | 0.042 | 0.0038 | 0 | 0 | 0 | 0 | 0 | |

[Table C-1-2]

| Multilayer steel sheet no. | Chemical constituents of steel sheet for sheet thickness middle part (mass%) | | | | | | | | | | | | Remarks |
|---|---|---|---|---|---|---|---|---|---|---|---|---|---|
| | C | Si | Mn | P | S | sol.Al | N | Ni | Nb | Ti | Mo | B | |
| 31 | 0.32 | 1.86 | 0.87 | 0.005 | 0.0058 | 0.034 | 0.0057 | 0 | 0 | 0 | 0 | 0 | |
| 32 | 0.36 | 2.24 | 0.69 | 0.010 | 0.0005 | 0.048 | 0.0039 | 0 | 0.06 | 0.032 | 0 | 0.0022 | |
| 34 | 0.30 | 2.35 | 0.64 | 0.014 | 0.0061 | 0.046 | 0.0034 | 0 | 0 | 0 | 0 | 0 | |
| 35 | 0.65 | 1.88 | 0.58 | 0.010 | 0.0021 | 0.019 | 0.0044 | 0 | 0 | 0 | 0 | 0 | |
| 36 | 0.6 | 1.02 | 0.94 | 0.008 | 0.0073 | 0.037 | 0.0037 | 0 | 0 | 0 | 0 | 0 | |
| 37 | 0.33 | 1.74 | 0.98 | 0.005 | 0.0015 | 0.031 | 0.0045 | 0 | 0 | 0 | 0 | 0 | |
| 38 | 0.36 | 2.27 | 1.19 | 0.011 | 0.0058 | 0.051 | 0.0066 | 0 | 0 | 0 | 0 | 0 | |
| 39 | 0.33 | 2.89 | 0.15 | 0.006 | 0.003 | 0.051 | 0.0039 | 0 | 0 | 0 | 0 | 0 | |
| 40 | 0.33 | 2.72 | 0.65 | 0.100 | 0.005 | 2.660 | 0.0066 | 0 | 0 | 0 | 0 | 0 | |
| 41 | 0.27 | 1.74 | 0.93 | 0.091 | 0.005 | 0.051 | 0.0025 | 2.592 | 0 | 0 | 0 | 0 | |
| 42 | 0.24 | 2.95 | 0.77 | 0.092 | 0.003 | 0.056 | 0.0037 | 0.0612 | 0 | 0 | 0 | 0 | |
| 43 | 0.36 | 2.05 | 0.68 | 0.070 | 0.002 | 0.044 | 0.0051 | 0 | 0.1164 | 0 | 0 | 0 | |
| 44 | 0.43 | 2.68 | 0.91 | 0.119 | 0.002 | 0.068 | 0.005 | 0 | 0 | 0.150 | 0 | 0 | |
| 45 | 0.29 | 2.64 | 0.65 | 0.074 | 0.003 | 0.046 | 0.0022 | 0 | 0 | 0 | 0.520 | 0 | |
| 46 | 0.35 | 1.69 | 0.90 | 0.072 | 0.005 | 0.069 | 0.0044 | 0 | 0 | 0 | 0.214 | 0 | |
| 47 | 0.34 | 1.98 | 0.76 | 0.088 | 0.006 | 0.055 | 0.0072 | 0 | 0 | 0 | 0 | 0.0076 | |
| 48 | 0.32 | 1.90 | 0.73 | 0.108 | 0.002 | 0.045 | 0.0069 | 0 | 0 | 0 | 0 | 0 | |
| 49 | 0.36 | 2.50 | 1.00 | 0.063 | 0.004 | 0.035 | 0.0034 | 0 | 0 | 0 | 0 | 0 | |
| 50 | 0.29 | 1.99 | 0.98 | 0.107 | 0.005 | 0.061 | 0.0042 | 0 | 0 | 0 | 0 | 0 | |
| 51 | 0.33 | 2.07 | 0.85 | 0.073 | 0.005 | 0.050 | 0.0022 | 0 | 0 | 0 | 0 | 0 | |
| 52 | 0.26 | 1.88 | 0.79 | 0.107 | 0.004 | 0.047 | 0.0028 | 0 | 0 | 0 | 0 | 0 | |
| 53 | 0.34 | 1.51 | 0.8 | 0.079 | 0.005 | 0.052 | 0.0028 | 0 | 0 | 0 | 0 | 0 | |
| 54 | 0.24 | 2.85 | 0.7 | 0.091 | 0.003 | 0.053 | 0.006 | 0 | 0 | 0 | 0 | 0 | |
| 55 | 0.34 | 2.42 | 0.84 | 0.103 | 0.003 | 0.033 | 0.006 | 0 | 0 | 0 | 0 | 0 | |

(continued)

| Multilayer steel sheet no. | Chemical constituents of steel sheet for sheet thickness middle part (mass%) | | | | | | | | | | | | |
|---|---|---|---|---|---|---|---|---|---|---|---|---|---|
| | C | Si | Mn | P | S | sol.Al | N | Ni | Nb | Ti | Mo | B | Remarks |
| 56 | 0.34 | 2.56 | 0.89 | 0.012 | 0.008 | 0.053 | 0.0064 | 0 | 0 | 0 | 0 | 0 | |
| 57 | 0.34 | 2.56 | 0.89 | 0.012 | 0.008 | 0.053 | 0.0064 | 0 | 0 | 0 | 0 | 0 | |
| 58 | 0.34 | 2.56 | 0.89 | 0.012 | 0.008 | 0.053 | 0.0064 | 0 | 0 | 0 | 0 | 0 | |
| 59 | 0.34 | 2.56 | 0.89 | 0.012 | 0.008 | 0.053 | 0.0064 | 0 | 0 | 0 | 0 | 0 | |

[Table C-1-3]

| Multilayer steel sheet no. | Composition of constituents of steel sheet for surface layer (mass%) | | | | | | | | | | | | Thickness of steel sheet for surface layer (mm) | Remarks |
|---|---|---|---|---|---|---|---|---|---|---|---|---|---|---|
| | C | Si | Mn | P | S | sol.Al | N | Ni | Nb | Ti | Mo | B | | |
| 1 | 0.09 | 1.76 | 0.5 | 0.011 | 0.0048 | 0.043 | 0.0053 | 0 | 0 | 0 | 0 | 0 | 82 | |
| 2 | 0.16 | 0.90 | 0.34 | 0.007 | 0.0068 | 0.038 | 0.0056 | 0 | 0 | 0 | 0 | 0 | 78 | |
| 3 | 0.10 | 1.01 | 0.86 | 0.009 | 0.0068 | 0.035 | 0.0056 | 0 | 0 | 0 | 0 | 0 | 120 | |
| 4 | 0.23 | 0.65 | 0.3 | 0.013 | 0.0053 | 0.036 | 0.0076 | 0 | 0 | 0 | 0 | 0 | 72 | |
| 5 | 0.06 | 1.41 | 0.25 | 0.011 | 0.0046 | 0.034 | 0.0063 | 0 | 0 | 0 | 0 | 0 | 88 | Comp. steel |
| 6 | 0.10 | 0.97 | 0.47 | 0.008 | 0.0049 | 0.043 | 0.0041 | 0 | 0 | 0 | 0 | 0 | 70 | |
| 7 | 0.10 | 0.81 | 0.61 | 0.012 | 0.0079 | 0.043 | 0.007 | 0 | 0 | 0 | 0 | 0 | 106 | |
| 8 | 0.08 | 0.57 | 0.76 | 0.014 | 0.0076 | 0.029 | 0.008 | 0 | 0 | 0 | 0 | 0 | 110 | |
| 9 | 0.23 | 1.49 | 0.75 | 0.014 | 0.008 | 0.046 | 0.0056 | 0 | 0 | 0 | 0 | 0 | 89 | Comp. steel |
| 10 | 0.11 | 0.74 | 0.76 | 0.01 | 0.0076 | 0.03 | 0.0067 | 0 | 0 | 0 | 0 | 0 | 92 | |
| 11 | 0.11 | 0.17 | 0.33 | 0.01 | 0.0056 | 0.036 | 0.0075 | 0 | 0 | 0 | 0 | 0 | 101 | Comp. steel |
| 12 | 0.15 | 0.60 | 0.32 | 0.01 | 0.0064 | 0.039 | 0.0057 | 0 | 0 | 0 | 0 | 0 | 120 | |
| 13 | 0.12 | 1.36 | 0.56 | 0.008 | 0.007 | 0.049 | 0.0062 | 0 | 0 | 0 | 0 | 0 | 88 | |
| 17 | 0.10 | 0.58 | 0.51 | 0.006 | 0.0047 | 0.042 | 0.0041 | 0 | 0 | 0 | 0 | 0.0190 | 109 | |
| 18 | 0.12 | 1.62 | 0.60 | 0.014 | 0.0046 | 0.026 | 0.0055 | 0 | 0.050 | 0.024 | 0 | 0.0160 | 93 | |
| 19 | 0.07 | 2.60 | 0.38 | 0.010 | 0.006 | 0.049 | 0.0072 | 0 | 0 | 0 | 0 | 0 | 104 | |
| 20 | 0.07 | 0.82 | 0.90 | 0.014 | 0.0068 | 0.048 | 0.0074 | 0 | 0 | 0 | 0 | 0 | 93 | |
| 21 | 0.31 | 0.71 | 0.39 | 0.011 | 0.0049 | 0.038 | 0.0058 | 0 | 0 | 0 | 0 | 0 | 112 | |
| 22 | 0.27 | 1.03 | 0.83 | 0.009 | 0.0065 | 0.047 | 0.0056 | 0 | 0 | 0 | 0 | 0 | 114 | |
| 23 | 0.36 | 1.02 | 0.51 | 0.013 | 0.0073 | 0.046 | 0.0049 | 0 | 0 | 0 | 0 | 0 | 78 | |
| 24 | 0.26 | 1.16 | 0.35 | 0.008 | 0.0042 | 0.036 | 0.0044 | 0 | 0 | 0 | 0 | 0 | 106 | |
| 27 | 0.34 | 0.78 | 0.37 | 0.012 | 0.0053 | 0.036 | 0.0043 | 0 | 0 | 0 | 0 | 0 | 102 | |

(continued)

| Multilayer steel sheet no. | Composition of constituents of steel sheet for surface layer (mass%) | | | | | | | | | | | | Thickness of steel sheet for surface layer (mm) | Remarks |
|---|---|---|---|---|---|---|---|---|---|---|---|---|---|---|
| | C | Si | Mn | P | S | sol.Al | N | Ni | Nb | Ti | Mo | B | | |
| 28 | 0.21 | 0.73 | 0.45 | 0.012 | 0.0053 | 0.045 | 0.0066 | 0 | 0 | 0 | 0 | 0 | 118 | |
| 29 | 0.17 | 0.70 | 0.64 | 0.012 | 0.0046 | 0.034 | 0.0079 | 0.15 | 0 | 0 | 0 | 0 | 89 | |
| 30 | 0.26 | 1.65 | 0.57 | 0.014 | 0.0067 | 0.042 | 0.004 | 0 | 0 | 0 | 0 | 0 | 70 | |

[Table C-1-4]

| Multilayer steel sheet no. | Composition of constituents of steel sheet for surface layer (mass%) | | | | | | | | | | | | Thickness of steel sheet for surface layer (mm) | Remarks |
|---|---|---|---|---|---|---|---|---|---|---|---|---|---|---|
| | C | Si | Mn | P | S | sol.Al | N | Ni | Nb | Ti | Mo | B | | |
| 31 | 0.16 | 0.71 | 0.27 | 0.009 | 0.0048 | 0.031 | 0.0047 | 0 | 0 | 0 | 0 | 0 | 117 | |
| 32 | 0.11 | 0.9 | 0.25 | 0.012 | 0.0069 | 0.043 | 0.0057 | 0 | 0 | 0 | 0 | 0 | 99 | |
| 34 | 0.16 | 0.87 | 0.31 | 0.010 | 0.0045 | 0.045 | 0.0067 | 0 | 0 | 0 | 0 | 0 | 73 | |
| 35 | 0.32 | 0.83 | 0.21 | 0.008 | 0.0056 | 0.032 | 0.0077 | 0 | 0 | 0 | 0 | 0 | 73 | |
| 36 | 0.30 | 0.42 | 0.36 | 0.007 | 0.0066 | 0.044 | 0.0063 | 0 | 0 | 0 | 0 | 0 | 115 | |
| 37 | 0.24 | 1.17 | 0.65 | 0.013 | 0.0068 | 0.043 | 0.0057 | 0 | 0 | 0 | 0 | 0 | 79 | |
| 38 | 0.12 | 0.91 | 0.51 | 0.011 | 0.0061 | 0.033 | 0.0063 | 0 | 0 | 0 | 0 | 0 | 88 | |
| 39 | 0.165 | 1.0982 | 0.048 | 0.008 | 0.0048 | 0.047 | 0.0056 | 0 | 0 | 0 | 0 | 0 | 70 | |
| 40 | 0.138 | 0.107 | 1.059 | 0.006 | 0.004 | 0.038 | 0.0045 | 0 | 0 | 0 | 0 | 0 | 103 | |
| 41 | 0.108 | 0.159 | 1.198 | 0.008 | 0.005 | 0.037 | 0.0094 | 0 | 0 | 0 | 0 | 0 | 88 | |
| 42 | 0.126 | 0.271 | 1.015 | 0.009 | 0.003 | 0.034 | 0.0083 | 0 | 0 | 0 | 0 | 0 | 107 | |
| 43 | 0.141 | 0.246 | 0.911 | 0.012 | 0.002 | 0.020 | 0.0066 | 0 | 0 | 0 | 0 | 0 | 81 | |
| 44 | 0.214 | 0.206 | 0.673 | 0.012 | 0.006 | 0.047 | 0.0056 | 0 | 0 | 0 | 0 | 0 | 102 | |
| 45 | 0.11 | 0.135 | 0.927 | 0.012 | 0.004 | 0.022 | 0.0055 | 0 | 0 | 0 | 0 | 0 | 96 | |
| 46 | 0.169 | 0.158 | 1.697 | 0.007 | 0.002 | 0.047 | 0.0101 | 0 | 0 | 0 | 0 | 0 | 100 | |
| 47 | 0.178 | 0.288 | 1.200 | 0.007 | 0.002 | 0.038 | 0.0056 | 0 | 0 | 0 | 0 | 0 | 92 | |
| 48 | 0.182 | 0.12 | 0.816 | 0.009 | 0.003 | 0.048 | 0.0097 | 2.30 | 0 | 0 | 0 | 0 | 91 | |
| 49 | 0.228 | 0.182 | 1.092 | 0.009 | 0.006 | 0.045 | 0.004 | 0 | 0 | 0 | 0 | 0 | 86 | |
| 50 | 0.141 | 0.188 | 1.505 | 0.010 | 0.005 | 0.024 | 0.007 | 0 | 0.150 | 0 | 0 | 0 | 103 | |
| 51 | 0.188 | 0.102 | 1.644 | 0.013 | 0.004 | 0.049 | 0.007 | 0 | 0 | 0.150 | 0 | 0 | 89 | |
| 52 | 0.131 | 0.111 | 1.147 | 0.010 | 0.002 | 0.044 | 0.0066 | 0 | 0 | 0 | 0.700 | 0 | 92 | |
| 53 | 0.225 | 0.252 | 1.086 | 0.013 | 0.005 | 0.049 | 0.0047 | 0 | 0 | 0 | 0.160 | 0 | 109 | |
| 54 | 0.127 | 0.101 | 1.587 | 0.010 | 0.005 | 0.037 | 0.0055 | 0 | 0 | 0 | 0 | 0.0081 | 82 | |
| 55 | 0.149 | 0.092 | 1.161 | 0.007 | 0.005 | 0.031 | 0.005 | 0 | 0 | 0 | 0 | 0.0015 | 88 | |

(continued)

| Multilayer steel sheet no. | Composition of constituents of steel sheet for surface layer (mass%) | | | | | | | | | | | | Thickness of steel sheet for surface layer (mm) | Remarks |
|---|---|---|---|---|---|---|---|---|---|---|---|---|---|---|
| | C | Si | Mn | P | S | sol.Al | N | Ni | Nb | Ti | Mo | B | | |
| 56 | 0.16 | 0.9 | 0.34 | 0.007 | 0.0068 | 0.038 | 0.0056 | 0 | 0 | 0 | 0 | 0 | 78 | |
| 57 | 0.16 | 0.9 | 0.34 | 0.007 | 0.0068 | 0.038 | 0.0056 | 0 | 0 | 0 | 0 | 0 | 78 | |
| 58 | 0.16 | 0.9 | 0.34 | 0.007 | 0.0068 | 0.038 | 0.0056 | 0 | 0 | 0 | 0 | 0 | 78 | |
| 59 | 0.16 | 0.9 | 0.34 | 0.007 | 0.0068 | 0.038 | 0.0056 | 0 | 0 | 0 | 0 | 0 | 78 | |

[Table C-2-1]

| Multilayer steel sheet no. | Manufacturing condition no. | Heat treatment before hot rolling | | Rough rolling | | | Hot rolling | | Cold rolling | Heat treatment at hot stamping | | | | | Plating | Sheet thickness (mm) |
| | | Heating temp. (°C) | Holding time (min) | Rolling temp. (°C) | Rate of reduction of sheet thickness (%) | No. of rolling operations (times) | Finish rolling temp. (°C) | Coiling temp. (°C) | Rolling rate (%) | Heating rate (°C/s) | Heating temp. (°C) | Average cooling rate (°C/s) (more than 400°C) | Average cooling rate (°C/s) (400°C or less) | Tempering temp. (°C) | | |
|---|---|---|---|---|---|---|---|---|---|---|---|---|---|---|---|---|
| 1 | 1 | 1250 | 62 | 1161 | 38 | 3 | 856 | 704 | 52 | 40 | 976 | 85 | 34 | - | None | 1.6 |
| 2 | 2 | 1174 | 87 | 1158 | 32 | 3 | 920 | 716 | 46 | 31 | 945 | 111 | 12 | - | None | 1.4 |
| 3 | 3 | 1125 | 89 | 1110 | 28 | 3 | 856 | 523 | 62 | 43 | 845 | 83 | 21 | - | None | 1.4 |
| 4 | 4 | 1160 | 62 | 1148 | 37 | 3 | 945 | 619 | 62 | 64 | 923 | 108 | 33 | - | None | 1.2 |
| 5 | 5 | 1149 | 114 | 1142 | 29 | 3 | 872 | 577 | 59 | 44 | 965 | 75 | 19 | - | None | 1.6 |
| 6 | 6 | 1131 | 127 | 1121 | 34 | 3 | 888 | 563 | 61 | 60 | 971 | 63 | 32 | - | None | 1.6 |
| 7 | 7 | 1316 | 127 | 1191 | 36 | 3 | 881 | 606 | 60 | 65 | 845 | 74 | 32 | - | None | 1.6 |
| 8 | 8 | 1294 | 125 | 1131 | 46 | 3 | 941 | 548 | 57 | 53 | 910 | 75 | 16 | - | None | 1.4 |
| 9 | 9 | 1317 | 62 | 1150 | 24 | 3 | 867 | 702 | 60 | 30 | 890 | 86 | 13 | - | None | 1.0 |
| 10 | 10 | 1123 | 71 | 1117 | 31 | 3 | 872 | 587 | 45 | 42 | 983 | 65 | 13 | - | None | 1.4 |
| 11 | 11 | 1105 | 147 | 1101 | 31 | 3 | 908 | 615 | 63 | 56 | 851 | 83 | 13 | - | None | 1.2 |
| 12 | 12 | 1239 | 120 | 1187 | 41 | 3 | 912 | 657 | 49 | 61 | 904 | 77 | 13 | - | None | 1.2 |
| 13 | 13 | 1254 | 142 | 1176 | 26 | 3 | 889 | 627 | 51 | 24 | 918 | 70 | 13 | - | None | 1.2 |
| 17 | 17 | 1350 | 121 | 1154 | 44 | 3 | 859 | 638 | 46 | 44 | 894 | 89 | 13 | - | None | 1.4 |
| 18 | 18 | 1179 | 66 | 1174 | 34 | 3 | 894 | 626 | 59 | 28 | 899 | 78 | 13 | - | None | 1.6 |
| 19 | 19 | 1115 | 117 | 1105 | 34 | 3 | 925 | 650 | 60 | 36 | 884 | 85 | 13 | - | None | 1.6 |
| 20 | 20 | 1294 | 119 | 1127 | 46 | 3 | 853 | 580 | 48 | 71 | 866 | 100 | 13 | - | None | 1.6 |
| 21 | 21 | 1301 | 146 | 1140 | 43 | 3 | 865 | 518 | 62 | 47 | 940 | 83 | 13 | - | None | 1.2 |
| 22 | 22 | 1330 | 137 | 1153 | 35 | 3 | 932 | 706 | 55 | 22 | 971 | 85 | 13 | - | None | 1.4 |

| Multilayer steel sheet no. | Manufacturing condition no. | Heat treatment before hot rolling | | Rough rolling | | | Hot rolling | | Cold rolling | Heat treatment at hot stamping | | | | | Plating | Sheet thickness (mm) |
|---|---|---|---|---|---|---|---|---|---|---|---|---|---|---|---|---|
| | | Heating temp. (°C) | Holding time (min) | Rolling temp. (°C) | Rate of reduction of sheet thickness (%) | No. of rolling operations (times) | Finish rolling temp. (°C) | Coiling temp. (°C) | Rolling rate (%) | Heating rate (°C/s) | Heating temp. (°C) | Average cooling rate (°C/s) (more than 400°C) | Average cooling rate (°C/s) (400°C or less) | Tempering temp. (°C) | | |
| 23 | 23 | 1184 | 70 | 1127 | 45 | 3 | 913 | 699 | 46 | 22 | 986 | 93 | 13 | - | None | 1.4 |
| 24 | 24 | 1260 | 94 | 1164 | 47 | 3 | 912 | 637 | 45 | 17 | 847 | 98 | 13 | - | None | 1.2 |
| 27 | 27 | 1105 | 109 | 1101 | 38 | 3 | 899 | 589 | 61 | 15 | 960 | 92 | 13 | - | None | 1.0 |
| 28 | 28 | 1251 | 70 | 1135 | 36 | 3 | 895 | 719 | 50 | 64 | 927 | 118 | 13 | - | None | 1.2 |
| 29 | 29 | 1331 | 129 | 1163 | 35 | 3 | 933 | 739 | 46 | 66 | 908 | 92 | 13 | - | None | 1.0 |
| 30 | 30 | <u>1085</u> | 81 | 1075 | 40 | 3 | 939 | 562 | 63 | 55 | 957 | 108 | 13 | - | None | 1.4 |

EP 3 584 338 A1

[Table C-2-2]

| Multilayer steel sheet no. | Manufacturing condition no. | Heat treatment before hot rolling | | Rough rolling | | | Hot rolling | | Cold rolling | Heat treatment at hot stamping | | | | | Plating | Sheet thickness (mm) |
|---|---|---|---|---|---|---|---|---|---|---|---|---|---|---|---|---|
| | | Heating temp. (°C) | Holding time (min) | Rolling temp. (°C) | Rate of reduction of sheet thickness (%) | No. of rolling operations (times) | Finish rolling temp. (°C) | Coiling temp. (°C) | Rolling rate (%) | Heating rate (°C/s) (Us) | Heating temp. (°C) | Average cooling rate (°C/s) (more than 400°C) | Average cooling rate (°C/s) (400°C or less) | Tempering temp. (°C) | | |
| 31 | 31 | <u>1380</u> | 112 | 1132 | 25 | 3 | 879 | 738 | 62 | 33 | 909 | 88 | 13 | - | None | 1.4 |
| 32 | 32 | 1231 | <u>10</u> | 1192 | 36 | 3 | 928 | 652 | 59 | 76 | 963 | 79 | 13 | - | None | 1.2 |
| 34 | 34 | 1341 | 100 | 1165 | 25 | 3 | 906 | 641 | 60 | 28 | 858 | 116 | 13 | - | None | 1.4 |
| 35 | 35 | 1166 | 131 | 1133 | 38 | 3 | 853 | 660 | 60 | 40 | 902 | 75 | 13 | 310 | None | 1.0 |
| 36 | 36 | 1191 | 130 | 1140 | 40 | 3 | 876 | 636 | 45 | 47 | 900 | 95 | 13 | 420 | Yes | 1.2 |
| 37 | 37 | 1276 | 139 | 1142 | 46 | 3 | 901 | 560 | 60 | 69 | 990 | 79 | 13 | - | Yes | 1.4 |
| 38 | 38 | 1281 | 141 | 1139 | 36 | 3 | 902 | 549 | 60 | 61 | 922 | 66 | 13 | - | None | 1.2 |
| 39 | 39 | 1237 | 71 | 1121 | 27 | 3 | 915 | 633 | 52 | 62 | 852 | 62 | 13 | - | None | 1.7 |
| 40 | 40 | 1216 | 82 | 1125 | 33 | 3 | 863 | 577 | 60 | 54 | 886 | 70 | 13 | - | None | 1.7 |
| 41 | 41 | 1236 | 82 | 1145 | 43 | 3 | 894 | 608 | 64 | 60 | 855 | 75 | 13 | - | None | 1.2 |
| 42 | 42 | 1163 | 85 | 1151 | 31 | 3 | 862 | 561 | 46 | 54 | 930 | 87 | 13 | - | None | 1.4 |
| 43 | 43 | 1240 | 61 | 1121 | 42 | 3 | 862 | 625 | 54 | 26 | 880 | 93 | 13 | - | None | 1.8 |
| 44 | 44 | 1247 | 113 | 1168 | 39 | 3 | 920 | 561 | 55 | 30 | 931 | 84 | 13 | - | None | 1.6 |
| 45 | 45 | 1175 | 104 | 1130 | 31 | 3 | 910 | 648 | 61 | 63 | 858 | 73 | 13 | - | None | 1.7 |
| 46 | 46 | 1172 | 113 | 1167 | 28 | 3 | 876 | 557 | 47 | 24 | 934 | 98 | 13 | - | None | 1.8 |
| 47 | 47 | 1228 | 103 | 1173 | 29 | 3 | 925 | 613 | 58 | 51 | 851 | 70 | 13 | - | None | 1.6 |
| 48 | 48 | 1212 | 65 | 1137 | 27 | 3 | 927 | 604 | 51 | 37 | 853 | 106 | 13 | - | None | 1.7 |
| 49 | 49 | 1214 | 69 | 1106 | 42 | 3 | 859 | 609 | 64 | 45 | 889 | 78 | 13 | - | None | 1.7 |
| 50 | 50 | 1164 | 77 | 1115 | 32 | 3 | 867 | 648 | 59 | 18 | 887 | 105 | 13 | - | None | 1.2 |

(continued)

| Multilayer steel sheet no. | Manufacturing condition no. | Heat treatment before hot rolling | | Rough rolling | | | Hot rolling | | Cold rolling | Heat treatment at hot stamping | | | | | Plating | Sheet thickness (mm) |
|---|---|---|---|---|---|---|---|---|---|---|---|---|---|---|---|---|
| | | Heating temp. (°C) | Holding time (min) | Rolling temp. (°C) | Rate of reduction of sheet thickness (%) | No. of rolling operations (times) | Finish rolling temp. (°C) | Coiling temp. (°C) | Rolling rate (%) | Heating rate (°C/s) ($^{Us}$) | Heating temp. (°C) | Average cooling rate (°C/s) (more than 400°C) | Average cooling rate (°C/s) (400°C or less) | Tempering temp. (°C) | | |
| 51 | 51 | 1152 | 63 | 1144 | 32 | 3 | 891 | 553 | 65 | 67 | 863 | 81 | 13 | - | None | 1.4 |
| 52 | 52 | 1159 | 83 | 1152 | 35 | 3 | 865 | 595 | 50 | 49 | 872 | 50 | 13 | - | None | 1.4 |
| 53 | 53 | 1201 | 83 | 1132 | 31 | 3 | 871 | 615 | 48 | 68 | 864 | 74 | 13 | - | None | 1.4 |
| 54 | 54 | 1232 | 65 | 1117 | 31 | 3 | 917 | 592 | 63 | 45 | 901 | 86 | 13 | - | None | 1.4 |
| 55 | 55 | 1248 | 75 | 1111 | 33 | 3 | 856 | 639 | 49 | 72 | 922 | 80 | 13 | - | None | 1.4 |
| 56 | 56 | 1276 | 86 | <u>1005</u> | 38 | 3 | 879 | 699 | 48 | 60 | 855 | 89 | 13 | - | None | 1.7 |
| 57 | 57 | 1236 | 77 | 1155 | 4 | 2 | 901 | 739 | 45 | 67 | 931 | 67 | 13 | - | None | 1.4 |
| 58 | 58 | 1247 | 91 | 1149 | 44 | 1 | 863 | 636 | 63 | 59 | 851 | 67 | 13 | - | None | 1.7 |
| 59 | 59 | 1228 | 64 | 1132 | 20 | 3 | 862 | 561 | 60 | 28 | 853 | 61 | 13 | - | None | 1.7 |

[Table C-3-1]

| Stamped body no. | Multilayer steel sheet no. | Manufacturing condition no. | Metal structures | | Mechanical properties | | | | | Remarks |
|---|---|---|---|---|---|---|---|---|---|---|
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Tensile strength (MPa) | Uniform elongation (%) | Maximum bending angle (°) | Hydrogen embrittlement resistance | Residual γ area rate(%) | |
| 1C | 1 | 1 | 576 | 32 | 1516 | 6 | 103 | Good | 4.8 | Inv. ex. |
| 2C | 2 | 2 | 738 | 31 | 2083 | 7.7 | 107 | Good | 2.5 | Inv. ex. |
| 3C | 3 | 3 | 639 | 31 | 2027 | 8.3 | 114 | Good | 3.4 | Inv. ex. |
| 4C | 4 | 4 | 831 | 30 | 2256 | 8.2 | 91 | Good | 1.4 | Inv. ex. |
| 5C | 5 | 5 | 402 | 25 | 1426 | 5.4 | 106 | Good | 3.9 | Comp. ex. |
| 6C | 6 | 6 | 554 | 35 | 1628 | 6.4 | 105 | Good | 1.9 | Inv. ex. |
| 7C | 7 | 7 | 567 | 47 | 1594 | 5.9 | 99 | Good | 4.6 | Inv. ex. |
| 8C | 8 | 8 | 592 | 29 | 1845 | 8.5 | 117 | Good | 3.1 | Inv. ex. |
| 9C | 9 | 9 | 823 | 40 | 2344 | 8.1 | 78 | Good | 4.3 | Comp. ex. |
| 10C | 10 | 10 | 694 | 29 | 1895 | 5.3 | 97 | Good | 3.9 | Inv. ex. |
| 11C | 11 | 11 | 664 | 47 | 1931 | 3.8 | 90 | Good | 0.7 | Comp. ex. |
| 12C | 12 | 12 | 727 | 30 | 2041 | 8.8 | 97 | Good | 4.3 | Inv. ex. |
| 13C | 13 | 13 | 622 | 40 | 1996 | 5 | 98 | Good | 5.0 | Inv. ex. |
| 17C | 17 | 17 | 667 | 39 | 1851 | 6.8 | 95 | Good | 2.7 | Inv. ex. |
| 18C | 18 | 18 | 542 | 42 | 1550 | 7 | 94 | Good | 1.3 | Inv. ex. |
| 19C | 19 | 19 | 590 | 38 | 1615 | 5.7 | 118 | Good | 1.4 | Inv. ex. |
| 20C | 20 | 20 | 473 | 42 | 1588 | 5.6 | 115 | Good | 3.0 | Inv. ex. |

(continued)

| Stamped body no. | Multilayer steel sheet no. | Manufacturing condition no. | Metal structures | | Mechanical properties | | | | | Remarks |
|---|---|---|---|---|---|---|---|---|---|---|
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Tensile strength (MPa) | Uniform elongation (%) | Maximum bending angle (°) | Hydrogen embrittlement resistance | Residual $\gamma$ area rate(%) | |
| 21C | 21 | 21 | 759 | 25 | 2004 | 6 | 112 | Good | 4.6 | Inv. ex. |
| 22C | 22 | 22 | 603 | 31 | 1826 | 5.3 | 118 | Good | 4.0 | Inv. ex. |
| 23C | 23 | 23 | 578 | 38 | 1762 | 6.9 | 96 | Good | 2.1 | Inv. ex. |
| 24C | 24 | 24 | 713 | 32 | 2035 | 5.5 | 100 | Good | 3.8 | Inv. ex. |
| 27C | 27 | 27 | 683 | 46 | 2556 | 7.7 | 101 | Good | 4.1 | Inv. ex. |
| 28C | 28 | 28 | 726 | 31 | 2277 | 7.8 | 115 | Good | 2.4 | Inv. ex. |
| 29C | 29 | 29 | 771 | 44 | 2303 | 6.6 | 117 | Good | 4.3 | Inv. ex. |
| 30C | 30 | 30 | 700 | <u>18</u> | 1768 | 8.2 | <u>69</u> | <u>Poor</u> | 4.0 | <u>Comp. ex.</u> |

[Table C-3-2]

| Stamped body no. | Multilayer steel sheet no. | Manufacturing condition no. | Metal structures | | Mechanical properties | | | | | Remarks |
|---|---|---|---|---|---|---|---|---|---|---|
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Tensile strength (MPa) | Uniform elongation (%) | Maximum bending angle (°) | Hydrogen embrittlement resistance | Residual γ area rate(%) | |
| 31C | 31 | 31 | 728 | 92 | 1795 | 7 | 65 | Good | 3.3 | Comp. ex. |
| 32C | 32 | 32 | 592 | 15 | 1940 | 6.8 | 66 | Poor | 3.9 | Comp. ex. |
| 34C | 34 | 34 | 639 | 78 | 1860 | 6 | 109 | Good | 3.8 | Inv. ex. |
| 35C | 35 | 35 | 815 | 51 | 2312 | 6.9 | 96 | Good | 5.0 | Inv. ex. |
| 36C | 36 | 36 | 698 | 70 | 2155 | 6.3 | 118 | Good | 1.6 | Inv. ex. |
| 37C | 37 | 37 | 600 | 52 | 1802 | 8.1 | 96 | Good | 4.0 | Inv. ex. |
| 38C | 38 | 38 | 695 | 56 | 2246 | 6.6 | 107 | Good | 2.7 | Inv. ex. |
| 39C | 39 | 39 | 480 | 45 | 1435 | 9.3 | 110 | Good | 3.2 | Comp. ex. |
| 40C | 40 | 40 | 635 | 37 | 2109 | 8.2 | 94 | Good | 3.7 | Inv. ex. |
| 41C | 41 | 41 | 700 | 54 | 2017 | 5.8 | 110 | Good | 4.1 | Inv. ex. |
| 42C | 42 | 42 | 632 | 66 | 2065 | 7.4 | 93 | Good | 2.9 | Inv. ex. |
| 43C | 43 | 43 | 610 | 49 | 2278 | 6.3 | 102 | Good | 3.0 | Inv. ex. |
| 44C | 44 | 44 | 613 | 57 | 2105 | 9 | 106 | Good | 2.0 | Inv. ex. |
| 45C | 45 | 45 | 653 | 54 | 2167 | 8 | 95 | Good | 4.4 | Inv. ex. |
| 46C | 46 | 46 | 697 | 52 | 2071 | 5.5 | 107 | Good | 3.9 | Inv. ex. |
| 47C | 47 | 47 | 613 | 29 | 2043 | 7 | 95 | Good | 4.2 | Inv. ex. |
| 48C | 48 | 48 | 647 | 44 | 2189 | 6 | 103 | Good | 4.6 | Inv. ex. |

(continued)

| Stamped body no. | Multilayer steel sheet no. | Manufacturing condition no. | Metal structures | | Mechanical properties | | | | | |
|---|---|---|---|---|---|---|---|---|---|---|
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Tensile strength (MPa) | Uniform elongation (%) | Maximum bending angle (°) | Hydrogen embrittlement resistance | Residual γ area rate(%) | Remarks |
| 49C | 49 | 49 | 615 | 60 | 2020 | 6.5 | 110 | Good | 2.1 | Inv. ex. |
| 50C | 50 | 50 | 605 | 62 | 2287 | 9 | 103 | Good | 3.7 | Inv. ex. |
| 51C | 51 | 51 | 611 | 44 | 2165 | 6.4 | 95 | Good | 4.3 | Inv. ex. |
| 52C | 52 | 52 | 622 | 32 | 2141 | 7.7 | 108 | Good | 3.3 | Inv. ex. |
| 53C | 53 | 53 | 604 | 56 | 2275 | 6.6 | 98 | Good | 3.1 | Inv. ex. |
| 54C | 54 | 54 | 610 | 63 | 2010 | 7.2 | 110 | Good | 4.4 | Inv. ex. |
| 55C | 55 | 55 | 631 | 47 | 2109 | 8.8 | 110 | Good | 2.5 | Inv. ex. |
| 56C | 56 | 56 | 642 | <u>12</u> | 2119 | 6.1 | <u>63.2</u> | <u>Poor</u> | 2.8 | <u>Comp. ex.</u> |
| 57C | 57 | 57 | 638 | <u>11</u> | 2105 | 6.6 | <u>59.6</u> | <u>Poor</u> | 2.9 | <u>Comp. ex.</u> |
| 58C | 58 | 58 | 633 | <u>13</u> | 2089 | 6.4 | <u>57.9</u> | <u>Poor</u> | 3.2 | <u>Comp. ex.</u> |
| 59C | 59 | 59 | 629 | 46 | 2076 | 6.9 | 109 | Good | 2.9 | Inv. ex. |

[Manufacturing Example D]

Steel sheets for sheet thickness middle part having the Nos. 1 to 38 chemical compositions shown in Table D-1-1 to Table D-1-2 (in the tables, "Steel Nos. 1 to 38") were ground down at their surfaces to remove the surface oxides. After that, the respective steel sheets for sheet thickness middle part were welded with steel sheets for surface layer having the chemical compositions shown in Table D-1-3 to Table D-1-4 at both surfaces or single surfaces by arc welding to fabricate the Nos. 1 to 60 multilayer steel sheets for hot stamped body. The sheet thickness of the total of the steel sheet for surface layer and the steel sheet for sheet thickness middle part after arc welding was 200 mm to 300 mm and the thickness of the steel sheet for surface layer was 1/3 or so of the thickness of the steel sheet for sheet thickness middle part (in case of single side, 1/4 or so). The No. 38 multilayer steel sheet is steel with the steel sheet for surface layer welded to only one surface. The multilayer steel sheets other than No. 38 have steel sheets for surface layer welded to both surfaces of the steel sheet for sheet thickness middle part. In the Nos. 1 to 60 multilayer steel sheets of Table D-1-1 to Table D-1-3, cases where the steel sheet for sheet thickness middle part does not satisfy the requirement of the composition of the middle part in sheet thickness of the hot stamped body according to the present invention are indicated as "comparative steels" in the remarks column.

The Nos. 1 to 60 multilayer steel sheets were treated under the conditions of the Nos. 1 to 60 manufacturing conditions shown in Table D-2-1 to Table D-2-3 by heat treatment before hot rolling, rough rolling, hot rolling, and cold rolling to obtain steel sheets. Next, the steel sheets were heat treated as shown in Table D-2-1 to Table D-2-3 (in the tables, "heat treatment of hot stamped bodies") for hot stamping to produce the Nos. 1D to 60D hot stamped bodies ("stamped bodies" of Tables D-3-1 to D-3-3). Further, the Nos. 38 and 39 hot stamped bodies were coated on a hot dip coating line at the surfaces of the matrix steel sheets with 120 to 160 $g/m^2$ amounts of aluminum. Further, the items of Table D-2-1 to Table D-2-3 correspond to the items of Table A-2-1 to Table A-2-2. Further, in the tables, the fields with the notations "-" indicate no corresponding treatment performed.

Tables D-3-1 to D-3-3 show the metal structures and characteristics of the Nos. 1D to 60D hot stamped bodies. The constituents obtained by analyzing the positions of 1/2 of the sheet thicknesses of the samples taken from hot stamped bodies (middle parts in sheet thickness) and positions of 20 $\mu$m from the surfaces of the softened layers were equivalent to the constituents of the steel sheets for sheet thickness middle part and the steel sheets for surface layer of the Nos. 1 to 60 multilayer steel sheets of Table D-1-1 to Table D-1-4.

The metal structures of the hot stamped steel sheets were measured by the above-mentioned method. The hardness of the steel sheet for sheet thickness middle part forming the middle part in sheet thickness and the area rate of the total of the crystal grains with a maximum crystal orientation difference inside the regions surrounded by grain boundaries of 15° or more of 1° or less and the crystal grains with a crystal orientation difference of 8° to 15° in the metal structures from the surface of the steel sheet for surface layer forming the softened layer to 1/2 of the thickness of that softened layer were calculated. The calculated values of the area rate are shown in the items "area rate (%) of total of crystal grains with maximum crystal orientation difference inside large angle grain boundaries of 1° or less and crystal grains with maximum crystal orientation difference of 8° to 15°" of Tables D-3-1 to D-3-3.

The hot stamped bodies were subjected to tensile tests. The results are shown in Tables D-3-1 to D-3-3. The tensile tests were performed by fabricating No. 5 test pieces described in JIS Z 2201 and testing them by the method described in JIS Z 2241.

The hot stamped bodies were evaluated for hydrogen embrittlement resistance in the same way as Manufacturing Example A using test pieces cut out from the stamped bodies. That is, test pieces of a sheet thickness of 1.2 mm×width 6 mm×length 68 mm were cut out from the stamped bodies, given strain corresponding to the yield stress in four-point bending tests, then immersed in pH3 hydrochloric acid for 100 hours and evaluated for hydrogen embrittlement resistance by the presence of any cracks. Cases of no fracture were evaluated as passing ("good") and cases of fracture were evaluated as failing ("Poor").

For the purpose of evaluating the impact resistance of the hot stamped body, the body was evaluated based on the VDA standard (VDA238-100) prescribed by the German Association of the Automotive Industry under the same measurement conditions as Manufacturing Example A. In the present invention, the displacement at the time of maximum load obtained in the bending test was converted to angle by the VDA standard to find maximum bending angle and thereby evaluate the impact resistance of the hot stamped body.

The hot stamped bodies were also evaluated for impact resistance from the viewpoint of ductility. Specifically, the hot stamped steel sheets were subjected to tensile tests to find the uniform elongations of the steel sheet to evaluate the impact resistance. The tensile tests were performed by fabricating No. 5 test pieces described in JIS Z 2201 and testing them by the method described in JIS Z 2241. The elongations where the maximum tensile loads were obtained were defined as the uniform elongations.

Deformation concentrates at a local softened part at the time of collision and becomes a cause of cracking, so a small scattering in hardness at the stamped body, that is, securing stable strength, is important in securing impact resistance. Therefore, the impact resistance of a hot stamped body was also evaluated from the viewpoint of the scattering in hardness. A cross-section vertical to the longitudinal direction of a long hot stamped body was taken at any position in that longitudinal direction and measured for hardness at the middle position in sheet thickness at the entire cross-sectional region including the vertical walls. For the measurement, use was made of a Vickers hardness tester. The measurement load was 1 kgf, 10 points were measured, and the measurement interval was 1 mm. The difference between the average cross-sectional hardness and the minimum hardness is shown in Table D-3-1 to Table D-3-3. Cases with no measurement points of below 100Hv from the average value of all measurement points were evaluated as being small in scattering in hardness, that is, excellent in stability of strength and, as a result, were evaluated as excellent in impact resistance and therefore passing, while cases with measurement points below 100Hv were evaluated as failing.

Cases where the tensile strength was 1500 MPa or more and the maximum bending angle (°) was 90(°) or more and further the hydrogen embrittlement resistance was passing were evaluated as excellent in impact resistance and hydrogen embrittlement resistance and indicated as "invention examples". Cases where even one of the above three aspects of performance was not satisfied are indicated as "comparative examples".

In each of the hot stamped bodies of the invention examples, the area rate of the total of crystal grains with a maximum crystal orientation difference inside regions surrounded by grain boundaries of 15° or higher of 1° or less and crystal grains with a crystal orientation difference of 8° to 15° in the metal structures from the surface of the steel sheet for surface layer to 1/2 of the thickness was 20% to less than 50%. Further, in each of the hot stamped bodies of the invention examples, the tensile strength, bendability, and hydrogen embrittlement resistance were excellent.

As opposed to this, the No. 5D hot stamped body was low in carbon content of the steel sheet for sheet thickness middle part, so became insufficient in hardness of the middle part in sheet thickness and became insufficient in tensile strength. The No. 9D hot stamped body was excessive in carbon content of the steel sheet for sheet thickness middle part, so became excessive in hardness of the middle part in sheet thickness as well and could not be given the targeted bendability. Further, the Nos. 10D and 11D hot stamped bodies were sparse in Si content of the steel sheet for sheet thickness middle part, so had an area percent of residual austenite of less than 1% and were insufficient in uniform elongation. Further, the Nos. 12D and 13D hot stamped bodies were insufficient in Mn content, so became insufficient in hardness of the middle part in sheet thickness and were insufficient in tensile strength. The No. 14D and the No. 15D hot stamped bodies were sparse in Si content and Mn content, so had an area percent of residual austenite of less than 1.0% and an insufficient uniform elongation.

The Nos. 33D to 35D hot stamped bodies are comparative examples produced using multilayer steel sheets for hot stamped body which were not subjected to the desirable heat treatment before the hot stamping process. The No. 33D hot stamped body was too low in heat treatment temperature before the hot stamping process, so became insufficient in growth of soft structures and metal structures of intermediate hardnesses in the metal structures of the softened layer from the surface of the softened layer to 1/2 of the thickness and was not able to be given the targeted bendability. Further, the No. 34D hot stamped body was excessively high in heat treatment temperature before the hot stamping process, so became excessive in growth of soft structures and metal structures of intermediate hardnesses, became excessively large in difference of hardnesses between the softened layer and middle part in sheet thickness, and was not able to obtain the effect of reduction of the sharp gradient of hardness in the sheet thickness direction formed at the time of bending deformation. For this reason, the No. 34D hot stamped body could not be given excellent bendability. The No. 35D hot stamped body was too short in heat treatment time before the hot stamping process, so became insufficient in growth of soft structures and metal structures of intermediate hardnesses in the metal structures of the softened layer from the surface of the softened layer to 1/2 of the thickness and was not able to be given the targeted bendability.

The No. 40D hot stamped body was excessive in Si content, so residual austenite was excessively produced exceeding an area percent of 5%. For this reason, the No. 40D hot stamped body was inferior in bendability. The No. 41D hot stamped body was excessive in Mn content, so was inferior in bendability. The No. 42D hot stamped body was poor in content of acid soluble aluminum, so was inferior in bendability. Further, the No. 45D hot stamped body included an excessive content of acid soluble aluminum, so was inferior in bendability.

The No. 57D hot stamped body was low in rolling temperature of the rough rolling. Further, the No. 58D hot stamped body was low in sheet thickness reduction rate of the rough rolling. Further, the No. 59D hot stamped body was low in number of rolling operations under conditions of a time between passes of 3 seconds or more. These hot stamped bodies were not produced under optimal rough rolling conditions, so were insufficient in growth of soft structures and metal structures of intermediate hardnesses, were not able to be eased in strain caused by bending deformation, and were not able to be given the targeted bendability.

The No. 60D hot stamped body is steel sheet with a casting rate controlled to 6 ton/min or more in a continuous casting process of steel sheet for surface layer. It can raise the area rate of the total of crystal grains with a maximum crystal orientation difference inside regions surrounded by grain boundaries of 15° or higher of 1° or less and crystal grains with a crystal orientation difference of 8° to 15° in the metal structures from the surface of the steel sheet for surface layer to 1/2 of the thickness and is excellent in bendability.

[Table D-1-1]

| Multilayer steel sheet no. | Chemical constituents of steel sheet for sheet thickness middle part (mass%) | | | | | | | | | | | | | Remarks |
|---|---|---|---|---|---|---|---|---|---|---|---|---|---|---|
| | Steel no. | C | Si | Mn | P | S | sol.Al | N | Ni | Nb | Ti | Mo | B | |
| 1 | 1 | 0.23 | 1.43 | 1.74 | 0.023 | 0.0029 | 0.061 | 0.0029 | 0 | 0 | 0 | 0 | 0 | |
| 2 | 2 | 0.28 | 1.31 | 1.97 | 0.007 | 0.0024 | 0.039 | 0.0023 | 0 | 0 | 0 | 0 | 0 | |
| 3 | 3 | 0.34 | 1.53 | 1.65 | 0.017 | 0.0009 | 0.025 | 0.0029 | 0 | 0 | 0 | 0 | 0 | |
| 4 | 4 | 0.40 | 1.38 | 2.05 | 0.016 | 0.0014 | 0.030 | 0.0041 | 0 | 0 | 0 | 0 | 0 | |
| 5 | 5 | 0.13 | 1.36 | 1.86 | 0.015 | 0.0018 | 0.038 | 0.0044 | 0 | 0 | 0 | 0 | 0 | Comp. steel |
| 6 | 6 | 0.28 | 1.47 | 1.90 | 0.004 | 0.0024 | 0.043 | 0.0048 | 0 | 0 | 0 | 0 | 0 | |
| 7 | 7 | 0.36 | 1.86 | 1.86 | 0.010 | 0.0029 | 0.046 | 0.0036 | 0 | 0 | 0 | 0 | 0 | |
| 8 | 8 | 0.40 | 1.78 | 2.03 | 0.003 | 0.0003 | 0.060 | 0.0034 | 0 | 0 | 0 | 0 | 0 | |
| 9 | 9 | 0.80 | 1.73 | 1.86 | 0.008 | 0.0032 | 0.043 | 0.0027 | 0 | 0 | 0 | 0 | 0 | Comp. steel |
| 10 | 10 | 0.29 | 0.22 | 1.91 | 0.008 | 0.0024 | 0.043 | 0.0016 | 0 | 0 | 0 | 0 | 0 | Comp. steel |
| 11 | 11 | 0.26 | 0.32 | 1.85 | 0.014 | 0.0006 | 0.049 | 0.0028 | 0 | 0 | 0 | 0 | 0 | Comp. steel |
| 12 | 12 | 0.36 | 1.27 | 0.18 | 0.009 | 0.0031 | 0.062 | 0.0035 | 0 | 0 | 0 | 0 | 0 | Comp. steel |
| 13 | 13 | 0.37 | 1.23 | 0.88 | 0.006 | 0.0017 | 0.052 | 0.0037 | 0 | 0 | 0 | 0 | 0 | Comp. steel |
| 14 | 14 | 0.26 | 0.34 | 0.18 | 0.011 | 0.0010 | 0.038 | 0.0026 | 0 | 0 | 0 | 0 | 0 | Comp. steel |
| 15 | 15 | 0.23 | 0.38 | 0.73 | 0.012 | 0.0006 | 0.064 | 0.0028 | 0 | 0 | 0 | 0 | 0 | Comp. steel |
| 16 | 16 | 0.40 | 1.61 | 1.79 | 0.007 | 0.0034 | 0.042 | 0.0033 | 1.71 | 0 | 0 | 0 | 0 | |
| 17 | 17 | 0.39 | 1.07 | 1.66 | 0.011 | 0.003 | 0.047 | 0.0020 | 0 | 0.082 | 0 | 0 | 0 | |
| 18 | 18 | 0.38 | 1.55 | 1.98 | 0.018 | 0.0035 | 0.058 | 0.0026 | 0 | 0 | 0.032 | 0 | 0 | |
| 19 | 19 | 0.28 | 1.23 | 1.94 | 0.013 | 0.0009 | 0.061 | 0.0028 | 0 | 0 | 0 | 0.04 | 0 | |
| 20 | 20 | 0.28 | 1.4 | 1.81 | 0.015 | 0.0011 | 0.028 | 0.0037 | 0 | 0 | 0 | 0 | 0.0019 | |
| 21 | 1 | 0.23 | 1.43 | 1.74 | 0.023 | 0.0029 | 0.061 | 0.0029 | 0 | 0 | 0 | 0 | 0 | |
| 22 | 1 | 0.23 | 1.43 | 1.74 | 0.023 | 0.0029 | 0.061 | 0.0029 | 0 | 0 | 0 | 0 | 0 | |
| 23 | 1 | 0.23 | 1.43 | 1.74 | 0.023 | 0.0029 | 0.061 | 0.0029 | 0 | 0 | 0 | 0 | 0 | |
| 24 | 2 | 0.28 | 1.31 | 1.97 | 0.007 | 0.0024 | 0.039 | 0.0023 | 0 | 0 | 0 | 0 | 0 | |

(continued)

| Multilayer steel sheet no. | Steel no. | Chemical constituents of steel sheet for sheet thickness middle part (mass%) | | | | | | | | | | | | Remarks |
|---|---|---|---|---|---|---|---|---|---|---|---|---|---|---|
| | | C | Si | Mn | P | S | sol.Al | N | Ni | Nb | Ti | Mo | B | |
| 25 | 2 | 0.28 | 1.31 | 1.97 | 0.007 | 0.0024 | 0.039 | 0.0023 | 0 | 0 | 0 | 0 | 0 | |
| 26 | 2 | 0.28 | 1.31 | 1.97 | 0.007 | 0.0024 | 0.039 | 0.0023 | 0 | 0 | 0 | 0 | 0 | |
| 27 | 3 | 0.34 | 1.53 | 1.65 | 0.017 | 0.0009 | 0.025 | 0.0029 | 0 | 0 | 0 | 0 | 0 | |
| 28 | 3 | 0.34 | 1.53 | 1.65 | 0.017 | 0.0009 | 0.025 | 0.0029 | 0 | 0 | 0 | 0 | 0 | |
| 29 | 3 | 0.34 | 1.53 | 1.65 | 0.017 | 0.0009 | 0.025 | 0.0029 | 0 | 0 | 0 | 0 | 0 | |
| 30 | 4 | 0.40 | 1.38 | 2.05 | 0.016 | 0.0014 | 0.03 | 0.0041 | 0 | 0 | 0 | 0 | 0 | |

[Table D-1-2]

| Multilayer steel sheet no. | Chemical constituents of steel sheet for sheet thickness middle part (mass%) | | | | | | | | | | | | | Remarks |
|---|---|---|---|---|---|---|---|---|---|---|---|---|---|---|
| | Steel no. | C | Si | Mn | P | S | sol.Al | N | Ni | Nb | Ti | Mo | B | |
| 31 | 4 | 0.4 | 1.38 | 2.05 | 0.016 | 0.0014 | 0.030 | 0.0041 | 0 | 0 | 0 | 0 | 0 | |
| 32 | 4 | 0.4 | 1.38 | 2.05 | 0.016 | 0.0014 | 0.030 | 0.0041 | 0 | 0 | 0 | 0 | 0 | |
| 33 | 2 | 0.28 | 1.31 | 1.97 | 0.007 | 0.0024 | 0.039 | 0.0023 | 0 | 0 | 0 | 0 | 0 | |
| 34 | 2 | 0.28 | 1.31 | 1.97 | 0.007 | 0.0024 | 0.039 | 0.0023 | 0 | 0 | 0 | 0 | 0 | |
| 35 | 2 | 0.28 | 1.31 | 1.97 | 0.007 | 0.0024 | 0.039 | 0.0023 | 0 | 0 | 0 | 0 | 0 | |
| 36 | 2 | 0.28 | 1.31 | 1.97 | 0.007 | 0.0024 | 0.039 | 0.0023 | 0 | 0 | 0 | 0 | 0 | |
| 37 | 21 | 0.67 | 1.26 | 1.82 | 0.013 | 0.0033 | 0.027 | 0.0023 | 0 | 0 | 0 | 0 | 0 | |
| 38 | 21 | 0.67 | 1.26 | 1.82 | 0.013 | 0.0033 | 0.027 | 0.0023 | 0 | 0 | 0 | 0 | 0 | |
| 39 | 2 | 0.28 | 1.31 | 1.97 | 0.007 | 0.0024 | 0.039 | 0.0023 | 0 | 0 | 0 | 0 | 0 | |
| 40 | 22 | 0.38 | 4.9 | 1.87 | 0.009 | 0.0022 | 0.058 | 0.003 | 0 | 0 | 0 | 0 | 0 | Comp. steel |
| 41 | 23 | 0.25 | 1.21 | 4.5 | 0.012 | 0.0009 | 0.046 | 0.0023 | 0 | 0 | 0 | 0 | 0 | Comp. steel |
| 42 | 24 | 0.26 | 1.32 | 1.82 | 0.013 | 0.0028 | 0.0001 | 0.0036 | 0 | 0 | 0 | 0 | 0 | Comp. steel |
| 43 | 25 | 0.26 | 1.32 | 1.82 | 0.013 | 0.0028 | 0.002 | 0.0036 | 0 | 0 | 0 | 0 | 0 | |
| 44 | 26 | 0.26 | 1.32 | 1.82 | 0.013 | 0.0028 | 2.500 | 0.0036 | 0 | 0 | 0 | 0 | 0 | |
| 45 | 27 | 0.26 | 1.32 | 1.82 | 0.013 | 0.0028 | 4.100 | 0.0036 | 0 | 0 | 0 | 0 | 0 | Comp. steel |
| 46 | 28 | 0.30 | 1.59 | 1.75 | 0.004 | 0.0012 | 0.052 | 0.003 | 0.04 | 0 | 0 | 0 | 0 | |
| 47 | 29 | 0.30 | 1.59 | 1.75 | 0.004 | 0.0012 | 0.052 | 0.003 | 2.60 | 0 | 0 | 0 | 0 | |
| 48 | 30 | 0.36 | 1.00 | 1.78 | 0.022 | 0.0007 | 0.045 | 0.0032 | 0 | 0.030 | 0 | 0 | 0 | |
| 49 | 31 | 0.36 | 1.00 | 1.78 | 0.022 | 0.0007 | 0.045 | 0.0032 | 0 | 0.120 | 0 | 0 | 0 | |
| 50 | 32 | 0.27 | 1.63 | 1.97 | 0.016 | 0.0012 | 0.051 | 0.0029 | 0 | 0 | 0.030 | 0 | 0 | |
| 51 | 33 | 0.27 | 1.63 | 1.97 | 0.016 | 0.0012 | 0.051 | 0.0029 | 0 | 0 | 0.100 | 0 | 0 | |
| 52 | 34 | 0.29 | 1.27 | 2.01 | 0.013 | 0.0013 | 0.057 | 0.003 | 0 | 0 | 0 | 0.010 | 0 | |
| 53 | 35 | 0.29 | 1.27 | 2.01 | 0.013 | 0.0013 | 0.057 | 0.003 | 0 | 0 | 0 | 0.800 | 0 | |
| 54 | 36 | 0.3 | 1.45 | 1.72 | 0.014 | 0.0016 | 0.043 | 0.0032 | 0 | 0 | 0 | 0 | 0.0009 | |

(continued)

| Multilayer steel sheet no. | Steel no. | Chemical constituents of steel sheet for sheet thickness middle part (mass%) | | | | | | | | | | | | Remarks |
|---|---|---|---|---|---|---|---|---|---|---|---|---|---|---|
| | | C | Si | Mn | P | S | sol.Al | N | Ni | Nb | Ti | Mo | B | |
| 55 | 37 | 0.3 | 1.45 | 1.72 | 0.014 | 0.0016 | 0.043 | 0.0032 | 0 | 0 | 0 | 0 | 0.0060 | |
| 56 | 38 | 0.4 | 1.38 | 2.05 | 0.016 | 0.0014 | 0.03 | 0.0041 | 0 | 0 | 0 | 0 | 0 | |
| 57 | 2 | 0.28 | 1.31 | 1.97 | 0.007 | 0.0024 | 0.039 | 0.0023 | 0 | 0 | 0 | 0 | 0 | |
| 58 | 2 | 0.28 | 1.31 | 1.97 | 0.007 | 0.0024 | 0.039 | 0.0023 | 0 | 0 | 0 | 0 | 0 | |
| 59 | 2 | 0.28 | 1.31 | 1.97 | 0.007 | 0.0024 | 0.039 | 0.0023 | 0 | 0 | 0 | 0 | 0 | |
| 60 | 2 | 0.28 | 1.31 | 1.97 | 0.007 | 0.0024 | 0.039 | 0.0023 | 0 | 0 | 0 | 0 | 0 | |

[Table D-1-3]

| Multilayer steel sheet no. | Chemical constituents of steel sheet for surface layer (mass%) | | | | | | | | | | | | Remarks |
|---|---|---|---|---|---|---|---|---|---|---|---|---|---|
| | C | Si | Mn | P | S | sol.Al | N | Ni | Nb | Ti | Mo | B | |
| 1 | 0.11 | 0.80 | 0.90 | 0.020 | 0.0025 | 0.054 | 0.0027 | 0 | 0 | 0 | 0 | 0 | |
| 2 | 0.13 | 0.73 | 1.08 | 0.005 | 0.0021 | 0.038 | 0.0018 | 0 | 0 | 0 | 0 | 0 | |
| 3 | 0.14 | 0.64 | 0.68 | 0.014 | 0.0008 | 0.020 | 0.0028 | 0 | 0 | 0 | 0 | 0 | |
| 4 | 0.2 | 0.70 | 0.94 | 0.014 | 0.0013 | 0.025 | 0.0039 | 0 | 0 | 0 | 0 | 0 | |
| 5 | 0.05 | 0.65 | 1.00 | 0.012 | 0.0016 | 0.034 | 0.0039 | 0 | 0 | 0 | 0 | 0 | Comp. steel |
| 6 | 0.16 | 0.78 | 1.06 | 0.001 | 0.0023 | 0.036 | 0.0045 | 0 | 0 | 0 | 0 | 0 | |
| 7 | 0.18 | 0.84 | 1.00 | 0.009 | 0.0026 | 0.041 | 0.0032 | 0 | 0 | 0 | 0 | 0 | |
| 8 | 0.18 | 0.75 | 1.12 | 0.001 | 0.0026 | 0.053 | 0.0032 | 0 | 0 | 0 | 0 | 0 | |
| 9 | 0.33 | 0.80 | 0.86 | 0.005 | 0.0031 | 0.036 | 0.0025 | 0 | 0 | 0 | 0 | 0 | Comp. steel |
| 10 | 0.15 | 0.11 | 0.80 | 0.007 | 0.0021 | 0.040 | 0.0015 | 0 | 0 | 0 | 0 | 0 | Comp. steel |
| 11 | 0.11 | 0.13 | 0.80 | 0.011 | 0.0005 | 0.042 | 0.0027 | 0 | 0 | 0 | 0 | 0 | Comp. steel |
| 12 | 0.16 | 0.57 | 0.08 | 0.007 | 0.0027 | 0.055 | 0.0033 | 0 | 0 | 0 | 0 | 0 | Comp. steel |
| 13 | 0.19 | 0.59 | 0.43 | 0.004 | 0.0013 | 0.046 | 0.0035 | 0 | 0 | 0 | 0 | 0 | Comp. steel |
| 14 | 0.11 | 0.18 | 0.08 | 0.008 | 0.0009 | 0.036 | 0.0024 | 0 | 0 | 0 | 0 | 0 | Comp. steel |
| 15 | 0.13 | 0.19 | 0.34 | 0.009 | 0.0003 | 0.061 | 0.0025 | 0 | 0 | 0 | 0 | 0 | Comp. steel |
| 16 | 0.22 | 0.69 | 0.79 | 0.004 | 0.003 | 0.041 | 0.0029 | 1.51 | 0 | 0 | 0 | 0 | |
| 17 | 0.17 | 0.56 | 0.83 | 0.009 | 0.0027 | 0.045 | 0.0018 | 0 | 0.065 | 0 | 0 | 0 | |
| 18 | 0.19 | 0.84 | 0.83 | 0.016 | 0.0034 | 0.052 | 0.0022 | 0 | 0 | 0.028 | 0 | 0 | |
| 19 | 0.13 | 0.60 | 0.93 | 0.010 | 0.0008 | 0.059 | 0.0023 | 0 | 0 | 0 | 0.030 | 0 | |
| 20 | 0.15 | 0.60 | 0.74 | 0.013 | 0.0009 | 0.021 | 0.0033 | 0 | 0 | 0 | 0 | 0.0016 | |
| 21 | 0.16 | 0.66 | 0.77 | 0.021 | 0.0025 | 0.057 | 0.0027 | 0 | 0 | 0 | 0 | 0 | |
| 22 | 0.09 | 0.94 | 0.77 | 0.020 | 0.0026 | 0.054 | 0.0026 | 0 | 0 | 0 | 0 | 0 | |
| 23 | 0.1 | 0.76 | 1.18 | 0.022 | 0.0025 | 0.055 | 0.0025 | 0 | 0 | 0 | 0 | 0 | |
| 24 | 0.22 | 0.64 | 1.08 | 0.004 | 0.0022 | 0.033 | 0.0019 | 0 | 0 | 0 | 0 | 0 | |

(continued)

| Multilayer steel sheet no. | Chemical constituents of steel sheet for surface layer (mass%) | | | | | | | | | | | | Remarks |
|---|---|---|---|---|---|---|---|---|---|---|---|---|---|
| | C | Si | Mn | P | S | sol.Al | N | Ni | Nb | Ti | Mo | B | |
| 25 | 0.16 | 1.02 | 0.95 | 0.004 | 0.0020 | 0.032 | 0.002 | 0 | 0 | 0 | 0 | 0 | |
| 26 | 0.12 | 0.54 | 1.28 | 0.004 | 0.0023 | 0.034 | 0.002 | 0 | 0 | 0 | 0 | 0 | |
| 27 | 0.29 | 0.7 | 0.71 | 0.016 | 0.0008 | 0.018 | 0.0025 | 0 | 0 | 0 | 0 | 0 | |
| 28 | 0.17 | 0.98 | 0.86 | 0.014 | 0.0006 | 0.021 | 0.0025 | 0 | 0 | 0 | 0 | 0 | |
| 29 | 0.19 | 0.8 | 1.17 | 0.015 | 0.0006 | 0.022 | 0.0026 | 0 | 0 | 0 | 0 | 0 | |
| 30 | 0.32 | 0.63 | 1.15 | 0.014 | 0.0012 | 0.026 | 0.0037 | 0 | 0 | 0 | 0 | 0 | |

[Table D-1-4]

| Multilayer steel sheet no. | Chemical constituents of steel sheet for surface layer (mass%) | | | | | | | | | | | | Remarks |
|---|---|---|---|---|---|---|---|---|---|---|---|---|---|
| | C | Si | Mn | P | S | sol.Al | N | Ni | Nb | Ti | Mo | B | |
| 31 | 0.18 | 1.12 | 1.05 | 0.014 | 0.0011 | 0.022 | 0.0039 | 0 | 0 | 0 | 0 | 0 | |
| 32 | 0.17 | 0.63 | 1.39 | 0.013 | 0.001 | 0.024 | 0.0037 | 0 | 0 | 0 | 0 | 0 | |
| 33 | 0.12 | 0.59 | 1.06 | 0.006 | 0.0022 | 0.032 | 0.0018 | 0 | 0 | 0 | 0 | 0 | |
| 34 | 0.15 | 0.52 | 0.97 | 0.006 | 0.0022 | 0.031 | 0.0022 | 0 | 0 | 0 | 0 | 0 | |
| 35 | 0.14 | 0.55 | 0.85 | 0.004 | 0.0023 | 0.037 | 0.002 | 0 | 0 | 0 | 0 | 0 | |
| 36 | 0.13 | 0.59 | 0.99 | 0.006 | 0.0021 | 0.034 | 0.0021 | 0 | 0 | 0 | 0 | 0 | |
| 37 | 0.27 | 0.66 | 0.80 | 0.01 | 0.0031 | 0.02 | 0.0019 | 0 | 0 | 0 | 0 | 0 | |
| 38 | 0.24 | 0.69 | 0.80 | 0.01 | 0.0029 | 0.02 | 0.0022 | 0 | 0 | 0 | 0 | 0 | |
| 39 | 0.12 | 0.72 | 0.85 | 0.005 | 0.0021 | 0.032 | 0.002 | 0 | 0 | 0 | 0 | 0 | |
| 40 | 0.21 | 0.06 | 0.94 | 0.006 | 0.0018 | 0.055 | 0.0025 | 0 | 0 | 0 | 0 | 0 | Comp. steel |
| 41 | 0.14 | 0.64 | 0.11 | 0.011 | 0.0008 | 0.039 | 0.0021 | 0 | 0 | 0 | 0 | 0 | Comp. steel |
| 42 | 0.15 | 0.66 | 0.91 | 0.011 | 0.0026 | 0.039 | 0.0032 | 0 | 0 | 0 | 0 | 0 | Comp. steel |
| 43 | 0.15 | 0.66 | 0.91 | 0.01 | 0.0027 | 0.031 | 0.0033 | 0 | 0 | 0 | 0 | 0 | |
| 44 | 0.15 | 0.66 | 0.91 | 0.011 | 0.0024 | 2.497 | 0.0033 | 0 | 0 | 0 | 0 | 0 | |
| 45 | 0.15 | 0.66 | 0.91 | 0.011 | 0.0026 | 2.78 | 0.0035 | 0 | 0 | 0 | 0 | 0 | Comp. steel |
| 46 | 0.15 | 0.78 | 0.95 | 0.001 | 0.0008 | 0.047 | 0.0028 | 0.03 | 0 | 0 | 0 | 0 | |
| 47 | 0.15 | 0.78 | 0.95 | 0.003 | 0.0009 | 0.048 | 0.0029 | 2.40 | 0 | 0 | 0 | 0 | |
| 48 | 0.17 | 0.55 | 0.91 | 0.019 | 0.0004 | 0.043 | 0.0031 | 0 | 0.020 | 0 | 0 | 0 | |
| 49 | 0.17 | 0.55 | 0.91 | 0.021 | 0.0003 | 0.037 | 0.0027 | 0 | 0.100 | 0 | 0 | 0 | |
| 50 | 0.15 | 0.85 | 1.04 | 0.013 | 0.001 | 0.045 | 0.0028 | 0 | 0 | 0.040 | 0 | 0 | |
| 51 | 0.15 | 0.85 | 1.04 | 0.013 | 0.0009 | 0.043 | 0.0024 | 0 | 0 | 0.090 | 0 | 0 | |
| 52 | 0.15 | 0.74 | 1.13 | 0.011 | 0.0011 | 0.05 | 0.0025 | 0 | 0 | 0 | 0.020 | 0 | |
| 53 | 0.15 | 0.74 | 1.13 | 0.011 | 0.001 | 0.053 | 0.0027 | 0 | 0 | 0 | 0.700 | 0 | |
| 54 | 0.17 | 0.78 | 0.81 | 0.012 | 0.0015 | 0.038 | 0.003 | 0 | 0 | 0 | 0 | 0.0080 | |

(continued)

| Multilayer steel sheet no. | Chemical constituents of steel sheet for surface layer (mass%) | | | | | | | | | | | | Remarks |
|---|---|---|---|---|---|---|---|---|---|---|---|---|---|
| | C | Si | Mn | P | S | sol.Al | N | Ni | Nb | Ti | Mo | B | |
| 55 | 0.17 | 0.78 | 0.81 | 0.012 | 0.0015 | 0.04 | 0.0028 | 0 | 0 | 0 | 0 | 0.0050 | |
| 56 | 0.17 | 0.91 | 1.37 | 0.013 | 0.001 | 0.024 | 0.0037 | 0 | 0 | 0 | 0 | 0 | |
| 57 | 0.13 | 0.73 | 1.08 | 0.005 | 0.0021 | 0.038 | 0.0018 | 0 | 0 | 0 | 0 | 0 | |
| 58 | 0.13 | 0.73 | 1.08 | 0.005 | 0.0021 | 0.038 | 0.0018 | 0 | 0 | 0 | 0 | 0 | |
| 59 | 0.13 | 0.73 | 1.08 | 0.005 | 0.0021 | 0.038 | 0.0018 | 0 | 0 | 0 | 0 | 0 | |
| 60 | 0.13 | 0.73 | 1.08 | 0.005 | 0.0021 | 0.038 | 0.0018 | 0 | 0 | 0 | 0 | 0 | |

[Table D-2-1]

| Multilayer steel sheet no. | Manufacturing condition no. | Heat treatment before hot rolling | | Rough rolling | | | Hot rolling | | Cold rolling | Heat treatment at hot stamping | | | | | Plating | Sheet thickness (mm) |
|---|---|---|---|---|---|---|---|---|---|---|---|---|---|---|---|---|
| | | Heating temp. (°C) | Holding time (min) | Rolling temp. (°C) | Rate of reduction of sheet thickness (%) | No. of rolling operations (times) | Finish rolling temp. (°C) | Coiling temp. (°C) | Rolling rate (%) | Heating rate (°C/s) | Heating temp. (°C) | Average cooling rate (°C/s) (more than 400°C) | Average cooling rate (°C/s) (400°C or less) | Tempering temp. (°C) | | |
| 1 | 1 | 1281 | 129 | 1153 | 42 | 3 | 855 | 663 | 47 | 40 | 904 | 88 | 32 | None | None | 1.5 |
| 2 | 2 | 1125 | 108 | 1105 | 27 | 3 | 848 | 669 | 54 | 31 | 900 | 113 | 11 | None | None | 1.3 |
| 3 | 3 | 1120 | 128 | 1110 | 24 | 3 | 830 | 633 | 53 | 44 | 872 | 82 | 26 | None | None | 1.3 |
| 4 | 4 | 1279 | 81 | 1158 | 36 | 3 | 859 | 590 | 49 | 64 | 892 | 104 | 35 | None | None | 1.4 |
| 5 | 5 | 1194 | 114 | 1152 | 27 | 3 | 908 | 683 | 45 | 44 | 895 | 83 | 23 | None | None | 1.5 |
| 6 | 6 | 1269 | 132 | 1143 | 39 | 3 | 907 | 672 | 48 | 65 | 869 | 70 | 33 | None | None | 1.5 |
| 7 | 7 | 1299 | 98 | 1201 | 35 | 3 | 906 | 561 | 53 | 60 | 872 | 74 | 28 | None | None | 1.3 |
| 8 | 8 | 1148 | 87 | 1123 | 43 | 3 | 855 | 627 | 44 | 56 | 850 | 80 | 15 | None | None | 1.6 |
| 9 | 9 | 1125 | 135 | 1115 | 23 | 3 | 892 | 615 | 50 | 29 | 878 | 79 | 14 | None | None | 1.4 |
| 10 | 10 | 1187 | 135 | 1153 | 28 | 3 | 850 | 703 | 45 | 46 | 865 | 68 | 9 | None | None | 1.5 |
| 11 | 11 | 1210 | 144 | 1160 | 36 | 3 | 865 | 565 | 46 | 58 | 898 | 91 | 8 | None | None | 1.5 |
| 12 | 12 | 1225 | 78 | 1194 | 38 | 3 | 879 | 586 | 55 | 66 | 900 | 72 | 12 | None | None | 1.3 |
| 13 | 13 | 1150 | 92 | 1111 | 24 | 3 | 887 | 715 | 48 | 29 | 909 | 80 | 15 | None | None | 1.5 |
| 14 | 14 | 1188 | 95 | 1145 | 40 | 3 | 907 | 654 | 50 | 39 | 868 | 98 | 17 | None | None | 1.4 |
| 15 | 15 | 1305 | 136 | 1164 | 31 | 3 | 892 | 657 | 55 | 31 | 861 | 68 | 10 | None | None | 1.3 |
| 16 | 16 | 1248 | 85 | 1143 | 30 | 3 | 867 | 570 | 55 | 39 | 858 | 87 | 16 | None | None | 1.3 |
| 17 | 17 | 1183 | 81 | 1133 | 49 | 3 | 846 | 566 | 49 | 68 | 906 | 102 | 15 | None | None | 1.4 |
| 18 | 18 | 1277 | 124 | 1133 | 48 | 3 | 868 | 652 | 44 | 50 | 877 | 80 | 12 | None | None | 1.6 |
| 19 | 19 | 1210 | 81 | 1143 | 35 | 3 | 832 | 666 | 53 | 24 | 856 | 87 | 13 | None | None | 1.3 |

(continued)

| Multilayer steel sheet no. | Manufacturing condition no. | Heat treatment before hot rolling | | Rough rolling | | | Hot rolling | | Cold rolling | Heat treatment at hot stamping | | | | | Plating | Sheet thickness (mm) |
|---|---|---|---|---|---|---|---|---|---|---|---|---|---|---|---|---|
| | | Heating temp. (°C) | Holding time (min) | Rolling temp. (°C) | Rate of reduction of sheet thickness (%) | No. of rolling operations (times) | Finish rolling temp. (°C) | Coiling temp. (°C) | Rolling rate (%) | Heating rate (°C/s) | Heating temp. (°C) | Average cooling rate (°C/s) (more than 400°C) | Average cooling rate (°C/s) (400°C or less) | Tempering temp. (°C) | | |
| 20 | 20 | 1195 | 144 | 1124 | 48 | 3 | 851 | 608 | 51 | 27 | 903 | 88 | 12 | None | None | 1.4 |

[Table D-2-2]

| Multilayer steel sheet no. | Manufacturing condition no. | Heat treatment before hot rolling | | Rough rolling | | | Hot rolling | | Cold rolling | Heat treatment at hot stamping | | | | | Plating | Sheet thickness (mm) |
| | | Heating temp. (°C) | Holding time (min) | Rolling temp. (°C) | Rate of reduction of sheet thickness (%) | No. of rolling operations (times) | Finish rolling temp. (°C) | Coiling temp. (°C) | Rolling rate (%) | Heating rate (°C/s) | Heating temp. (°C) | Average cooling rate (°C/s) (more than 400°C) | Average cooling rate (°C/s) (400°C or less) | Tempering temp. (°C) | | |
|---|---|---|---|---|---|---|---|---|---|---|---|---|---|---|---|---|
| 21 | 21 | 1180 | 94 | 1160 | 45 | 3 | 888 | 584 | 45 | 21 | 891 | 107 | 9 | None | None | 1.5 |
| 22 | 22 | 1164 | 140 | 1156 | 34 | 3 | 891 | 690 | 49 | 15 | 901 | 93 | 9 | None | None | 1.4 |
| 23 | 23 | 1189 | 89 | 1143 | 38 | 3 | 883 | 594 | 48 | 64 | 895 | 126 | 11 | None | None | 1.5 |
| 24 | 24 | 1297 | 136 | 1169 | 35 | 3 | 876 | 696 | 46 | 68 | 877 | 101 | 9 | None | None | 1.5 |
| 25 | 25 | 1153 | 149 | 1129 | 35 | 3 | 880 | 575 | 50 | 57 | 885 | 103 | 8 | None | None | 1.4 |
| 26 | 26 | 1163 | 139 | 1123 | 27 | 3 | 863 | 626 | 55 | 37 | 851 | 81 | 16 | None | None | 1.3 |
| 27 | 27 | 1303 | 129 | 1190 | 31 | 3 | 899 | 578 | 51 | 75 | 904 | 87 | 17 | None | None | 1.4 |
| 28 | 28 | 1219 | 147 | 1161 | 22 | 3 | 880 | 641 | 46 | 31 | 866 | 111 | 15 | None | None | 1.5 |
| 29 | 29 | 1216 | 78 | 1127 | 41 | 3 | 838 | 663 | 48 | 38 | 855 | 83 | 11 | None | None | 1.5 |
| 30 | 30 | 1170 | 107 | 1144 | 43 | 3 | 869 | 650 | 48 | 49 | 870 | 86 | 12 | None | None | 1.5 |
| 31 | 31 | 1280 | 130 | 1149 | 48 | 3 | 837 | 585 | 50 | 64 | 889 | 72 | 9 | None | None | 1.4 |
| 32 | 32 | 1237 | 100 | 1133 | 35 | 3 | 893 | 685 | (°C) | 64 | 882 | 70 | 13 | None | None | 1.5 |
| 33 | 33 | 1072 | 125 | 1022 | 24 | 3 | 890 | 720 | 46 | 64 | 859 | 58 | 14 | None | None | 1.5 |
| 34 | 34 | 1368 | 122 | 1131 | 28 | 3 | 878 | 657 | 44 | 51 | 902 | 71 | 10 | None | None | 1.6 |
| 35 | 35 | 1130 | 12 | 1113 | 46 | 3 | 896 | 623 | 50 | 64 | 903 | 84 | 13 | None | None | 1.4 |
| 36 | 36 | 1244 | 131 | 1147 | 29 | 3 | 883 | 710 | 47 | 58 | 896 | 96 | 13 | None | None | 2.8 |
| 37 | 37 | 1121 | 118 | 1102 | 44 | 3 | 861 | 622 | 47 | 21 | 893 | 92 | 13 | 267 | None | 1.5 |
| 38 | 38 | 1165 | 80 | 1110 | 40 | 3 | 903 | 602 | 48 | 32 | 859 | 84 | 11 | 279 | Yes | 1.5 |
| 39 | 39 | 1144 | 137 | 1131 | 34 | 3 | 877 | 644 | 47 | 60 | 858 | 74 | 18 | None | Yes | 1.5 |

| Multilayer steel sheet no. | Manufacturing condition no. | Heat treatment before hot rolling | | Rough rolling | | | Hot rolling | | Cold rolling | Heat treatment at hot stamping | | | | | Plating | Sheet thickness (mm) |
|---|---|---|---|---|---|---|---|---|---|---|---|---|---|---|---|---|
| | | Heating temp. (°C) | Holding time (min) | Rolling temp. (°C) | Rate of reduction of sheet thickness (%) | No. of roll-ing opera-tions (times) | Finish rolling temp. (°C) | Coiling temp. (°C) | Rolling rate (%) | Heating rate (°C) (°C/s) | Heating temp. (°C) | Average cooling rate (°C/s) (more than 400°C) | Average cooling rate (°C/s) (400°C or less) | Tempering temp. (°C) | | |
| 40 | 40 | 1239 | 115 | 1164 | 24 | 3 | 879 | 624 | 53 | 28 | 898 | 88 | 11 | None | None | 1.3 |

[Table D-2-3]

| Multilayer steel sheet no. | Manufacturing condition no. | Heat treatment before hot rolling | | Rough rolling | | | Hot rolling | | Cold rolling | Heat treatment at hot stamping | | | | | Plating/ coating | Sheet thickness (mm) |
|---|---|---|---|---|---|---|---|---|---|---|---|---|---|---|---|---|
| | | Heating temp. (°C) | Holding time (min) | Rolling temp. (°C) | Rate of reduction of sheet thickness (%) | No. of roll-ing opera-tions (times) | Finish rolling temp. (°C) | Coiling temp. (°C) | Rolling rate (%) | Heating rate (°C/s) | Heating temp. (°C) | Average cooling rate (°C/s) (more than 400°C) | Average cooling rate (°C/s) (400°C or less) | Tempering temp. (°C) | | |
| 41 | 41 | 1266 | 123 | 1182 | 31 | 3 | 839 | 578 | 54 | 49 | 876 | 67 | 14 | None | None | 1.3 |
| 42 | 42 | 1280 | 101 | 1128 | 31 | 3 | 858 | 568 | 54 | 33 | 884 | 107 | 10 | None | None | 1.3 |
| 43 | 43 | 1268 | 119 | 1104 | 45 | 3 | 860 | 648 | 54 | 48 | 895 | 79 | 17 | None | None | 1.3 |
| 44 | 44 | 1270 | 109 | 1107 | 32 | 3 | 844 | 592 | 54 | 19 | 865 | 102 | 17 | None | None | 1.3 |
| 45 | 45 | 1251 | 113 | 1145 | 28 | 3 | 883 | 607 | 54 | 63 | 878 | 91 | 12 | None | None | 1.3 |
| 46 | 46 | 1241 | 99 | 1146 | 39 | 3 | 872 | 573 | 55 | 53 | 894 | 49 | 15 | None | None | 1.3 |
| 47 | 47 | 1235 | 96 | 1132 | 34 | 3 | 851 | 615 | 55 | 63 | 870 | 64 | 11 | None | None | 1.3 |
| 48 | 48 | 1272 | 95 | 1110 | 36 | 3 | 871 | 629 | 49 | 49 | 891 | 82 | 14 | None | None | 1.4 |
| 49 | 49 | 1272 | 115 | 1106 | 35 | 3 | 887 | 567 | 49 | 67 | 882 | 75 | 11 | None | None | 1.4 |
| 50 | 50 | 1267 | 99 | 1106 | 36 | 3 | 843 | 631 | 44 | 65 | 893 | 95 | 11 | None | None | 1.6 |
| 51 | 51 | 1257 | 82 | 1145 | 28 | 2 | 845 | 662 | 44 | 69 | 879 | 70 | 17 | None | None | 1.6 |
| 52 | 52 | 1241 | 104 | 1159 | 43 | 3 | 858 | 638 | 53 | 62 | 869 | 69 | 17 | None | None | 1.3 |
| 53 | 53 | 1242 | 127 | 1139 | 23 | 3 | 886 | 645 | 53 | 24 | 868 | 51 | 15 | None | None | 1.3 |
| 54 | 54 | 1244 | 90 | 1172 | 27 | 3 | 863 | 617 | 51 | 46 | 887 | 101 | 9 | None | None | 1.4 |
| 55 | 55 | 1261 | 89 | 1130 | 26 | 3 | 888 | 606 | 51 | 23 | 877 | 83 | 8 | None | None | 1.4 |
| 56 | 56 | 1231 | 99 | 1132 | 35 | 3 | 895 | 681 | 46 | 72 | 889 | 75 | 15 | None | None | 1.5 |
| 57 | 57 | 1276 | 98 | <u>1004</u> | 38 | 3 | 879 | 699 | 48 | 59 | 855 | 83 | 12 | - | None | 1.7 |
| 58 | 58 | 1236 | 88 | 1164 | 7 | 2 | 901 | 739 | 45 | 64 | 931 | 76 | 18 | - | None | 1.4 |
| 59 | 59 | 1247 | 78 | 1148 | 39 | 1 | 863 | 636 | 63 | 58 | 851 | 61 | 8 | - | None | 1.7 |

EP 3 584 338 A1

| Multilayer steel sheet no. | Manufacturing condition no. | Heat treatment before hot rolling | | Rough rolling | | | Hot rolling | | Cold rolling | Heat treatment at hot stamping | | | | | Plating/ coating | Sheet thickness (mm) |
|---|---|---|---|---|---|---|---|---|---|---|---|---|---|---|---|---|
| | | Heating temp. (°C) | Holding time (min) | Rolling temp. (°C) | Rate of reduction of sheet thickness (%) | No. of roll-ing opera-tions (times) | Finish rolling temp. (°C) | Coiling temp. (°C) | Rolling rate (%) | Heating rate (°C/s) | Heating temp. (°C) | Average cooling rate (°C/s) (more than 400°C) | Average cooling rate (°C/s) (400°C or less) | Tempering temp. (°C) | | |
| 60 | 60 | 1228 | 62 | 1133 | 24 | 3 | 862 | 561 | 60 | 26 | 853 | 55 | 14 | - | None | 1.7 |

[Table D-3-1]

| Stamped body no. | Multilayer steel sheet no. | Manufacturing condition no. | Metal structures | | | Mechanical properties | | | | | | Remarks |
|---|---|---|---|---|---|---|---|---|---|---|---|---|
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Residual γ area rate (%) | Tensile strength (MPa) | Uniform elongation (%) | Average cross-sectional hardness-minimum hardness | Maximum bending angle (°) | Hydrogen embrittlement resistance | | |
| 1D | 1 | 1 | 610 | 38 | 3.3 | 1825 | 6.3 | 26 | 103.9 | Good | | Inv. ex. |
| 2D | 2 | 2 | 725 | 29 | 3 | 2169 | 5.7 | 75 | 102.9 | Good | | Inv. ex. |
| 3D | 3 | 3 | 797 | 24 | 4.1 | 2383 | 6.9 | 62 | 101 | Good | | Inv. ex. |
| 4D | 4 | 4 | 798 | 24 | 3.5 | 2509 | 6.9 | 50 | 96.8 | Good | | Inv. ex. |
| 5D | 5 | 5 | <u>476</u> | 48 | 3.5 | <u>1423</u> | 6.5 | 66 | 101.6 | Good | | <u>Comp. ex.</u> |
| 6D | 6 | 6 | 785 | 25 | 3.4 | 2346 | 6.3 | 66 | 101.5 | Good | | Inv. ex. |
| 7D | 7 | 7 | 772 | 26 | 4.6 | 2307 | 6.8 | 31 | 101.8 | Good | | Inv. ex. |
| 8D | 8 | 8 | 788 | 25 | 4.2 | 2356 | 6.7 | 37 | 97.1 | Good | | Inv. ex. |
| 9D | 9 | 9 | <u>1467</u> | 47 | 4.6 | 4386 | 6.9 | 61 | <u>58.1</u> | Good | | <u>Comp. ex.</u> |
| 10D | 10 | 10 | 699 | 31 | 0.4 | 2090 | 0.9 | 41 | 102.5 | Good | | <u>Comp. ex.</u> |

| Stamped body no. | Multilayer steel sheet no. | Manufacturing condition no. | Hardness of middle part in sheet thickness (Hv) | Metal structures | | Mechanical properties | | | | | Remarks |
| | | | | Area rate (%) of total of crystal grains with maximum difference of crystal orientation inside large angle grain boundaries of 1° or less and crystal grains with maximum difference of crystal orientation of 8° to 15° | Residual γ area rate (%) | Tensile strength (MPa) | Uniform elongation (%) | Average cross-sectional hardness-minimum hardness | Maximum bending angle (°) | Hydrogen embrittlement resistance | |
|---|---|---|---|---|---|---|---|---|---|---|---|
| 11D | 11 | 11 | 792 | 24 | 0.5 | 2369 | 1.4 | 33 | 99.2 | Good | Comp. ex. |
| 12D | 12 | 12 | 459 | 49 | 2.9 | 1372 | 5.8 | 177 | 104 | Good | Comp. ex. |
| 13D | 13 | 13 | 476 | 27 | 3.2 | 1489 | 6 | 135 | 101.9 | Good | Comp. ex. |
| 14D | 14 | 14 | 736 | 28 | 0.7 | 2202 | 1.9 | 174 | 104.3 | Good | Comp. ex. |
| 15D | 15 | 15 | 720 | 30 | 0.8 | 2154 | 2.7 | 161 | 103 | Good | Comp. ex. |
| 16D | 16 | 16 | 789 | 25 | 3.9 | 2359 | 5.7 | 34 | 99.9 | Good | Inv. ex. |
| 17D | 17 | 17 | 780 | 25 | 2.5 | 2331 | 5.1 | 53 | 100.7 | Good | Inv. ex. |
| 18D | 18 | 18 | 781 | 24 | 4 | 2389 | 5.6 | 26 | 100.4 | Good | Inv. ex. |

EP 3 584 338 A1

80

| Stamped body no. | Multilayer steel sheet no. | Manufacturing condition no. | Metal structures | | | Mechanical properties | | | | | Remarks |
|---|---|---|---|---|---|---|---|---|---|---|---|
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Residual $\gamma$ area rate (%) | Tensile strength (MPa) | Uniform elongation (%) | Average cross-sectional hardness-minimum hardness | Maximum bending angle (°) | Hydrogen embrittlement resistance | |
| 19D | 19 | 19 | 721 | 30 | 2.9 | 2156 | 5.4 | 25 | 101 | Good | Inv. ex. |
| 20D | 20 | 20 | 716 | 30 | 3.5 | 2141 | 6.8 | 41 | 105 | Good | Inv. ex. |

EP 3 584 338 A1

| Stamped body no. | Multilayer steel sheet no. | Manufacturing condition no. | Metal structures | | Mechanical properties | | | | | | Remarks |
|---|---|---|---|---|---|---|---|---|---|---|---|
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Residual γ area rate (%) | Tensile strength (MPa) | Uniform elongation (%) | Average cross-sectional hardness-minimum hardness | Maximum bending angle (°) | Hydrogen embrittlement resistance | |
| 21D | 21 | 21 | 631 | 35 | 3.6 | 1888 | 6.9 | 61 | 97.3 | Good | Inv. ex. |
| 22D | 22 | 22 | 624 | 27 | 3.4 | 1867 | 6.7 | 52 | 99.4 | Good | Inv. ex. |
| 23D | 23 | 23 | 619 | 35 | 3.6 | 1852 | 6.8 | 36 | 99.1 | Good | Inv. ex. |
| 24D | 24 | 24 | 734 | 31 | 3.2 | 2196 | 6.3 | 71 | 96 | Good | Inv. ex. |
| 25D | 25 | 25 | 732 | 40 | 3.5 | 2190 | 6.9 | 58 | 97.2 | Good | Inv. ex. |
| 26D | 26 | 26 | 731 | 41 | 3.5 | 2187 | 6.9 | 56 | 98.1 | Good | Inv. ex. |
| 27D | 27 | 27 | 784 | 23 | 3.9 | 2344 | 5.6 | 28 | 99.2 | Good | Inv. ex. |
| 28D | 28 | 28 | 788 | 34 | 3.8 | 2356 | 5.7 | 57 | 96.5 | Good | Inv. ex. |
| 29D | 29 | 29 | 780 | 43 | 3.6 | 2332 | 6.9 | 64 | 98.8 | Good | Inv. ex. |
| 30D | 30 | 30 | 781 | 33 | 3.5 | 2510 | 6.7 | 75 | 96 | Good | Inv. ex. |
| 31D | 31 | 31 | 792 | 28 | 3.7 | 2504 | 5.8 | 30 | 97.1 | Good | Inv. ex. |
| 32D | 32 | 32 | 794 | 36 | 3.3 | 2501 | 6.3 | 29 | 96.7 | Good | Inv. ex. |

| Stamped body no. | Multilayer steel sheet no. | Manufacturing condition no. | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Residual γ area rate (%) | Tensile strength (MPa) | Uniform elongation (%) | Average cross-sectional hardness-minimum hardness | Maximum bending angle (°) | Hydrogen embrittlement resistance | Remarks |
|---|---|---|---|---|---|---|---|---|---|---|---|
| | | | | Metal structures | | | Mechanical properties | | | | |
| 33D | 33 | 33 | 733 | 16 | 3.5 | 2193 | 6.8 | 50 | 67.1 | Poor | Comp. ex. |
| 34D | 34 | 34 | 731 | 87 | 3.3 | 2187 | 6.2 | 58 | 64.9 | Good | Comp. ex. |
| 35D | 35 | 35 | 741 | 15 | 3.4 | 2217 | 6.5 | 52 | 65.8 | Poor | Comp. ex. |
| 36D | 36 | 36 | 733 | 29 | 3.1 | 2193 | 5.8 | 72 | 103.9 | Good | Inv. steel |
| 37D | 37 | 37 | 788 | 25 | 3.3 | 2356 | 6.1 | 63 | 99.2 | Good | Inv. steel |
| 38D | 38 | 38 | 799 | 24 | 3.1 | 2389 | 5.9 | 68 | 99.2 | Good | Inv. steel |
| 39D | 39 | 39 | 743 | 28 | 3 | 2223 | 6 | 41 | 103.3 | Good | Inv. steel |
| 40D | 40 | 40 | 772 | 26 | 10.3 | 2307 | 6.8 | 53 | 61.8 | Good | Comp. ex. |

EP 3 584 338 A1

83

[Table D-3-3]

| Stamped body no. | Multilayer steel sheet no. | Manufacturing condition no. | Metal structures | | | Mechanical properties | | | | | Remarks |
|---|---|---|---|---|---|---|---|---|---|---|---|
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Residual γ area rate (%) | Tensile strength (MPa) | Uniform elongation (%) | Average cross-sectional hardness- minimum hardness | Maximum bending angle (°) | Hydrogen embrittlement resistance | |
| 41D | 41 | 41 | 781 | 29 | 3 | 2577 | 5.7 | 33 | 51.9 | Good | Comp. ex. |
| 42D | 42 | 42 | 733 | 31 | 2.7 | 2419 | 5.7 | 53 | 67.1 | Good | Comp. ex. |
| 43D | 43 | 43 | 734 | 34 | 3.2 | 2422 | 5.8 | 56 | 96.1 | Good | Inv. ex. |
| 44D | 44 | 44 | 717 | 28 | 3.3 | 2366 | 5.7 | 55 | 100.6 | Good | Inv. ex. |
| 45D | 45 | 45 | 731 | 34 | 2.9 | 2412 | 5.6 | 51 | 64.3 | Good | Comp. ex. |
| 46D | 46 | 46 | 761 | 24 | 3.5 | 2511 | 5.2 | 71 | 92.3 | Good | Inv. ex. |
| 47D | 47 | 47 | 799 | 26 | 3.9 | 2637 | 5.5 | 36 | 91.7 | Good | Inv. ex. |
| 48D | 48 | 48 | 741 | 23 | 2.5 | 2445 | 4.9 | 28 | 93.1 | Good | Inv. ex. |
| 49D | 49 | 49 | 793 | 29 | 2.6 | 2617 | 5.2 | 48 | 98.1 | Good | Inv. ex. |
| 50D | 50 | 50 | 738 | 22 | 3.1 | 2435 | 5.5 | 29 | 93.1 | Good | Inv. ex. |

| Stamped body no. | Multilayer steel sheet no. | Manufacturing condition no. | Metal structures | | Residual γ area rate (%) | Mechanical properties | | | | | Remarks |
|---|---|---|---|---|---|---|---|---|---|---|---|
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | | Tensile strength (MPa) | Uniform elongation (%) | Average cross-sectional hardness-minimum hardness | Maximum bending angle (°) | Hydrogen embrittlement resistance | |
| 51D | 51 | 51 | 788 | 24 | 3.5 | 2600 | 5.6 | 56 | 94.7 | Good | Inv. ex. |
| 52D | 52 | 52 | 651 | 29 | 2.8 | 2148 | 5.1 | 25 | 92.1 | Good | Inv. ex. |
| 53D | 53 | 53 | 731 | 31 | 2.9 | 2412 | 5.4 | 33 | 94.4 | Good | Inv. ex. |
| 54D | 54 | 54 | 655 | 28 | 3.2 | 2162 | 6.3 | 46 | 93.1 | Good | Inv. ex. |
| 55D | 55 | 55 | 725 | 29 | 3.5 | 2393 | 6.8 | 50 | 96.7 | Good | Inv. ex. |
| 56D | 56 | 56 | 799 | 32 | 3.1 | 2636 | 6.1 | 30 | 95.7 | Good | Inv. ex. |
| 57D | 57 | 57 | 710 | 13 | 2.7 | 2343 | 6.2 | 31 | 60.2 | Poor | Comp. ex. |
| 58D | 58 | 58 | 708 | 10 | 2.9 | 2336 | 6.6 | 33 | 59.1 | Poor | Comp. ex. |
| 59D | 59 | 59 | 701 | 12 | 2.9 | 2313 | 6.4 | 28 | 55.1 | Poor | Comp. ex. |

EP 3 584 338 A1

85

(continued)

| Stamped body no. | Multilayer steel sheet no. | Manufacturing condition no. | Metal structures | | | Mechanical properties | | | | | Remarks |
|---|---|---|---|---|---|---|---|---|---|---|---|
| | | | Hardness of middle part in sheet thickness (Hv) | Area rate (%) of total of crystal grains with maximum difference of crystal orientation inside large angle grain boundaries of 1° or less and crystal grains with maximum difference of crystal orientation of 8° to 15° | Residual $\gamma$ area rate (%) | Tensile strength (MPa) | Uniform elongation (%) | Average cross-sectional hardness-minimum hardness | Maximum bending angle (°) | Hydrogen embrittlement resistance | |
| 60D | 60 | 60 | 698 | 45 | 3.1 | 2303 | 6.9 | 29 | 111 | Good | Inv. ex. |

INDUSTRIAL APPLICABILITY

The hot stamped body of the present invention is excellent in bendability, ductility, impact resistance, and hydrogen embrittlement resistance and is small in scattering in hardness, so can be suitably used for structural members or reinforcing members for automobiles or structures requiring strength.

**Claims**

1. A hot stamped body comprising a middle part in sheet thickness and a softened layer arranged at both sides or one side of the middle part in sheet thickness, wherein
the middle part in sheet thickness comprises, by mass%,
C: 0.20% or more and less than 0.70%,
Si: less than 3.00%,
Mn: 0.20% or more and less than 3.00%,
P: 0.10% or less,
S: 0.10% or less,
sol. Al: 0.0002% or more and 3.0000% or less,
N: 0.01% or less, and
a balance of Fe and unavoidable impurities, and has a hardness of 500Hv or more and 800Hv or less,
in the metal structures from a depth of 20 $\mu$m below the surface of the softened layer to a depth of 1/2 of the thickness of the softened layer, when defining a region surrounded by grain boundaries having a 15° or higher orientation difference in a cross-section parallel to the sheet thickness direction as a "crystal grain", the area rate of the total of crystal grains with a maximum crystal orientation difference inside the crystal grains of 1° or less and crystal grains with a maximum crystal orientation difference inside the crystal grains of 8° or more and 15° or less is 20% or more and less than 50%.

2. The hot stamped body according to claim 1, wherein the Si content is 0.50% or less and the Mn content is 0.20% or more and less than 1.50%.

3. The hot stamped body according to claim 1, wherein the Si content is 0.50% or less and the Mn content is 1.50% or more and less than 3.00%.

4. The hot stamped body according to claim 1, wherein the Si content is more than 0.50% to less than 3.00%, the Mn content is 0.20% or more and less than 1.50%, and the middle part in sheet thickness comprises, by area percent, 1.0% or more and less than 5.0% of residual austenite.

5. The hot stamped body according to claim 1, wherein the Si content is more than 0.50% and less than 3.00%, the Mn content is 1.50% or more and less than 3.0%, and the middle part in sheet thickness comprises, by area percent, 1.0% or more and less than 5.0% of residual austenite.

6. The hot stamped body according to any one of claims 1 to 5, where the middle part in sheet thickness further comprises, by mass%, Ni: 0.01% or more and 3.00% or less.

7. The hot stamped body according to any one of claims 1 to 6, where the middle part in sheet thickness further comprises, by mass%, one or more of Nb: 0.010% or more and 0.150% or less, Ti: 0.010% or more and 0.150% or less, Mo: 0.005% or more and 1.000% or less, and B: 0.0005% or more and 0.0100% or less.

8. The hot stamped body according to any one of claims 1 to 7, where a plated layer is formed on the softened layer.

FIG. 1

Surface Layer

Middle Part in Sheet Thickness

(ii)

(i)

(i)

FIG. 2

Curve 1

Curve 2

Dislocation Density of Surface Layer Softened Part

Elapsed Time After Rough Rolling (after 1 pass)

## INTERNATIONAL SEARCH REPORT

| International application No. |
| --- |
| PCT/JP2018/006087 |

| A. CLASSIFICATION OF SUBJECT MATTER |
| --- |
| Int.Cl. C22C38/00(2006.01)i, B21D22/20(2006.01)i, C22C38/60(2006.01)i, C21D1/18(2006.01)n, C21D9/00(2006.01)n, C21D9/46(2006.01)n |

According to International Patent Classification (IPC) or to both national classification and IPC

| B. FIELDS SEARCHED |
| --- |
| Minimum documentation searched (classification system followed by classification symbols) |
| Int.Cl. C22C38/00–38/60, B21D22/20, C21D1/18, C21D9/00, C21D9/46 |

| Documentation searched other than minimum documentation to the extent that such documents are included in the fields searched |
| --- |
| Published examined utility model applications of Japan    1922–1996 |
| Published unexamined utility model applications of Japan    1971–2018 |
| Registered utility model specifications of Japan    1996–2018 |
| Published registered utility model applications of Japan    1994–2018 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 2015-30890 A (JFE STEEL CORPORATION) 16 February 2015 (Family: none) | 1–8 |
| A | WO 2015/194571 A1 (KOBE STEEL, LTD.) 23 December 2015 & JP 2016-3389 A | 1–8 |

☒ Further documents are listed in the continuation of Box C.     ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 May 2018 (10.05.2018) | 22 May 2018 (22.05.2018) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2018/006087

C (Continuation). DOCUMENTS CONSIDERED TO BE RELEVANT

| Category* | Citation of document, with indication, where appropriate, of the relevant passages | Relevant to claim No. |
|---|---|---|
| A | WO 2014/024831 A1 (NIPPON STEEL & SUMITOMO METAL CORPORATION) 13 February 2014 & US 2015/0225830 A1 & EP 2881484 A1 & CA 2879540 A1 & CN 104520460 A & KR 10-2015-0029731 A & MX 2015001583 A & RU 2015103482 A & TW 201410883 A | 1-8 |
| A | WO 2015/099382 A1 (POSCO) 02 July 2015 & JP 2017-508069 A & US 2016/0312331 A1 & EP 3088552 A1 & KR 10-2015-0075329 A & CN 105849298 A & MX 2016008267 A | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015030890 A
- JP 2006104546 A

- WO 2015097882 A